(19) Europäisches Patentamt
European Patent Office
Office européen des brevets

(11) **EP 3 845 006 B1**

(12) **EUROPÄISCHE PATENTSCHRIFT**

(45) Veröffentlichungstag und Bekanntmachung des Hinweises auf die Patenterteilung:
**04.12.2024 Patentblatt 2024/49**

(21) Anmeldenummer: **19761805.1**

(22) Anmeldetag: **27.08.2019**

(51) Internationale Patentklassifikation (IPC):
**H04B 1/713** (2011.01) **H04B 1/69** (2011.01)
**H04W 72/50** (2023.01) **H04W 52/02** (2009.01)
**H04W 74/0816** (2024.01)

(52) Gemeinsame Patentklassifikation (CPC):
**H04W 52/0206; H04B 1/713; H04W 72/535; H04W 74/0816;** H04B 2001/6908; Y02D 30/70

(86) Internationale Anmeldenummer:
**PCT/EP2019/072798**

(87) Internationale Veröffentlichungsnummer:
**WO 2020/043701 (05.03.2020 Gazette 2020/10)**

(54) **EMPFÄNGER-AKTIVIERUNGSINFORMATION**

RECEIVER ACTIVATION INFORMATION

INFORMATION D'ACTIVATION DE RÉCEPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2018 DE 102018214648**

(43) Veröffentlichungstag der Anmeldung:
**07.07.2021 Patentblatt 2021/27**

(73) Patentinhaber: **Fraunhofer-Gesellschaft zur Förderung der angewandten Forschung e.V.
80686 München (DE)**

(72) Erfinder:
- **KILIAN, Gerd**
  **91058 Erlangen (DE)**
- **BERNHARD, Josef**
  **91058 Erlangen (DE)**
- **ERETH, Stefan**
  **91058 Erlangen (DE)**
- **KOCH, Robert**
  **91058 Erlangen (DE)**
- **WECHSLER, Johannes**
  **91058 Erlangen (DE)**
- **KNEISSL, Jakob**
  **91058 Erlangen (DE)**
- **OBERNOSTERER, Frank**
  **90411 Nürnberg (DE)**
- **MEYER, Raimund**
  **90765 Fürth (DE)**

(74) Vertreter: **Schlenker, Julian et al
Schoppe, Zimmermann, Stöckeler Zinkler, Schenk & Partner mbB Patentanwälte
Radlkoferstraße 2
81373 München (DE)**

(56) Entgegenhaltungen:
EP-A1- 2 914 039        WO-A1-2017/104858
WO-A1-2018/132100    US-A1- 2018 041 957
US-B2- 7 782 804

- PIYARE ET AL: "Ultra Low Power Wake-Up Radios: A Hardware and Networking Survey", IEEE COMMUNICATIONS SURVEYS & TUTORIALS, 1 June 2017 (2017-06-01), XP055876247, DOI: 10.1109/COMST.2017.2728092
- ANONYMOUS: "Short Range Devices; Low Throughput Networks (LTN); Protocols for radio interface A TECHNICAL SPECIFICATION", ETSI_TS_103 _357 V1.1.1, 1 June 2018 (2018-06-01), XP055842351, Retrieved from the Internet <URL:https://www.etsi.org/deliver/etsi_ts/103300_103399/103357/01.01.01_60/ts_103357v010101p.pdf> [retrieved on 20210920]

**Beschreibung**

Ausführungsbeispiele der vorliegenden Erfindung beziehen sich auf einen Endpunkt und eine Basisstation eines Kommunikationssystems, das in einem Frequenzband drahtlos kommuniziert, welches von einer Mehrzahl von Kommunikationssystemen zur Kommunikation genutzt wird. Weitere Ausführungsbeispiele beziehen sich auf Verfahren zum Betrieb eines Endpunkts und einer Basisstation eines solchen Kommunikationssystems. Manche Ausführungsbeispiele beziehen sich auf eine Empfänger-Aktivierungsinformation.

Für den Betrieb von Niedrigenergie-Weitverkehrsnetzwerken (LPWANs) hat sich die Übertragung von Nachrichten in Form des Telegrammaufteilungs-Verfahrens (Telegram Splitting) als besonders vorteilhaft erwiesen. Die Grundzüge dieses Übertragungsprinzips sind beispielhaft in [1], [3], [4] dargestellt. Hierbei wird eine Nachricht (Datenpaket) in eine Vielzahl von Teil-Datenpaketen aufgeteilt und auf unterschiedliche Zeit-/Frequenzressourcen verteilt übertragen. Die Abfolge der Aussendungen der Teil-Datenpakte in Zeit und Frequenz wird als Kanalzugriffsmuster oder Sprungmuster bezeichnet.

Bei Kanalzugriffsverfahren kommt z.B. in LPWAN Netzwerken oftmals ein "konkurrenzbasierter Zugriff" (engl. contention based access) zum Einsatz. Hierbei stehen den Endgeräten keine exklusiv zugewiesenen Ressourcen zu Verfügung, sondern mehrere Endgeräte greifen eigeninitiativ auf ein gemeinsames Angebot an Funkressourcen zu. Dadurch kann es zu Zugriffskonflikten kommen, d.h. zur gleichzeitigen Belegung von Funkressourcen durch zwei oder mehr Teilnehmer. Um die Auswirkung solcher Zugriffskonflikte zu minimieren, steht den Endgeräten ein Vorrat von untereinander unterschiedlichen Kanalzugriffsmustern (Sprungmustern) zur Verfügung. Je mehr Sprungmuster zur Verfügung stehen, desto geringer ist die Wahrscheinlichkeit, dass zwei oder mehr Endgeräte dasselbe Sprungmuster verwenden.

Der Basisstation ist es in der Regel innerhalb eines betrachteten Zeitraums nicht vorab bekannt, ob, wie viele und mit welchen Kanalzugriffsmustern Endgeräte auf den Funkkanal zugreifen. Damit ist eine wichtige Funktion der Basisstation die Detektion von ausgesendeten Datenpaketen. Hierfür muss durch die Basisstation eine Absuche aller belegbaren Funkressourcen auf Datenübertragungen mit allen möglichen Sprungmustern erfolgen, was je nach Umfang des Suchraums einen z. T. erheblichen Aufwand an (Signal-)Verarbeitungsressourcen und damit auch einen entsprechenden Energieeinsatz erfordert. Insbesondere kann gerade in kleineren Netzwerken (z.B. PAN Netzwerken) mit vergleichsweise wenigen Endgeräten häufig der Fall eintreten, dass keines der Endgeräte im Netzwerk eine Datenaussendung in einem gewissen Zeitraum vornimmt. Dennoch muss die Basisstation den o. g. Einsatz an Detektions-Ressourcen und Energie aufwenden, was insbesondere bei nicht netzbetriebenen Basisstationen nachteilig ist (Batterielebensdauer).

Die US 2018/041957 A1 beschreibt ein Verfahren zur Datenübertagung in einem Mobilfunknetz (LTE) insbesondere für Smart-Meetering-Anwendungen. Zur Übertragung von kleinen Datenmengen wird das folgende Verfahren durchgeführt. In einem ersten Schritt wacht die UE auf, um ein Downlink-Synchronisationssignal und basierend auf diesem einen SIB zu empfangen. In einem zweiten Schritt sucht sich die UE eine Ressource aus einem der verfügbaren Ressourcen-Pools zur Übertragung der Daten aus. Sofern von der UE größere Datenmengen übertragen werden sollen, kann eine Aktivierungsnachricht zum Einsatz kommen, welche von der UE zur eNB ausgesendet wird. Ansprechend auf einen Empfang einer Aktivierungs-Antwort-Nachricht der eNB startet die UE die Übertragung der Daten im jeweiligen Ressourcen-Pool.

In [ETSI TS 103 357 V1.1.1 (2018-06); "Short Range Devices; Low Throughput Networks (LTN); Protocols for radio interface A"] wird Niedrigenergie-Weitverkehrsnetzwerk beschrieben, welches das Telegrammaufteilungs-Verfahren nutzt.

Der vorliegenden Erfindung liegt somit die Aufgabe zugrunde, ein Konzept zu schaffen, welches es ermöglicht, den Energieverbrauch einer Basisstation zu reduzieren.

Diese Aufgabe wird durch die unabhängigen Patentansprüche gelöst, welche somit die Erfindung definieren.

Vorteilhafte Weiterbildungen finden sich in den abhängigen Patentansprüchen. Ausführungsbeispiele schaffen einen Endpunkt eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf [z.B. periodisch] aufeinander folgenden Zeitbereichen erfolgt, wobei der Endpunkt ausgebildet ist, um in einem Aktivierungsbereich eines der Zeitbereiche, ein Aktivierungssignal zu senden, wobei das Aktivierungssignal eine Aktivierungsinformation aufweist, die eine nachfolgende Datensignals die Mehrzahl von Sub-Datenpaketen in dem Datenübertragungsbereich entsprechend einer durch ein Sprungmuster angegebenen frequenz- und/oder zeitsprungbasierten Belegung des Frequenzbands zu senden.

Bei Ausführungsbeispielen kann der Endpunkt ausgebildet sein, um das Aktivierungssignal in dem Aktivierungsbereich des Zeitbereichs nur dann auszusenden, wenn für den nachfolgenden Datenübertragungsbereich desselben Zeitbereichs ein Datenpaket zur Übertragung ansteht.

Bei Ausführungsbeispielen kann die Aktivierungsinformation die [z.B. reine] Leistung des Aktivierungssignals sein.

Datenübertragung in einem auf den Aktivierungsbereich folgenden Datenübertragungsbereich des Zeitbereichs ankündigt, wobei der Endpunkt ausgebildet ist, um ein zu übertragenes Datenpaket [z.B. der Bitübertragungsschicht im OSI-Modell] in eine Mehrzahl von Sub-Datenpaketen aufzuteilen, die jeweils kürzer sind als das Datenpaket, und um mittels eines Datensignals die Mehrzahl von Sub-Datenpaketen in dem Datenübertragungsbereich entsprechend einer durch ein Sprungmuster angegebenen frequenz- und/oder zeitsprungbasierten Belegung des Frequenzbands zu senden, wobei ein Auftreten des Zeitbereichs sowie das Auftreten des Aktivierungsbereichs und des Datenübertragungsbereichs innerhalb des Zeitbereichs dem Endpunkt bekannt ist oder durch eine Basisstation des Kommunikationssystems mittels eines Steuersignals signalisiert wird.

Bei Ausführungsbeispielen kann der Endpunkt ausgebildet sein, um das Aktivierungssignal in dem Aktivierungsbereich des Zeitbereichs nur dann auszusenden, wenn für den nachfolgenden Datenübertragungsbereich desselben Zeitbereichs ein Datenpaket zur Übertragung ansteht.

Bei Ausführungsbeispielen kann die Aktivierungsinformation die [z.B. reine] Leistung des Aktivierungssignals sein.

Bei Ausführungsbeispielen kann die Aktivierungsinformation eine Information über das im Datenübertragungsbereich verwendete Sprungmuster aufweisen

Bei Ausführungsbeispielen kann die Aktivierungsinformation aus einem Satz von Sprungmustern, die zur Kommunikation zwischen Teilnehmern des Kommunikationssystems verwendbar sind, das im Datenübertragungsbereich verwendete Sprungmuster anzeigen.

Bei Ausführungsbeispielen kann die Aktivierungsinformation einen Sprungmusterindex aufweisen, wobei der Sprungmusterindex das im Datenübertragungsbereich verwendete Sprungmuster des Satzes von Sprungmustern, denen unterschiedliche Sprungmusterindizes zugeordnet sind, anzeigt.

Bei Ausführungsbeispielen kann die Aktivierungsinformation aus einem Satz von Sprungmustern, die zur Kommunikation zwischen Teilnehmern des Kommunikationssystems verwendbar sind, eine Untermenge von Sprungmustern anzeigen, wobei das im Datenübertragungsbereich verwendete Sprungmuster Teil der angezeigten Untermenge von Sprungmustern ist.

Bei Ausführungsbeispielen kann die Aktivierungsinformation einen Teil eines Sprungmusterindexes aufweisen, wobei der Teil des Sprungmusterindexes aus dem Satz von Sprungmustern, den unterschiedliche Sprungmusterindizes zugeordnet sind, die Untermenge von Sprungmustern anzeigt.

Bei Ausführungsbeispielen können zu einem Aktivierungsbereich auch mehrere [z.B. zeitlich getrennte und/oder zeitlich aufeinanderfolgende] Datenübertragungsbereiche gehören. Die Aktivierungsinformation könnte in diesem Fall z.B. mitteilen, welcher der folgenden Datenübertragungsbereiche genutzt wird.

Bei Ausführungsbeispielen kann das Aktivierungssignal zumindest einen Teil der Aktivierungsinformation in einer Belegung des Aktivierungsbereichs [z.B. einer Belegung von Ressourcen, in die der Aktivierungsbereich z.B. in Frequenzrichtung und/oder Zeitrichtung unterteilt ist] durch das Aktivierungssignal abbilden oder codieren.

Beispielsweise kann der Endpunkt ausgebildet sein, um die Aktivierungsinformation oder zumindest einen Teil der Aktivierungsinformation durch eine Belegung des Aktivierungsbereichs durch das Aktivierungssignal zu übertragen.

Bei Ausführungsbeispielen kann der Endpunkt ausgebildet sein, um das Aktivierungssignal entsprechend eines Sprungmusters in der Zeit und/oder Frequenz verteilt in dem Aktivierungsbereich des Zeitbereichs zu übertragen.

Bei Ausführungsbeispielen kann das Aktivierungssignal zumindest einen Teil der Aktivierungsinformation in dem Sprungmuster, mit dem das Aktivierungssignal übertragen wird, abbilden oder codieren.

Bei Ausführungsbeispielen kann das Aktivierungssignal zumindest einen Teil der Aktivierungsinformation in einem dedizierten oder definierten Frequenzoffset [z.B. relativ zur Mittenfrequenz eines Frequenzkanals], mit dem das Aktivierungssignal beaufschlagt ist, abbilden oder codieren.

Beispielsweise kann der Endpunkt ausgebildet sein, um das Aktivierungssignal mit einem dedizierten oder definierten Frequenzoffset zu beaufschlagen, um die Aktivierungsinformation oder zumindest einen Teil der Aktivierungsinformation in dem Frequenzoffset zu übertragen.

Bei Ausführungsbeispielen kann das Aktivierungssignal zumindest einen Teil der Aktivierungsinformation in einer dedizierten oder definierten Zeitverschiebung [z.B. relativ zu einem definierten Zeitpunkt [z.B. Anfang, Mitte oder Ende] des Zeitschlitzes], mit der das Aktivierungssignal beaufschlagt ist, abbilden oder codieren.

Beispielsweise kann der Endpunkt ausgebildet sein, um das Aktivierungssignal mit einer dedizierten oder definierten Zeitverschiebung zu beaufschlagen, um die Aktivierungsinformation oder zumindest einen Teil der Aktivierungsinformation in der Zeitverschiebung zu übertragen.

Bei Ausführungsbeispielen kann das Aktivierungssignal eine dedizierte Referenzsymbolsequenz aufweisen, die zumindest einen Teil der Aktivierungsinformation abbildet oder codiert.

Bei Ausführungsbeispielen können als Aktivierungsinformation bekannte Symbole [Piloten] übertragen werden.

Bei Ausführungsbeispielen kann der Endpunkt ausgebildet sein, um ein Steuersignal zu empfangen, wobei das Steuersignal eine Information über

- eine zeitliche Länge eines Zeitbereichs oder einen zeitlichen Abstand zwischen zwei aufeinanderfolgenden Zeitbereichen,

- eine zeitliche Länge eines Aktivierungsbereichs oder einen zeitlichen Abstand zwischen zwei aufeinanderfolgenden Zeitbereichen,
- eine Anzahl an Aktivierungsbereichen pro Zeitbereich,
- eine zeitliche Länge eines Datenübertragungsbereichs oder einen zeitlichen Abstand zwischen zwei aufeinanderfolgenden Datenübertragungsbereichen, und/oder
- eine Anzahl an Datenübertragungsbereichen pro Zeitbereich

angibt.

Bei Ausführungsbeispielen kann der Endpunkt ausgebildet sein, um das Aktivierungssignal in Abhängigkeit von Anforderungen des zu übertragenen Datenpakets an eine Latenzzeit in einem Aktivierungsbereich aus einem Satz von Aktivierungsbereichen mit unterschiedlichen Längen und/oder Auftretungshäufigkeiten zu senden.

Bei Ausführungsbeispielen können die Aktivierungsbereiche des Satzes von Aktivierungsbereichen zeitlich ineinander verschachtelt sein.

Bei Ausführungsbeispielen können sich die Aktivierungsbereiche des Satzes von Aktivierungsbereichen zumindest teilweise zeitlich überlappen.

Bei Ausführungsbeispielen kann der Endpunkt ausgebildet sein, um einen für die Übertragung des Aktivierungssignals zu verwendenden Frequenzkanal der Frequenzkanäle des Frequenzbands in Abhängigkeit von einer Übertragungsqualität des [z.B. jeweiligen] Frequenzkanals auszuwählen.

Bei Ausführungsbeispielen kann der Endpunkt ausgebildet sein, um die Übertragungsqualität des [z.B. jeweiligen] Frequenzkanals [z.B. im Downlink] zu schätzen.

Bei Ausführungsbeispielen kann der Endpunkt ausgebildet sein, um ein Steuersignal [z.B. von einer Basisstation des Kommunikationssystems] in einem Steuersignalbereich des Zeitbereichs zu empfangen, wobei der Steuersignalbereich dem Aktivierungsbereich vorangeht, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei der Endpunkt ausgebildet ist, um das Kanalzugriffsmuster basierend auf der Information über das Kanalzugriffsmuster zu ermitteln, wobei das Sprungmuster ein relatives Kanalzugriffsmuster ist, wobei das relative Kanalzugriffsmuster die zu verwendende Belegung der durch das Kanalzugriffsmuster angegebenen verwendbaren frequenz- und/oder zeitsprungbasierten Belegung angibt, wobei der Endpunkt ausgebildet ist, um mittels des Datensignals die Mehrzahl von Sub-Datenpaketen in dem Datenübertragungsbereich in zumindest einer durch das relative Kanalzugriffsmuster angegebenen Teilmenge der durch das Kanalzugriffsmuster angegebenen verwendbaren frequenz- und/oder zeitsprungbasierten Belegung des Frequenzbands zu senden.

Bei Ausführungsbeispielen kann das Steuersignal ein Baken-Signal sein.

Bei Ausführungsbeispielen kann ein erster Teil [z.B. ein oder mehrere erste Sprünge] der durch das Kanalzugriffsmuster angegebenen verwendbaren frequenz- und/oder zeitsprungbasierten Belegung des Frequenzbands in dem Aktivierungsbereich liegen, wobei der Endpunkt ausgebildet sein kann, um das Aktivierungssignal in dem ersten Teil der durch das Kanalzugriffsmuster angegebenen verwendbaren frequenz- und/oder zeitsprungbasierten Belegung des Frequenzbands zu senden.

Weitere Ausführungsbeispiele schaffen eine Basisstation eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf [z.B. periodisch] aufeinander folgenden Zeitbereichen erfolgt, wobei die Basisstation einen Empfänger aufweist, wobei die Basisstation ausgebildet ist, um den Empfänger für einen Aktivierungsbereich eines der Zeitbereiche zu aktivieren [z.B. in einen normalen Betriebsmodus zu versetzten; z.B. einzuschalten], um ein Aktivierungssignal zu empfangen, wobei das Aktivierungssignal eine Aktivierungsinformation aufweist, die eine nachfolgende Datenübertragung in einem auf den Aktivierungsbereich folgenden Datenübertragungsbereich des Zeitbereichs ankündigt, wobei die Basisstation ausgebildet ist, um, sofern in dem Aktivierungsbereich das Aktivierungssignal mit der Aktivierungsinformation empfangen wurde, den Empfänger für den Datenübertragungsbereich zu aktivieren oder aktiviert zu lassen, um in dem Datenübertragungsbereich ein Datensignal zu empfangen, wobei das Datensignal eine Mehrzahl von Sub-Datenpaketen aufweist, die entsprechend einer durch ein Sprungmuster angegebenen verwendbaren frequenz- und/oder zeitsprungbasierten Belegung des Frequenzbands übertragen werden, wobei auf die Mehrzahl von Sub-Datenpaketen ein Datenpaket [z.B. der Bitübertragungsschicht im OSI-Modell] aufgeteilt ist, wobei die Mehrzahl von Sub-Datenpaketen jeweils kürzer sind als das Datenpaket.

Bei Ausführungsbeispielen kann die Basisstation ausgebildet sein, um, sofern in dem Aktivierungsbereich kein Aktivierungssignal mit einer Aktivierungsinformation empfangen wurde, den Empfänger [z.B. mindestens] für den zugehörigen Datenübertragungsbereich zu deaktivieren [z.B. in einen Stromsparmodus zu versetzen; z.B. auszuschalten].

Bei Ausführungsbeispielen kann die Basisstation ausgebildet sein, um den Empfänger nach dem Empfang des Datensignals in dem Datenübertragungsbereich zu deaktivieren [z.B. in einen Stromsparmodus zu versetzen; z.B. auszuschalten].

Bei Ausführungsbeispielen kann die Basisstation batteriebetrieben sein.

Bei Ausführungsbeispielen kann die Aktivierungsinformation eine Information über das im Datenübertragungsbereich verwendete Sprungmuster aufweisen.

Bei Ausführungsbeispielen kann die Aktivierungsinformation aus einem Satz von Sprungmustern, die zur Kommunikation zwischen Teilnehmern des Kommunikationssystems verwendbar sind, das im Datenübertragungsbereich verwendete Sprungmuster anzeigen.

Bei Ausführungsbeispielen kann die Aktivierungsinformation einen Sprungmusterindex aufweisen, wobei der Sprungmusterindex das im Datenübertragungsbereich verwendete Sprungmuster des Satzes von Sprungmustern, denen unterschiedliche Sprungmusterindizes zugeordnet sind, anzeigt.

Bei Ausführungsbeispielen kann die Aktivierungsinformation aus einem Satz von Sprungmustern, die zur Kommunikation zwischen Teilnehmern des Kommunikationssystems verwendbar sind, eine Untermenge von Sprungmustern anzeigen, wobei das im Datenübertragungsbereich verwendete Sprungmuster Teil der angezeigten Untermenge von Sprungmustern ist.

Bei Ausführungsbeispielen kann die Aktivierungsinformation einen Teil eines Sprungmusterindex aufweisen, wobei der Teil des Sprungmusterindexes aus dem Satz von Sprungmustern, denen unterschiedliche Sprungmusterindizes zugeordnet sind, die Untermenge von Sprungmustern anzeigt.

Bei Ausführungsbeispielen kann das Aktivierungssignal zumindest einen Teil der Aktivierungsinformation in einer Belegung des Aktivierungsbereichs [z.B. einer Belegung von Ressourcen, in die der Aktivierungsbereich z.B. in Frequenzrichtung und/oder Zeitrichtung unterteilt ist] durch das Aktivierungssignal abbilden oder codieren.

Bei Ausführungsbeispielen kann die Basisstation ausgebildet sein, um das Aktivierungssignal entsprechend eines Sprungmusters in der Zeit und/oder Frequenz verteilt in dem Aktivierungsbereich des Zeitbereichs zu empfangen.

Bei Ausführungsbeispielen kann das Aktivierungssignal zumindest einen Teil der Aktivierungsinformation in dem Sprungmuster, mit dem das Aktivierungssignal übertragen wird, abbilden oder codieren.

Bei Ausführungsbeispielen kann das Aktivierungssignal zumindest einen Teil der Aktivierungsinformation in einem dedizierten oder definierten Frequenzoffset [z.B. relativ zur Mittenfrequenz eines Frequenzkanals], mit dem das Aktivierungssignal beaufschlagt ist, abbilden oder codieren.

Bei Ausführungsbeispielen kann das Aktivierungssignal zumindest einen Teil der Aktivierungsinformation in einer dedizierten oder definierten Zeitverschiebung [z.B. relativ zu einem definierten Zeitpunkt [z.B. Anfang, Mitte oder Ende] des Zeitschlitzes], mit der das Aktivierungssignal beaufschlagt ist, abbilden oder codieren.

Bei Ausführungsbeispielen kann das Aktivierungssignal eine dedizierte Referenzsymbolsequenz aufweisen, die zumindest einen Teil der Aktivierungsinformation abbildet oder codiert.

Bei Ausführungsbeispielen kann die Basisstation ausgebildet sein, um ein Steuersignal [z.B. Baken-Signal] zu senden, wobei das Steuersignal eine Information über

- eine zeitliche Länge eines Zeitbereichs oder einen zeitlichen Abstand zwischen zwei aufeinanderfolgenden Zeitbereichen,
- eine zeitliche Länge eines Aktivierungsbereichs oder einen zeitlichen Abstand zwischen zwei aufeinanderfolgenden Zeitbereichen,
- eine Anzahl an Aktivierungsbereichen pro Zeitbereich,
- eine zeitliche Länge eines Datenübertragungsbereichs oder einen zeitlichen Abstand zwischen zwei aufeinanderfolgenden Datenübertragungsbereichen, und/oder
- eine Anzahl an Datenübertragungsbereichen pro Zeitbereich angibt.

Bei Ausführungsbeispielen kann die Basisstation ausgebildet sein, um

- die zeitliche Länge des Zeitbereichs oder den zeitlichen Abstand zwischen zwei aufeinanderfolgenden Zeitbereichen,
- die zeitliche Länge des Aktivierungsbereichs oder den zeitlichen Abstand zwischen zwei aufeinanderfolgenden Zeitbereichen,
- die Anzahl an Aktivierungsbereichen pro Zeitbereich,
- die zeitliche Länge des Datenübertragungsbereichs oder den zeitlichen Abstand zwischen zwei aufeinanderfolgenden Datenübertragungsbereichen, und/oder
- die Anzahl an Datenübertragungsbereichen pro Zeitbereich

dynamisch anzupassen.

Bei Ausführungsbeispielen kann die Basisstation ausgebildet sein, um ein Steuersignal [z.B. Baken-Signal] zu senden, wobei das Steuersignal eine Information über einen Satz von Aktivierungsbereichen aufweist, wobei Aktivierungsbereiche des Satzes von Aktivierungsbereichen unterschiedliche Längen und/oder Auftretungshäufigkeiten aufweisen.

Bei Ausführungsbeispielen können die Aktivierungsbereiche des Satzes von Aktivierungsbereichen zeitlich ineinander verschachtelt sein.

Bei Ausführungsbeispielen können sich die Aktivierungsbereiche des Satzes von Aktivierungsbereichen zumindest teilweise zeitlich überlappen.

Bei Ausführungsbeispielen kann die Basisstation ausgebildet sein, um ein Steuersignal in einem Steuersignalbereich des Zeitbereichs zu senden, wobei der Steuersignalbereich dem Aktivierungsbereich vorangeht, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei das Sprungmuster ein relatives Kanalzugriffsmuster ist, wobei das relative Kanalzugriffsmuster die zu verwendende Belegung der durch das Kanalzugriffsmuster angegebenen verwendbaren frequenz- und/oder zeitsprungbasierten Belegung angibt, wobei die Basisstation ausgebildet ist, um das Datensignal zu empfangen, wobei das Datensignal die Mehrzahl von Sub-Datenpaketen aufweist, die in zumindest einer durch das relative Kanalzugriffsmuster angegebenen Teilmenge der durch das Kanalzugriffsmuster angegebenen verwendbaren frequenz- und/oder zeitsprungbasierten Belegung des Frequenzbands übertragen werden.

Bei Ausführungsbeispielen kann das Steuersignal ein Baken-Signal sein.

Bei Ausführungsbeispielen kann ein erster Teil [z.B. ein oder mehrere erste Sprünge] der durch das Kanalzugriffsmuster angegebenen verwendbaren frequenz- und/oder zeitsprungbasierten Belegung des Frequenzbands in dem Aktivierungsbereich liegen, wobei die Basisstation ausgebildet sein kann, um das Aktivierungssignal in dem ersten Teil der durch das Kanalzugriffsmuster angegebenen verwendbaren frequenz- und/oder zeitsprungbasierten Belegung des Frequenzbands zu empfangen.

Weitere Ausführungsbeispiele schaffen ein System mit zumindest einem Endpunkt gem. einem der oben beschriebenen Ausführungsbeispiele und einer Basisstation gemäß einem der oben beschriebenen Ausführungsbeispiele.

Weitere Ausführungsbeispiele schaffen ein Verfahren zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf [z. B. periodisch] aufeinander folgenden Zeitbereichen erfolgt. Das Verfahren umfasst einen Schritt des Sendens eines Aktivierungssignals in einem Aktivierungsbereich eines der Zeitbereiche, wobei das Aktivierungssignal eine Aktivierungsinformation aufweist, die eine nachfolgende Datenübertragung in einem auf den Aktivierungsbereich folgenden Datenübertragungsbereich des Zeitbereichs ankündigt. Ferner umfasst das Verfahren einen Schritt des Sendens eines Datensignals in dem Datenübertragungsbereich des Zeitbereichs, wobei das Datensignal eine Mehrzahl von Sub-Datenpaketen aufweist, die entsprechend einer durch ein Sprungmuster angegebenen verwendbaren frequenz- und/oder zeitsprungbasierten Belegung des Frequenzbands übertragen werden, wobei auf die Mehrzahl von Sub-Datenpaketen ein Datenpaket [z.B. der Bitübertragungsschicht im OSI-Modell] aufgeteilt ist, wobei die Mehrzahl von Sub-Datenpaketen jeweils kürzer sind als das Datenpaket.

Weitere Ausführungsbeispiele schaffen ein Verfahren zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf [z. B. periodisch] aufeinander folgenden Zeitbereichen erfolgt. Das Verfahren umfasst einen Schritt des Aktivierens eines Empfängers der Basisstation für einen Aktivierungsbereich eines der Zeitbereiche, um ein Aktivierungssignal zu empfangen, wobei das Aktivierungssignal eine Aktivierungsinformation aufweist, die eine nachfolgende Datenübertragung in einem auf den Aktivierungsbereich folgenden Datenübertragungsbereich des Zeitfensters ankündigt. Ferner umfasst das Verfahren einen Schritt des Aktivierens oder aktiviert Lassens des Empfängers der Basisstation sofern in dem Aktivierungsbereich das Aktivierungssignal mit der Aktivierungsinformation empfangen wurde, um in dem Datenübertragungsbereich ein Datensignal zu empfangen, wobei das Datensignal eine Mehrzahl von Sub-Datenpaketen aufweist, die entsprechend einer durch ein Sprungmuster angegebenen verwendbaren frequenz- und/oder zeitsprungbasierten Belegung des Frequenzbands übertragen werden, wobei auf die Mehrzahl von Sub-Datenpaketen ein Datenpaket [z.B. der Bitübertragungsschicht im OSI-Modell] aufgeteilt ist, wobei die Mehrzahl von Sub-Datenpaketen jeweils kürzer sind als das Datenpaket.

Weitere Ausführungsbeispiele schaffen einen Endpunkt eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf [z.B. periodisch] aufeinander folgenden Zeitbereichen erfolgt, wobei der Endpunkt ausgebildet ist, um in einem Steuersignalbereich eines der Zeitbereiche ein Steuersignal [z.B. von einer Basisstation des Kommunikationssystems] zu empfangen, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei der Endpunkt ausgebildet ist, um das Kanalzugriffsmuster basierend auf der Information über das Kanalzugriffsmuster zu ermitteln, wobei der Endpunkt ausgebildet ist, um in einem auf den Steuersignalbereich folgenden Aktivierungsbereich des Zeitbereichs, ein Aktivierungssignal zu senden, wobei das Aktivierungssignal eine Aktivierungsinformation aufweist, die eine nachfolgende Datenübertragung in einem auf den Aktivierungsbereich folgenden Datenübertragungsbereich des Zeitbereichs ankündigt, wobei der Endpunkt ausgebildet ist, um ein zu übertragenes Datenpaket [z.B. der Bitübertragungsschicht im OSI-Modell] in eine Mehrzahl von Sub-Datenpaketen aufzuteilen, die jeweils kürzer sind als das Datenpaket, und um mittels eines Datensignals die Mehrzahl von Sub-Datenpaketen in dem Datenübertragungsbereich in zumindest einer Teilmenge der durch das Kanalzugriffsmuster angegebenen verwendbaren frequenz- und/oder zeitsprungbasierten Belegung des Frequenzbands zu senden.

Bei Ausführungsbeispielen kann das Steuersignal ein Baken-Signal ist.

Bei Ausführungsbeispielen kann ein erster Teil [z.B. ein oder mehrere erste Sprünge] der durch das Kanalzugriffsmuster angegebenen verwendbaren frequenz- und/oder zeitsprungbasierten Belegung des Frequenzbands in dem Aktivierungsbereich liegen, wobei der Endpunkt ausgebildet sein kann, um das Aktivierungssignal in dem ersten Teil der durch das Kanalzugriffsmuster angegebenen verwendbaren frequenz- und/oder zeitsprungbasierten Belegung des Frequenzbands zu senden.

Weitere Ausführungsbeispiele schaffen eine Basisstation eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf [z.B. periodisch] aufeinander folgenden Zeitbereichen erfolgt, wobei die Basisstation ausgebildet ist, um in einem Steuersignalbereich eines der Zeitbereiche ein Steuersignal zu senden, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei die Basisstation ausgebildet ist, um den Empfänger für einen auf den Steuersignalbereich folgenden Aktivierungsbereich des Zeitbereichs zu aktivieren [z.B. in einen normalen Betriebsmodus zu versetzten; z.B. einzuschalten], um ein Aktivierungssignal [z.B. von einem Endpunkt des Kommunikationssystems] zu empfangen, wobei das Aktivierungssignal eine Aktivierungsinformation aufweist, die eine nachfolgende Datenübertragung in einem auf den Aktivierungsbereich folgenden Datenübertragungsbereich des Zeitbereichsfensters ankündigt, wobei die Basisstation ausgebildet ist, um, sofern in dem Aktivierungsbereich das Aktivierungssignal mit der Aktivierungsinformation empfangen wurde, den Empfänger für den Datenübertragungsbereich zu aktivieren oder aktiviert zu lassen, um in dem Datenübertragungsbereich ein Datensignal zu empfangen, wobei das Datensignal eine Mehrzahl von Sub-Datenpaketen aufweist, die in zumindest einer Teilmenge der durch das Kanalzugriffsmuster angegebenen verwendbaren frequenz- und/oder zeitsprungbasierten Belegung des Frequenzbands übertragen werden, wobei auf die Mehrzahl von Sub-Datenpaketen ein Datenpaket [z.B. der Bitübertragungsschicht im OSI-Modell] aufgeteilt ist, wobei die Mehrzahl von Sub-Datenpaketen jeweils kürzer sind als das Datenpaket.

Bei Ausführungsbeispielen kann das Steuersignal ein Baken-Signal sein.

Bei Ausführungsbeispielen kann ein erster Teil [z.B. ein oder mehrere erste Sprünge] der durch das Kanalzugriffsmuster angegebenen verwendbaren frequenz- und/oder zeitsprungbasierten Belegung des Frequenzbands in dem Aktivierungsbereich liegen, wobei die Basisstation ausgebildet sein kann, um das Aktivierungssignal in dem ersten Teil der durch das Kanalzugriffsmuster angegebenen verwendbaren frequenz- und/oder zeitsprungbasierten Belegung des Frequenzbands zu empfangen.

Weitere Ausführungsbeispiele schaffen ein Verfahren zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf [z. B. periodisch] aufeinander folgenden Zeitbereichen erfolgt. Das Verfahren umfasst einen Schritt des Empfangens eines Steuersignals in einem Steuersignalbereich eines der Zeitbereiche, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt. Das Verfahren umfasst ferner einen Schritt des Ermittelns des Kanalzugriffsmusters basierend auf der Information über das Kanalzugriffsmuster. Das Verfahren umfasst ferner einen Schritt des Sendens eines Aktivierungssignals in einem auf den Steuersignalbereich folgenden Aktivierungsbereich des Zeitbereichs, wobei das Aktivierungssignal eine Aktivierungsinformation aufweist, die eine nachfolgende Datenübertragung in einem auf den Aktivierungsbereich folgenden Datenübertragungsbereich des Zeitbereichs ankündigt. Das Verfahren umfasst ferner einen Schritt des Sendens eines Datensignals in dem Datenübertragungsbereich, wobei das Datensignal eine Mehrzahl von Sub-Datenpaketen aufweist, die in zumindest einer Teilmenge der durch das Kanalzugriffsmuster angegebenen verwendbaren frequenz- und/oder zeitsprungbasierten Belegung des Frequenzbands übertragen werden, wobei auf die Mehrzahl von Sub-Datenpaketen ein Datenpaket [z.B. der Bitübertragungsschicht im OSI-Modell] aufgeteilt ist, wobei die Mehrzahl von Sub-Datenpaketen jeweils kürzer sind als das Datenpaket, wobei ein Auftreten des Zeitbereichs sowie das Auftreten des Aktivierungsbereichs und des Datenübertragungsbereichs innerhalb des Zeitbereichs dem Endpunkt bekannt ist oder durch eine Basisstation des Kommunikationssystems mittels eines Steuersignals signalisiert wird.

Weitere Ausführungsbeispiele schaffen ein Verfahren zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf [z. B. periodisch] aufeinander folgenden Zeitbereichen erfolgt. Das Verfahren umfasst einen Schritt des Sendens eines Steuersignals in einem Steuersignalbereich eines der Zeitbereiche, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt. Das Verfahren umfasst ferner einen Schritt des Aktivierens des Empfänger für einen auf den Steuersignalbereich folgenden Aktivierungsbereich des Zeitbereichs [z.B. in einen normalen Betriebsmodus zu versetzen; z.B. einzuschalten], um ein Aktivierungssignal [z.B. von einem Endpunkt des Kommunikationssystems] zu empfangen, wobei das Aktivierungssignal eine Aktivierungsinformation aufweist, die eine nachfolgende Datenübertragung in einem auf den Aktivierungsbereich folgenden Datenübertragungsbereich des Zeitbereichsfensters ankündigt. Das Verfahren umfasst ferner einen Schritt des Aktivieren oder aktiviert Lassen des Empfängers für den Datenübertragungsbereich sofern in dem Aktivierungsbereich das Aktivierungssignal mit der Aktivierungsinformation empfangen wurde, und Empfangen eines Datensignals in dem Datenübertragungsbereich, wobei das Datensignal eine Mehrzahl von Sub-Datenpaketen aufweist, die in zumindest einer Teilmenge der durch das Kanalzugriffsmuster angegebenen verwendbaren frequenz- und/oder zeitsprungbasierten Belegung des Frequenzbands übertragen werden, wobei auf die Mehrzahl von Sub-Datenpaketen ein Datenpaket [z.B. der Bitübertragungsschicht im OSI-Modell] aufgeteilt ist, wobei die Mehrzahl von Sub-Datenpaketen jeweils kürzer sind als das Datenpaket.

Ausführungsbeispiele der vorliegenden Erfindung finden Anwendung in Systemen zur Funkübertragung von Daten von Endgeräten zu einer Basisstation oder von einer/mehrerer Basisstationen zu Endgeräten. Beispielsweise kann es sich bei einem System dabei um ein persönliches Netzwerk (engl. Personal Area Network, PAN) oder ein Niedrigenergie-Weitverkehrsnetzwerk (engl. Low Power Wide Area Network, LPWAN) handeln, wobei die Endgeräte z.B. batteriebetriebene Sensoren (Sensorknoten) sein können.

Ausführungsbeispiele der vorliegenden Erfindung zielen auf Anwendungsfälle ab, in welchen eine Nachricht (Datenpaket) in mehreren Teil-Datenpaketen mittels des sogenannten Telegrammaufteilungs-Verfahrens (engl. Telegram-Splitting-Multiple-Access, TSMA) übertragen wird. Besonders vorteilhaft ist die Anwendung für den Fall, dass die Basisstation batteriebetrieben ist, sodass der Betrieb des Basisstationsempfängers unter dem Aspekt des Energieverbrauchs nur bei tatsächlichem Bedarf erfolgt.

Ausführungsbeispiele der vorliegenden Erfindung ermöglichen die Einsparung von Energie auf Seiten der Basisstation. Insbesondere für den Fall, dass bei vergleichsweise kleinen Netzwerken (z.B. PAN) häufig keines der Endgeräte (oder Endpunkte) sendet:

- Basisstations-Empfänger kann deaktiviert werden,
- Detektionsvorgang muss nicht erfolgen.

Falls mit der Aktivierungsinformation zusätzlich auch Information über das zur Datenübertragung verwendete Kanalzugriffsmuster (Sprungmuster) übertragen wird, kann der Suchraum bei der Detektion signifikant eingegrenzt werden, wodurch der Detektionsvorgang effizienter wird.

Ausführungsbeispiele der vorliegenden Erfindung werden bezugnehmend auf die beiliegenden Figuren näher beschrieben. Es zeigen:

Fig. 1      ein schematisches Blockschaltbild eines Kommunikationssystems, das in einem Frequenzband drahtlos kommuniziert, welches von einer Mehrzahl von Kommunikationssystemen zur Kommunikation genutzt wird, gemäß einem Ausführungsbeispiel der vorliegenden Erfindung,

Fig. 2      in einem Diagramm eine Belegung des Übertragungskanals bei der Übertragung einer Mehrzahl von Sub-Datenpaketen 166 entsprechend einem Zeit- und Frequenzsprungmuster,

Fig. 3      in einem Diagramm eine schematische Ansicht eines Zeitbereichs einer Abfolge von Zeitbereichen, basierend auf denen das Kommunikationssystem auf die Funkressourcen zugreift, wobei der Zeitbereich einen Aktivierungsbereich und einen Datenübertragungsbereich aufweist, gemäß einem Ausführungsbeispiel der vorliegenden Erfindung,

Fig. 4      in einem Diagramm eine durch die Übertragung der Aktivierungsinformation hervorgerufene Belegung der Ressourcen des Aktivierungsbereichs sowie eine durch das Sprungmuster definierte frequenz- und zeitsprungbasierte Belegung der Ressourcen des Datenübertragungsbereichs, gemäß einem Ausführungsbeispiel der vorliegenden Erfindung,

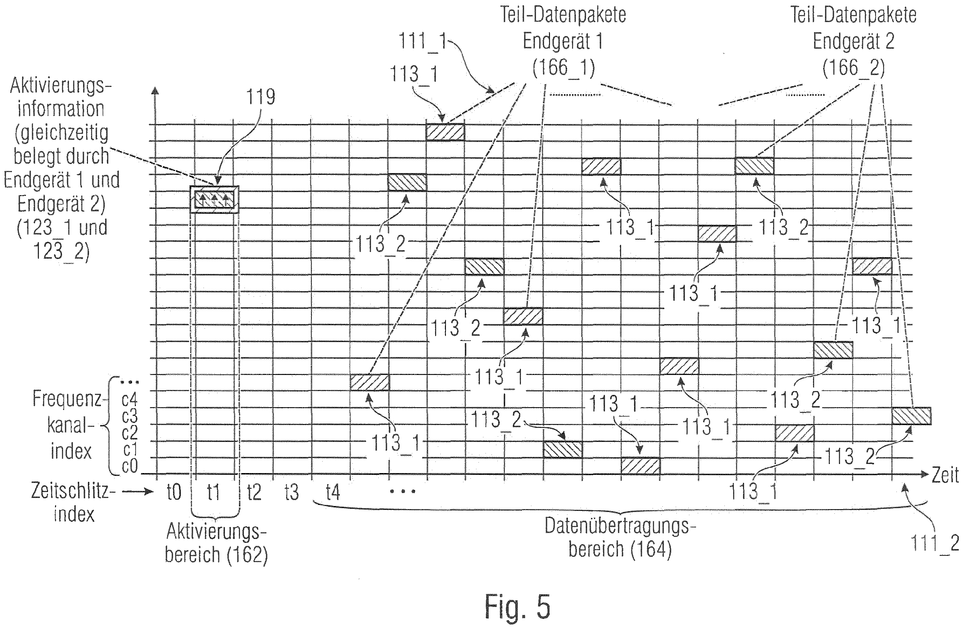

Fig. 5     in einem Diagramm eine Übertragung von zwei Aktivierungsinformationen eines ersten Endpunkts und eines zweiten Endpunkts in derselben Ressource des Aktivierungsbereichs sowie eine durch ein erstes Sprungmuster definierte frequenz- und zeitsprungbasierte Belegung der Ressourcen des Datenübertragungsbereichs zur Übertragung der Sub-Datenpakete des ersten Endpunkts und eine durch ein zweites Sprungmuster definierte frequenz- und zeitsprungbasierte Belegung der Ressourcen des Datenübertragungsbereichs zur Übertragung der Sub-Datenpakete des zweiten Endpunkts, gemäß einem Ausführungsbeispiel der vorliegenden Erfindung,

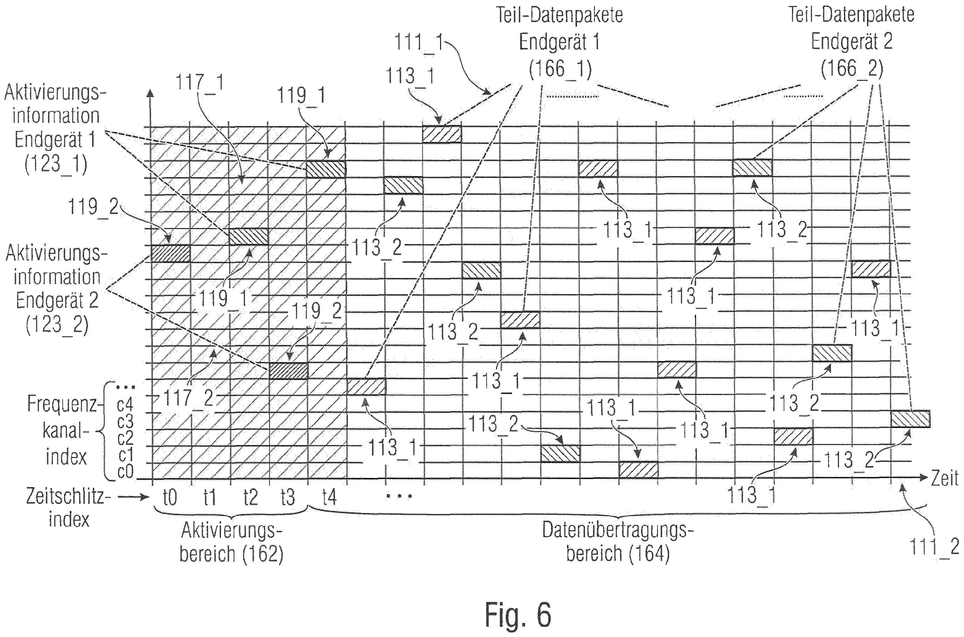

Fig. 6     in einem Diagramm eine durch zwei Aktivierungssprungmuster definierte frequenz- und zeitsprungbasierte Belegung der Ressourcen des Aktivierungsbereichs zur Übertragung von Aktivierungsinformationen eines ersten und zweiten Endpunkts, wobei die Aktivierungssprungmuster eine Information über die jeweiligen im Datenübertragungsbereich verwendeten Sprungmuster aufweisen, sowie durch die jeweiligen Sprungmuster definierte frequenz- und zeitsprungbasierte Belegungen der Ressourcen des Datenübertragungsbereichs zur Übertragung der Sub-Datenpakete des ersten und zweiten Endpunkts, gemäß einem Ausführungsbeispiel der vorliegenden Erfindung,

Fig. 7     in einem Diagramm eine verwendbare Belegung von Ressourcen des Aktivierungsbereichs zur Übertragung der Aktivierungsinformationen sowie eine durch ein erstes Aktivierungssprungmuster definierte Belegung der verwendbaren Ressourcen zur Übertragung einer ersten Aktivierungsinformation sowie durch ein zweites Aktivierungssprungmuster definierte Belegung der verwendbaren Ressourcen zur Übertragung einer zweiten Aktivierungsinformation, gemäß einem Ausführungsbeispiel der vorliegenden Erfindung,

Fig. 8     in einem Diagramm eine Verschachtelung von Aktivierungsbereichen mit unterschiedlicher Konfiguration (z.B. Auftretenshäufigkeit und Länge), gemäß einem Ausführungsbeispiel der vorliegenden Erfindung,

Fig. 9     in einem Diagramm eine zeitlich nicht überlappende Abfolge von Aktivierungsbereichen mit unterschiedlicher Konfiguration (z.B. Auftretenshäufigkeit und Länge), gemäß einem Ausführungsbeispiel der vorliegenden Erfindung,

Fig. 10     ein schematisches Blockschaltbild einer Kommunikationsanordnung mit einem ersten Kommunikationssystem, gemäß einem Ausführungsbeispiel der vorliegenden Erfindung,

Fig. 11     ein schematisches Blockschaltbild einer Kommunikationsanordnung von zwei untereinander unkoordinierten Netzwerken mit je einer Basisstation und jeweils vier zugehörigen Endgeräten, gemäß einem Ausführungsbeispiel der vorliegenden Erfindung,

Fig. 12     in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands, gemäß einem Ausführungsbeispiel der vorliegenden Erfindung,

Fig. 13     ein schematisches Blockschaltbild eines Kommunikationssystems mit einer Basisstation und einer Mehrzahl von Endpunkten, gemäß einem Ausführungsbeispiel der vorliegenden Erfindung,

Fig. 14     ein schematisches Blockschaltbild eines Controllers zur Erzeugung eines Kanalzugriffsmusters, gemäß einem Ausführungsbeispiel der vorliegenden Erfindung,

Fig. 15     ein schematisches Blockschaltbild eines Controllers zur Erzeugung eines Kanalzugriffsmusters, gemäß einem weiteren Ausführungsbeispiel der vorliegenden Erfindung,

Fig. 16     ein schematisches Blockschaltbild eines Ausschnitts des Controllers, gemäß einem Ausführungsbeispiel der vorliegenden Erfindung,

Fig. 17     in einem Diagramm ein auf einer Monte-Carlo-Simulation beruhendes Histogramm über die Variable $\Delta fi$,

Fig. 18     in einem Diagramm eine durch ein Kanalzugriffsmuster definierte frequenz- und zeitsprungbasierte Belegung der Ressourcen des Frequenzbands sowie eine Projektion des Kanalzugriffsmusters auf eine Zeitachse, gemäß einem Ausführungsbeispiel der vorliegenden Erfindung,

Fig. 19     in einem Diagramm auf eine Zeitachse projizierte Ressourcenelemente eines Kanalzugriffsmusters, die in ungenutzten Zeitschlitzen resultiert, gemäß einem Ausführungsbeispiel der vorliegenden Erfindung,

Fig. 20     in einem Diagramm auf eine Zeitachse projizierte Ressourcenelemente eines Kanalzugriffsmusters mit einer Aktivitätsrate A=1/4, gemäß einem Ausführungsbeispiel der vorliegenden Erfindung,

Fig. 21     in einem Diagramm auf eine Zeitachse projizierte Ressourcenelemente eines Kanalzugriffsmusters mit einer Aktivitätsrate A=1/4 und einem vorgegebenen Mindestabstand zwischen aufeinander folgenden Zeitschlitzen des Kanalzugriffsmusters, gemäß einem Ausführungsbeispiel der vorliegenden Erfindung,

Fig. 22     eine zeitliche Aufteilung eines Kanalzugriffsmusters 110 in Bereiche unterschiedlicher Aktivitätsrate A1, A2 und A3, gemäß einem Ausführungsbeispiel der vorliegenden Erfindung,

Fig. 23     in einem Diagramm eine durch ein Kanalzugriffsmuster definierte frequenz- und zeitsprungbasierte Belegung der Ressourcen des Frequenzbands, wobei das Kanalzugriffsmuster zusätzlich bei Bedarf aktivierbare Ressourcen aufweist, gemäß einem Ausführungsbeispiel der vorliegenden Erfindung,

Fig. 24     in einem Diagramm eine durch ein Kanalzugriffsmuster definierte frequenz- und zeitsprungbasierte Belegung der Ressourcen des Frequenzbands, wobei ein regelmäßig stärker gestörter Frequenzbereich des Frequenzbands nicht durch das Kanalzugriffsmuster belegt wird, gemäß einem Ausführungsbeispiel der vorliegenden Erfindung,

Fig. 25     in einem Diagramm eine durch ein Kanalzugriffsmuster definierte frequenz- und zeitsprungbasierte Belegung der Ressourcen des Frequenzbands, wobei Ressourcen im Frequenzbereich gebündelt werden, gemäß einem Ausführungsbeispiel der vorliegenden Erfindung,

Fig. 26     in einem Diagramm einen Zeitbereich des Frequenzbands sowie eine durch ein Kanalzugriffsmuster definierte verwendbare zeit- und frequenzsprungbasierte Belegung von verwendbaren Ressourcen des Zeitbereichs zur Übertragung von Daten, gemäß einem Ausführungsbeispiel der vorliegenden Erfindung,

Fig. 27     ein Flussdiagramm eines Verfahren zum Betreiben eines Endpunkts eines Kommunikationssystems, gemäß einem Ausführungsbeispiel der vorliegenden Erfindung,

Fig. 28     ein Flussdiagramm eines Verfahren zum Betreiben einer Basisstation eines Kommunikationssystems, gemäß einem Ausführungsbeispiel der vorliegenden Erfindung,

Fig. 29     ein Flussdiagramm eines Verfahren zum Betreiben eines Endpunkts eines Kommunikationssystems, gemäß einem Ausführungsbeispiel der vorliegenden Erfindung, und

Fig. 30     ein Flussdiagramm eines Verfahren zum Betreiben einer Basisstation eines Kommunikationssystems, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

Es wird im Folgenden vorausgesetzt, dass es innerhalb jeden Netzwerks (oder Kommunikationssystems) eine koordinierende Instanz (im Folgenden "Basisstation" genannt) sowie nicht-koordinierende Teilnehmer (im Folgenden "Endgeräte" genannt) gibt.

Im Folgenden werden Ausführungsbeispiele einer Basisstation eines Endpunkts und eines Kommunikationssystems mit einer Basisstation und zumindest einem Endpunkt beschrieben, die es ermöglichen, den Energieverbrauch der Basisstation zu reduzieren.

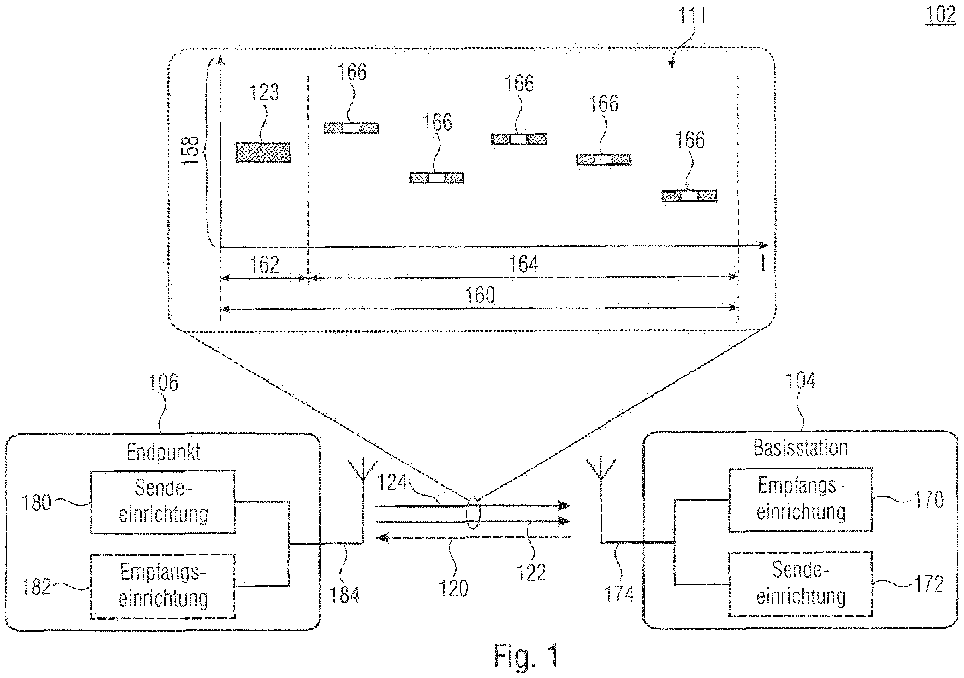

Fig. 1 zeigt ein schematisches Blockschaltbild eines Kommunikationssystems 102, das in einem Frequenzband drahtlos kommuniziert, welches von einer Mehrzahl von Kommunikationssystemen zur Kommunikation genutzt wird, gemäß einem Ausführungsbeispiel der vorliegenden Erfindung.

Das in Fig. 1 gezeigte Kommunikationssystem 102 umfasst beispielhaft eine Basisstation 104 und einen Endpunkt 106. Natürlich kann das Kommunikationssystem 102 auch mehr als eine Basisstation 104 und/oder mehr als einen Endpunkt 106 aufweisen.

Bei Ausführungsbeispielen kann ein Zugriff des Kommunikationssystems 102 auf das Frequenzband 158 basierend auf (z.B. periodisch) aufeinander folgenden Zeitbereichen erfolgen, wobei zumindest einer der Zeitbereiche 160 einen Aktivierungsbereich 162 und einen Datenübertragungsbereich 164 aufweist, wobei der Datenübertragungsbereich 164 (zeitlich) auf den Aktivierungsbereich 162 folgt.

Das Auftreten (z.B. Startzeitpunkt, Endzeitpunkt und/oder zeitliche Länge) des Zeitbereichs 160 sowie das Auftreten des Aktivierungsbereichs 162 und des Datenübertragungsbereichs 164 innerhalb des Zeitbereichs 160 den Teilnehmern (=Basisstation und Endpunkt(e)) des Kommunikationssystems bekannt sein, oder den Endpunkt(en) durch die Basisstation 104, z.B. mittels eines Steuersignals 120, signalisiert werden.

Bei Ausführungsbeispielen kann der Endpunkt 106 ausgebildet sein, um in dem Aktivierungsbereich 162 des Zeitbereichs 160, ein Aktivierungssignal 122 zu senden, wobei das Aktivierungssignal 122 eine Aktivierungsinformation 123 aufweist, die eine nachfolgende Datenübertragung in einem auf den Aktivierungsbereich 162 folgenden Datenübertragungsbereich 164 des Zeitbereichs 160 ankündigt. Der Endpunkt 106 kann ferner ausgebildet sein, um ein zu übertragenes Datenpaket (z.B. der Bitübertragungsschicht im OSI-Modell) in eine Mehrzahl von Sub-Datenpaketen 166 aufzuteilen, die jeweils kürzer sind als das Datenpaket, und um mittels eines Datensignals 124 die Mehrzahl von Sub-Datenpaketen 166 in dem Datenübertragungsbereich 164 entsprechend einer durch ein Sprungmuster 111 angegebenen frequenz- und/oder zeitsprungbasierten Belegung des Frequenzbands 158 zu senden.

Bei Ausführungsbeispielen kann die Basisstation 104 ausgebildet sein, um den Empfänger 170 für den Aktivierungsbereich 162 des Zeitbereichs 160 zu aktivieren (z.B. in einen normalen Betriebsmodus zu versetzten, z.B. einzuschalten), um das Aktivierungssignal 122 zu empfangen, wobei das Aktivierungssignal 122 die Aktivierungsinformation 123 aufweist, die eine nachfolgende Datenübertragung in dem auf den Aktivierungsbereich 162 folgenden Datenübertragungsbereich 164 des Zeitbereichs 160 ankündigt. Die Basisstation 104 kann ferner ausgebildet sein, um, sofern in dem Aktivierungsbereich 162 das Aktivierungssignal 122 mit der Aktivierungsinformation 123 empfangen wurde, den Empfänger 170 für den Datenübertragungsbereich 164 zu aktivieren oder aktiviert zu lassen, um in dem Datenübertragungsbereich 164 das Datensignal 124 zu empfangen, wobei das Datensignal 124 die Mehrzahl von Sub-Datenpaketen 166 aufweist, die entsprechend der durch das Sprungmuster 111 angegebenen frequenz- und/oder zeitsprungbasierten Belegung des Frequenzbands 158 übertragen werden, wobei auf die Mehrzahl von Sub-Datenpaketen 166 ein Datenpaket (z.B. der Bitübertragungsschicht im OSI-Modell) aufgeteilt ist, wobei die Mehrzahl von Sub-Datenpaketen 166 jeweils kürzer sind als das Datenpaket.

Wie in Fig. 1 beispielhaft gezeigt ist, kann die Basisstation 104 eine Sendeeinrichtung (oder Sender, oder Sendemodul, oder Transmitter) 172 aufweisen, die ausgebildet ist, um Signale, wie z.B. das Steuersignal 120, zu senden. Die Sendeeinrichtung 172 kann mit einer Antenne 174 der Basisstation 104 verbunden sein. Die Basisstation 104 kann ferner eine Empfangseinrichtung (oder Empfänger, oder Empfangsmodul, oder Receiver) 170 aufweisen, die ausgebildet ist, um Signale, wie z.B. das Aktivierungssignal 122 und das Datensignal 124, zu empfangen. Die Empfangseinrichtung 170 kann mit der Antenne 174 oder einer weiteren (separaten) Antenne der Basisstation 104 verbunden sein. Die Basisstation 104 kann auch eine kombinierte Sendeempfangseinrichtung (Transceiver) aufweisen.

Der Endpunkt 106 kann eine Empfangseinrichtung (oder Empfänger, oder Empfangsmodul, oder Receiver) 182 aufweisen, die ausgebildet ist, um Signale, wie z.B. das Steuersignal 120, zu empfangen. Die Empfangseinrichtung 182 kann mit einer Antenne 184 des Endpunkts 106 verbunden sein. Ferner kann der Endpunkt 106 eine Sendeeinrichtung (oder Sender, oder Sendemodul, oder Transmitter) 180 aufweisen, die ausgebildet ist, um Signale, wie z.B. das Aktivierungssignal 122 und das Datensignal 124, zu senden. Die Sendeeinrichtung 180 kann mit der Antenne 184 oder einer weiteren (separaten) Antenne des Endpunkts 106 verbunden sein. Der Endpunkt 106 kann auch eine kombinierte Sendeempfangseinrichtung (Transceiver) aufweisen.

Typischerweise umfasst ein Kommunikationssystem 102 zumindest eine Basisstation 104 und eine Vielzahl von Endpunkten 106 (z.B. Sensorknoten, wie z.B. Heizungszähler).

Wie bereits erwähnt können die Basisstation 104 und der Endpunkt 106 ausgebildet sein, um Daten (z.B. Datenpakete) unter Verwendung des Telegram-Splitting-Verfahrens (dt. Telegrammaufteilungsverfahrens) zu senden bzw. zu empfangen. Hierbei wird ein Telegramm bzw. Datenpaket in eine Mehrzahl von Sub-Datenpaketen 166 (oder Teildatenpakete, oder Teilpakete) aufgeteilt und die Sub-Datenpakete 166 entsprechend eines Sprungmusters 111 in der Zeit verteilt und/oder in der Frequenz verteilt übertragen, wobei der jeweilige Empfänger (z.B. Basisstation 104 oder Endpunkt 106) die Sub-Datenpakete 166 wieder zusammenfügt (oder kombiniert), um das Datenpaket zu erhalten. Jedes der Sub-Datenpakete 166 enthält dabei nur einen Teil des Datenpakets. Das Datenpaket kann ferner kanalcodiert sein, so dass zum fehlerfreien Decodieren des Datenpakets nicht alle Sub-Datenpakete 166, sondern nur ein Teil der Sub-Datenpakete 166 erforderlich ist.

Die zeitliche Verteilung der Mehrzahl von Sub-Datenpaketen 166 kann, wie bereits erwähnt, entsprechend eines Zeit- und/oder Frequenzsprungmusters 111 erfolgen.

Ein Zeitsprungmuster kann eine Abfolge von Sendezeitpunkten oder Sendezeitabständen angeben, mit denen die Sub-Datenpakete gesendet werden. Beispielsweise kann ein erstes Sub-Datenpaket zu einem ersten Sendezeitpunkt (oder in einem ersten Sendezeitschlitz) und ein zweites Sub-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Sub-Datenpaketen können Sendepausen vorhanden sein in denen nicht gesendet wird. Die Sub-Datenpakete können sich auch zeitlich überlappen (überschneiden).

Ein Frequenzsprungmuster kann eine Abfolge von Sendefrequenzen oder Sendefrequenzsprüngen angeben, mit denen die Sub-Datenpakete gesendet werden. Beispielsweise kann ein erstes Sub-Datenpaket mit einer ersten Sendefrequenz (oder in einem ersten Frequenzkanal) und ein zweites Sub-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Sub-Datenpakete auch sowohl in der Zeit- als auch in der Frequenz verteilt übertragen werden. Die Verteilung der Mehrzahl von Sub-Datenpakete in der Zeit und in der Frequenz kann entsprechend einem Zeit- und Frequenzsprungmuster erfolgen. Ein Zeit- und Frequenzsprungmuster kann die Kombination aus einem Zeitsprungmuster und einem Frequenzsprungmuster sein, d.h. eine Abfolge von Sendezeitpunkten oder Sendezeitabständen mit denen die Sub-Datenpakete übertragen werden, wobei den Sendezeitpunkten (oder Sendezeitabständen) Sendefrequenzen (oder Sendefrequenzsprünge) zugeordnet sind.

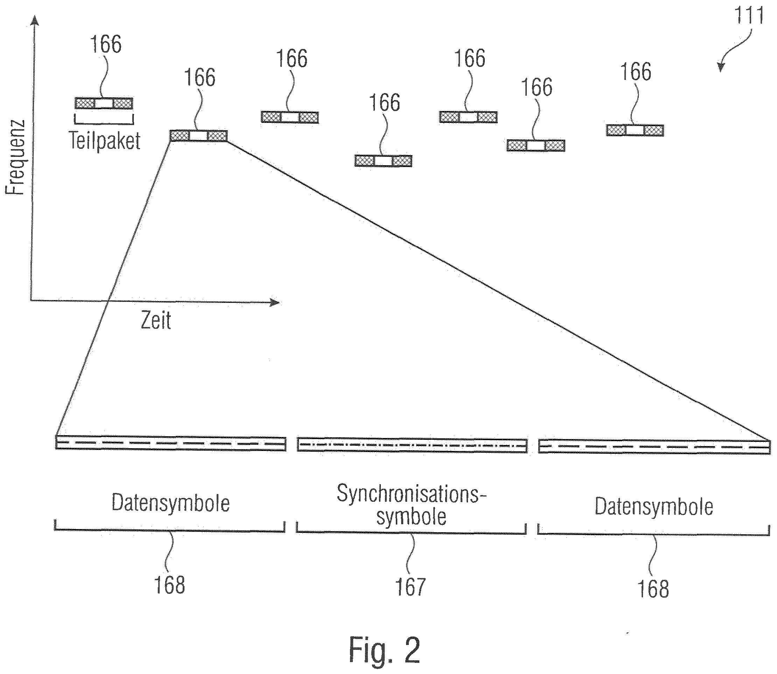

Fig. 2 zeigt in einem Diagramm eine Belegung des Übertragungskanals bei der Übertragung einer Mehrzahl von Sub-Datenpaketen 166 entsprechend einem Zeit- und Frequenzsprungmuster 111. Dabei beschreibt die Ordinate die Frequenz und die Abszisse die Zeit.

Wie in Fig. 2 zu erkennen ist, kann das Datenpaket beispielhaft auf n = 7 Sub-Datenpakete 166 aufgeteilt werden und entsprechend eines Zeit- und Frequenzsprungmusters verteilt in der Zeit und der Frequenz übertragen werden.

Wie in Fig. 2 weiter zu erkennen ist, kann auch eine Synchronisationssequenz 167 auf die Mehrzahl von Sub-Datenpaketen 166 aufgeteilt werden, so dass die Mehrzahl von Sub-Datenpaketen 166 neben Daten (Datensymbole in Fig. 2) 168 jeweils einen Teil der Synchronisationssequenz (Synchronisationssymbole in Fig. 2) 167 enthalten.

Im Folgenden werden detaillierte Ausführungsbeispiele der Basisstation 104, des Endpunkts 106 und des Kommunikationssystems 102 mit der Basisstation 104 und zumindest dem einen Endpunkt 106 beschrieben.

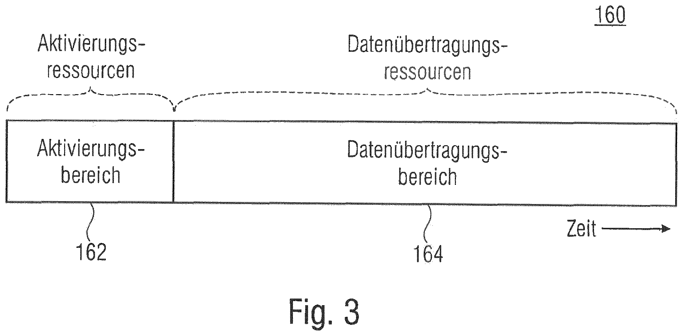

Ausführungsbeispielen der vorliegenden Erfindung liegt die Idee zugrunde, dass Endgeräte 106 (oder Endpunkte) in speziell dafür reservierten Funkressourcen eine nachfolgende Datenübertragung im TSMA-Verfahren ankündigen und ggf. auch zusätzliche Information über das bei der nachfolgenden Datenübertragung verwendete Kanalzugriffsmuster (Sprungmuster 111) bereitstellen. Dieser Vorgang wird im Folgenden als "Aktivierung" bezeichnet und die zugehörige Information als "Aktivierungsinformation" 123. Die Funkressourcen, innerhalb derer die Aktivierungsinformation 123 übertragen wird, werden als "Aktivierungsbereich" 162 bezeichnet. Dies ist in Fig. 3 veranschaulicht.

Im Detail zeigt Fig. 3 in einem Diagramm eine schematische Ansicht eines Zeitbereichs 160 einer Abfolge von Zeitbereichen, basierend auf denen das Kommunikationssystem auf die Funkressourcen zugreift, wobei der Zeitbereich 160 einen Aktivierungsbereich 162 und einen Datenübertragungsbereich 164 aufweist, gemäß einem Ausführungsbeispiel der vorliegenden Erfindung. Dabei beschreibt in Fig. 3 die Abszisse die Zeit. Mit anderen Worten, Fig. 3 zeigt eine schematische Darstellung eines Aktivierungsbereichs 162 und eines Datenübertragungsbereichs 164, gemäß einem Ausführungsbeispiel.

Die Aktivierungsinformation 123 kann je nach Ausführung unterschiedlich hohen Gehalt haben. So kann im einfachsten Fall die Information lediglich darin bestehen, dass im folgenden Datenübertragungsbereich 164 eine Datenaussendung erfolgt, ohne dies näher einzugrenzen. In weiteren Ausführungen kann zusätzlich auch Information im Aktivierungsbereich 162 übertragen werden, welches Sprungmuster für die Datenübertragung eingesetzt wird oder zumindest eine Gruppe (Untermenge) von Sprungmustern benannt werden, aus welcher ein Sprungmuster für die Datenübertragung ausgewählt wird.

Findet die Basisstation 104 im Aktivierungsbereich 162 keine Aktivierungsinformation 123, so erfolgt keine Aktivierung des Empfängers 170 für den Zeitraum des Datenübertragungsbereichs 164. Somit kann sowohl die Energie für den Betrieb des Signalempfängers (z.B. Verstärker, Mischer, A/D-Wandler) eingespart werden als auch die Energie für die Detektion von Nachrichten (Ressourcen für digitale Signalverarbeitung) im Datenübertragungsbereich 164.

Empfängt die Basisstation 104 im Aktivierungsbereich 162 eine Aktivierungsinformation 123, so kann die Basisstation 104 mit dieser - je nach Ausführung - auch Information über das im Datenübertragungsbereich 164 eingesetzte Sprungmuster 111 erhalten (s.o.), sodass für die im Datenübertragungsbereich 164 erfolgende Detektion der Suchraum eingegrenzt werden kann. Dies führt gleichfalls zu einer Energieeinsparung.

In vergleichbarer Weise wie für die eigentliche Datenübertragung kann auch die Aktivierungsinformation 123 in Form eines Sprungmusters übertragen werden. Dies wird weiter unten detaillierter ausgeführt.

**1. Übermittlung der Aktivierungsinformation im Aktivierungsbereich**

Im Folgenden wird zur Veranschaulichung ohne Einschränkung der Allgemeingültigkeit davon ausgegangen, dass der zur Übertragung zur Verfügung stehende Frequenzbereich 158 in einzelne, diskrete Frequenzkanäle c0, c1, c2, c3, c4, usw., unterteilt ist, welche durch einen Frequenzkanalindex gekennzeichnet sind. Ebenso erfolgt eine Unterteilung der zeitlichen Ressourcen (z.B. des Zeitbereichs 160) in diskrete Elemente, welche als Zeitschlitze (engl. timeslots) t0, t1, t2, t3, t4, usw., bezeichnet werden, die entsprechend mit einem Zeitschlitzindex versehen sind.

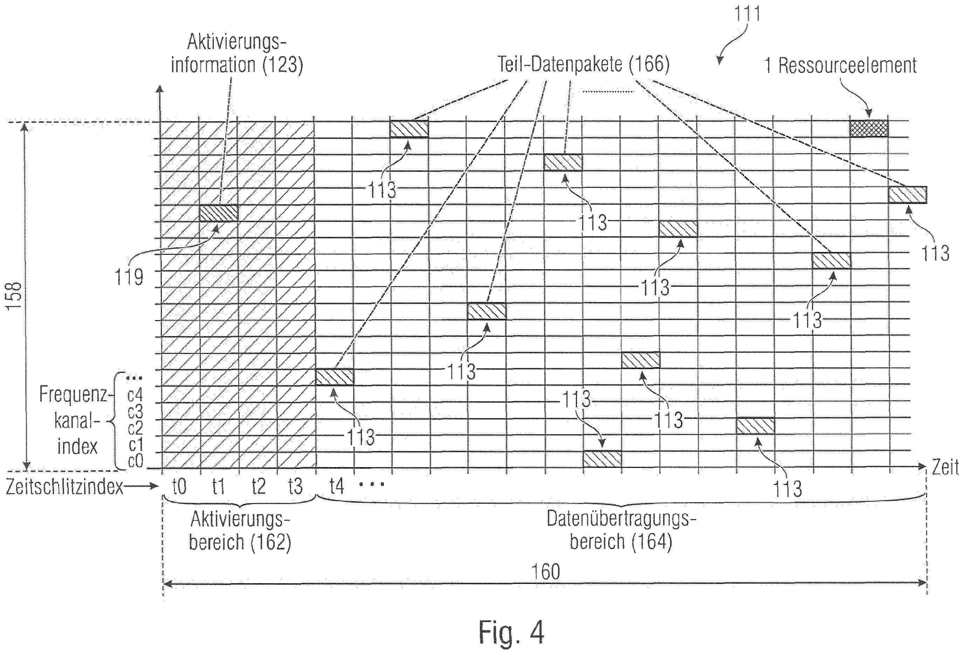

Wie bereits oben erwähnt, wird beim TSMA-Verfahren eine Nachricht (Datenpaket) in eine Vielzahl von Teil-Datenpaketen 166 aufgeteilt und auf unterschiedliche Zeit-/Frequenzressourcen verteilt übertragen. Die Übertragung der eigentlichen Nachricht erfolgt gemäß Fig. 3 im dafür vorgesehenen Datenübertragungsbereich 164. Die Übertragung der Aktivierungsinformation 123 erfolgt im Aktivierungsbereich 162, welcher dem Datenübertragungsbereich 164 zeitlich vorangestellt ist. Dies ist in Fig. 4 beispielhaft für die Übertragung eines Datenpakets dargestellt.

Im Detail zeigt Fig. 4 in einem Diagramm eine durch die Übertragung der Aktivierungsinformation 123 hervorgerufene Belegung der Ressourcen 119 des Aktivierungsbereichs 162 sowie eine durch das Sprungmuster 111 definierte frequenz- und zeitsprungbasierte Belegung der Ressourcen 113 des Datenübertragungsbereichs 164, gemäß einem Ausführungsbeispiel der vorliegenden Erfindung. Dabei beschreibt die Ordinate die Frequenz (oder Frequenzkanäle des Frequenzbands 158) und die Abszisse die Zeit (oder Zeitschlitze des Zeitbereichs 160). Mit anderen Worten, Fig. 4 zeigt eine schematische Darstellung der Frequenzkanäle und Zeitschlitze sowie beispielhafte Belegung 119, 113 des Funkkanals 158 im Aktivierungsbereich 162 sowie Datenübertragungsbereich 164.

Fig. 4 zeigt dabei ein Szenario, in welchem in einem Aktivierungsbereich 162 (im Beispiel der hinterlegte Bereich des Zeit-/Frequenzrasters, der sich über die ersten vier dargestellten Zeitschlitze mit den Indizes t0, t1, t2, t3 erstreckt) eine Aktivierungsinformation 123 übertragen wird. Diese ist durch ein schraffiertes Ressourcenelement 119 dargestellt. Im nachfolgenden Datenübertragungsbereich 164 (im Beispiel ab Zeitschlitzindex t4) erfolgt die Aussendung einer Vielzahl von Teil-Datenpaketen 166 (schraffierte Ressourcenelemente 113), deren Anordnung in Zeit und Frequenz ein entsprechendes sog. Sprungmuster 111 zugrunde liegt. Für die vorteilhafte Anwendung von Ausführungsbeispielen ist es unerheblich, ob Aktivierungsbereich 162 und Datenübertragungsbereich 164 nahtlos (direkt) aufeinander folgen oder durch eine Anzahl von Zeitschlitzen getrennt sind.

Die Aktivierungsinformation 123 wird von einem Endgerät 106 (oder Endpunkt) nur dann ausgesendet, wenn ein Datenpaket auch tatsächlich übertragen wird. Steht kein Datenpaket zur Übertragung an, so unterbleibt auch die Aussendung der Aktivierungsinformation 123. Findet die Basisstation 104 an den vorgesehenen Funkressourcen keine Aktivierungsinformation 123, so kann sie den Empfänger 170 und die zugeordneten Signalverarbeitungsressourcen im nachfolgenden Datenübertragungsbereich 164 stilllegen und somit Energie sparen.

Im obigen Beispiel (Fig. 4) erstreckt sich der Aktivierungsbereich 162 über mehrere Frequenzkanäle und mehrere Zeitschlitze. Für den Fall eines Einkanalempfängers in der Basisstation 104 ist es ebenso möglich, dass der Aktivierungsbereich 162 in Zeit und Frequenz nur wenige Ressourcenelemente oder ggf. auch nur ein einziges Ressourcenelement umfasst. Es kann daher vorkommen, dass mehrere Endgeräte 106 ihre Aktivierungsinformation im selbem Ressourcenelement senden, sodass sich diese im Empfänger überlagert. Dies ist in Fig. 5 veranschaulicht.

Im Detail zeigt Fig. 5 in einem Diagramm eine Übertragung von zwei Aktivierungsinformationen 123_1 und 123_2 eines ersten Endpunkts und eines zweiten Endpunkts in derselben Ressource 119 des Aktivierungsbereichs 162 sowie eine durch ein erstes Sprungmuster 111_1 definierte frequenz- und zeitsprungbasierte Belegung der Ressourcen 113_1 des Datenübertragungsbereichs 164 zur Übertragung der Sub-Datenpakete 166_1 des ersten Endpunkts und eine durch ein zweites Sprungmuster 111_2 definierte frequenz- und zeitsprungbasierte Belegung der Ressourcen 113_2 des Datenübertragungsbereichs 164 zur Übertragung der Sub-Datenpakete 166_2 des zweiten Endpunkts, gemäß einem Ausführungsbeispiel. Dabei beschreibt die Ordinate die Frequenz (oder Frequenzkanäle des Frequenzbands 158) und die Abszisse die Zeit (oder Zeitschlitze des Zeitbereichs 160). Mit anderen Worten, Fig. 5 zeigt eine schematische Darstellung der Frequenzkanäle und Zeitschlitze sowie beispielhafte Belegung des Funkkanals im Aktivierungsbereich 163 sowie Datenübertragungsbereich 162 bei zwei Endgeräten, die denselben Aktivierungsbereich nutzen.

In Fig. 5 ist dabei beispielhaft eine Übertragung durch zwei Endgeräte dargestellt, wobei der Aktivierungsbereich 162 zur einfacheren Darstellung nur aus einem einzelnen Ressourcenelement 119 besteht, auf welches beide Endgeräte im gewählten Beispiel zugleich zugreifen, sodass es zu einer Signalüberlagerung (Interferenz) in diesem Ressourcenelement 119 kommt. Je nach Implementierung des Verfahrens kann es sein, dass der Empfänger 170 der Basisstation 104 in diesem Fall nicht feststellen kann, wie viele Endgeräte eine Aktivierungsinformation 123_1, 123_2 aussenden bzw. von welchen Teilnehmern diese stammen. Detektiert der Empfänger 170 auch nur ein Signal 122 im Aktivierungsbereich 162 (z.B. indem er in der/den Aktivierungsressource(n) 119 eine hinreichend über dem Rauschpegel liegende Empfangsleistung misst), so bleibt er im nachfolgenden Datenübertragungsbereich 164 empfangsbereit und kann entsprechende potentielle Sprungmuster 111_1, 111_2 mehrerer Teilnehmer (oder Endpunkte) dort suchen. Detektiert der Empfänger 170 (der Basistation 104) kein Signal 122 im Aktivierungsbereich 162, so kann die Basisstation 104 den Empfänger 170 im nachfolgenden Datenübertragungsbereich 164 deaktivieren, sodass der Vorteil von Ausführungsbeispielen zum Tragen kommt.

Der Fall einer Überlagerung der Aktivierungsinformation 123_1, 123_2 mehrerer Endgeräte kann auch dann vorkommen und ist dem Vorteil von Ausführungsbeispielen nicht abträglich, wenn der Aktivierungsbereich nicht wie im obigen Beispiel aus nur einem, sondern aus mehreren Ressourcenelementen besteht.

### 2. Übermittlung von Information über das angewandte Sprungmuster im Aktivierungsbereich

In bestimmten Übertragungsszenarien ist der Basisstation 104 nicht vorab bekannt, welche Endgeräte mit welchen Sprungmustern im Datenübertragungsbereich auf den Funkkanal zugreifen. Besonders bei einem großen Vorrat an möglichen Sprungmustern, welche den Endgeräten zur Verfügung stehen, kann es in der Basisstation eine verarbeitungs- und damit energieintensive Aufgabe sein, die gesendeten Datenpakete anhand ihrer bei der Übertragung der Teil-Datenpakete eingesetzten Sprungmuster zu detektieren. Im Sinne einer Energieeinsparung ist es daher für die Basisstation hilfreich, die Menge an eingesetzten Sprungmustern vor der Detektion im Datenübertragungsbereich möglichst stark einzugrenzen.

Hierfür kann die Aktivierungsinformation 123 vorteilhaft genutzt werden. Gemäß Abschnitt 1 wurde die Aktivierungsinformation 123 genutzt, um eine Übertragung im Datenübertragungsbereich 164 anzukündigen. In den nun beschriebenen Ausführungsbeispielen wird mittels der Aktivierungsinformation 123 nun zusätzlich eine Information über das bzw. die im Datenübertragungsbereich 164 angewandten Sprungmuster 111 übermittelt.

Die übermittelte Information zum eingesetzten Sprungmuster 111 eines Endgeräts 106 kann dahingehend gestaltet sein, dass ein Sprungmusterindex explizit übermittelt wird. Gibt es z.B. einen Vorrat von $N_{sprung}=1024$ möglichen Sprungmustern für die Datenübertragung, so ist eine Information von mindestens der Länge 10 bit ($2^{10}=1024$) erforderlich, um ein Sprungmuster daraus eindeutig zu identifizieren. Stehen für die Aktivierungsinformation 123 weniger Bits zur Verfügung, als zur eindeutigen Indizierung eines Sprungmusters nötig, so kann dennoch eine Eingrenzung auf eine Untermenge von Sprungmustern erfolgen, um den Suchraum bei der Detektion zu reduzieren. Kann beispielsweise mit der Aktivierungsinformation 123 ein Informationsgehalt von 4 bit übertragen werden, so kann damit der gesamte Vorrat von Sprungmustern in $2^4=16$ Untermengen aufgeteilt werden, von denen bei gleichmäßiger Aufteilung jede nur noch $N_{sprung}/16$ des gesamten Vorrats an Sprungmustern enthält.

Im Folgenden werden mehrere verschiedene Möglichkeiten aufgezeigt, wie mit der Aktivierungsinformation 123 eine Information über das im nachfolgenden Datenübertragungsbereich 164 angewandte Sprungmuster 111 übertragen werden kann.

### Ausführungsbeispiel 1: Belegung des Aktivierungsbereichs

Eine Art der Informationsübermittlung kann über die Belegung des Aktivierungsbereichs 162 erfolgen. Stehen in einem Aktivierungsbereich 162 mehrere Ressourcenelemente zur Verfügung, so kann über deren Belegung eine Information übermittelt werden. Dies ist in der folgenden Fig. 6 veranschaulicht.

Im Detail zeigt Fig. 6 in einem Diagramm eine durch ein erstes Aktivierungssprungmuster 117_1 definierte frequenz- und zeitsprungbasierte Belegung der Ressourcen 119_1 des Aktivierungsbereichs 162 zur Übertragung einer ersten Aktivierungsinformation 123_1 eines ersten Endpunkts, wobei das erste Aktivierungssprungmuster 117_1 eine Information über das im Datenübertragungsbereich verwendete erste Sprungmuster 111_1 aufweist, sowie eine durch das erste Sprungmuster 111_1 definierte frequenz- und zeitsprungbasierte Belegung der Ressourcen 113_1 des Datenübertragungsbereichs 164 zur Übertragung der Sub-Datenpakete 166_1 des ersten Endpunkts. Ferner ist in Fig. 6 eine durch ein zweites Aktivierungssprungmuster 117_2 definierte frequenz- und zeitsprungbasierte Belegung der Ressourcen 119_2 des Aktivierungsbereichs 162 zur Übertragung einer zweiten Aktivierungsinformation 123_2 eines zweiten Endpunkts zu erkennen, wobei das zweite Aktivierungssprungmuster 117_2 eine Information über das im Datenübertragungsbereich verwendete zweite Sprungmuster 111_2 aufweist, sowie eine durch das zweite Sprungmuster 111_2 definierte frequenz- und zeitsprungbasierte Belegung der Ressourcen 113_2 des Datenübertragungsbereichs 164 zur Übertragung der Sub-Datenpakete 166_2 des zweiten Endpunkts. Dabei beschreibt die Ordinate die Frequenz (oder Frequenzkanäle des Frequenzbands 158) und die Abszisse die Zeit (oder Zeitschlitze des Zeitbereichs 160). Mit anderen Worten, Fig. 6 zeigt eine Informationsübertragung mit der Aktivierungsinformation durch unterschiedliche Belegung der Ressourcen im Aktivierungsbereich.

Fig. 6 zeigt somit einen Aktivierungsbereich, wobei eine Information zu unterschiedlichen Sprungmustern 111_1, 111_2 von zwei Endgeräten im Datenübertragungsbereich 164 durch unterschiedliche Belegung der Ressourcen im Aktivierungsbereich übertragen wird.

Generell bedeutet diese Vorgehensweise, dass auch im Aktivierungsbereich 162 unterschiedliche Sprungmuster 117_1, 117_2 zum Einsatz kommen können, wobei allein schon das im Aktivierungsbereich 162 verwendete Sprungmuster 117_1, 117_2 eine Information über das Sprungmuster 111_1, 111_2 im nachfolgenden Datenübertragungsbereich 164 enthält.

Handelt es sich bei der Basisstation 104 um einen Empfänger, welcher in jedem Zeitschlitz nur jeweils einen Frequenzkanal empfangen kann (Einkanalempfänger), so kann über die zeitliche Belegung der Ressourcen im Aktivierungsbereich 162 in entsprechender Weise Information übertragen werden.

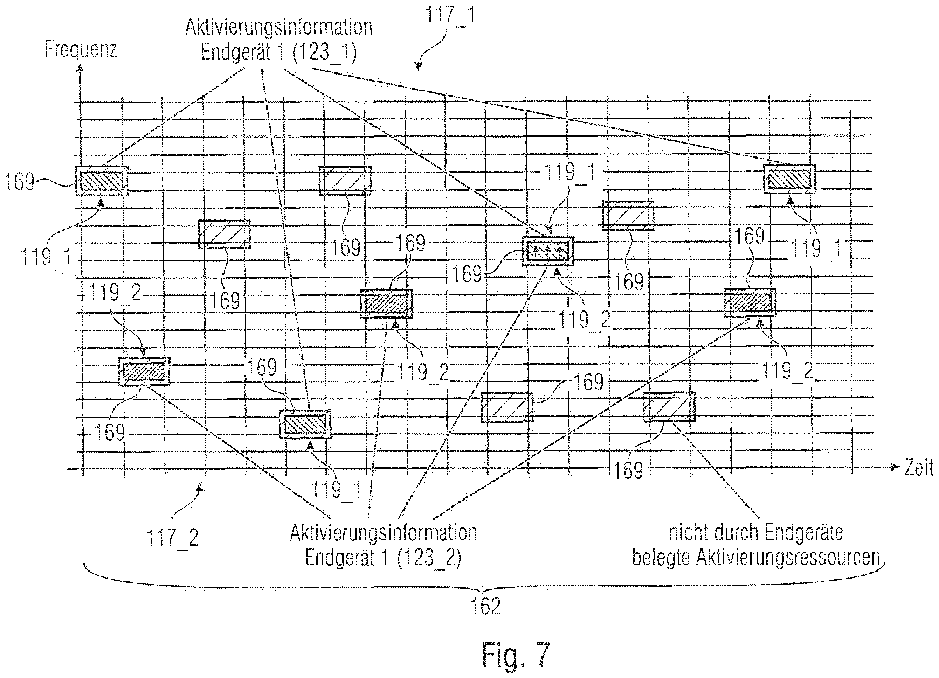

Fig. 7 zeigt in einem Diagramm eine verwendbare Belegung von Ressourcen 169 des Aktivierungsbereichs 162 zur Übertragung der Aktivierungsinformationen sowie eine durch ein erstes Aktivierungssprungmuster 117_1 definierte Belegung 119_1 der verwendbaren Ressourcen 169 zur Übertragung einer ersten Aktivierungsinformation 123_1 sowie durch ein zweites Aktivierungssprungmuster 117_2 definierte Belegung 119_2 der verwendbaren Ressourcen 169 zur Übertragung einer zweiten Aktivierungsinformation 123_2, gemäß einem Ausführungsbeispiel. Dabei beschreibt die Ordinate die Frequenz (oder Frequenzkanäle des Frequenzbands 158) und die Abszisse die Zeit (oder Zeitschlitze des Zeitbereichs 160). Mit anderen Worten, Fig. 7 zeigt eine Informationsübertragung mit der Aktivierungsinformation durch unterschiedliche Belegung der Ressourcen im Aktivierungsbereich (Fig. 7 zeigt nur den Zeitraum des Aktivierungsbereichs).

Fig. 7 zeigt dabei beispielhaft die Anordnung des Aktivierungsbereichs 162 in Zeit und Frequenz für einen Einkanalempfänger (der Datenübertragungsbereich wird hier nicht dargestellt). Die Elemente 169 umfassen die Ressourcenelemente, die zur Übertragung der Aktivierungsinformation 123_1, 123_2 belegbar sind. Es ist veranschaulicht, dass die Ressourcenelemente 169 des Aktivierungsbereichs 162 ihrerseits gemäß einem Sprungmuster angeordnet sind. Die Abfolge der Belegung der Ressourcenelemente des Aktivierungsbereichs enthält Information über das in der nachfolgenden Datenübertragung angewandte Sprungmuster.

Um über die Belegung der Ressourcen im Aktivierungsbereich hinaus mehr Information mit der Aussendung der Aktivierungsinformation zu übertragen, können folgende Merkmale des Signals mit der Aktivierungsinformation herangezogen werden.

Ausführungsbeispiel 2: Dedizierter Frequenzoffset des Signals mit Aktivierungsinformation

Dem Sendesignal kann vom Sender bewusst ein vom zur Datenübertragung verwendeten Sprungmuster abhängiger, dedizierter Frequenzoffset $\Delta f_{act}$ (z.B. relativ zur Mittenfrequenz eines Frequenzkanals) aufgebracht werden. Der Empfänger ist typischerweise so ausgebildet, dass er den Frequenzoffset eines empfangenen Signals schätzen muss. Aus der Abfolge der Schätzwerte des Frequenzoffsets kann Information über das Sprungmuster im Datenübertragungsbereich gewonnen werden.

Ausführungsbeispiel 3: Dedizierte Zeitverschiebung des Signals mit Aktivierungsinformation

Entsprechend der Aufbringung eines Frequenzoffsets kann das Signal mit Aktivierungsinformation mit einer vom zur Datenübertragung verwendeten Sprungmuster abhängigen, dedizierten Zeitverschiebung $\Delta t_{act}$ (z.B. relativ zu einem definierten Zeitpunkt (z.B. Anfang, Mitte oder Ende) des Zeitschlitzes) versehen werden.

Ausführungsbeispiel 4: Unterschiedliche Referenz-Svmbolseauenzen für die Aktivierungsinformation

Um eine eventuelle Überlagerung der Aktivierungsinformation mehrerer Endgeräte in einer Ressource des Aktivierungsbereichs zu erkennen, kann das Signal mit Aktivierungsinformation eine vom zur Datenübertragung verwendeten Sprungmuster abhängige Referenz-Symbolsequenz enthalten. Diese Sequenz kann unabhängig von einer evtl. allen Aktivierungssignalen gemeinsamen Synchronisationssequenz sein.

Kombination obiger Ausführungsbeispiele

Um die Aktivierungsinformation mit einem möglichst hohen Informationsgehalt hinsichtlich des Sprungmusters im Datenübertragungsbereich 111 zu versehen, können die o.g. Ausführungsbeispiele 1-4 kombiniert werden. Dies ist beispielhaft in der folgenden Tabelle 1 veranschaulicht, welche eine beispielhafte Zuordnung von Merkmalen/Ausführungsbeispielen der Aktivierungsinformation in Abhängigkeit vom Sprungmusterindex im Datenübertragungsbereich auflistet.

| Sprungmusterindex im Datenübertragungsbereich → | 0 | 1 | 2 | 3 | 4 | 5 | 6 | 7 |
|---|---|---|---|---|---|---|---|---|
| Indizes der belegten Zeitschlitze im Aktivierungsbereich (2 Zeitschlitze jeweils belegt) | [0 2] | [1 2] | [0 2] | [1 2] | [0 2] | [1 2] | [0 2] | [1 2] |
| Frequenzoffset | $+\Delta f_{act}$ | $+\Delta f_{act}$ | $-\Delta f_{act}$ | $-\Delta f_{act}$ | $+\Delta f_{act}$ | $+\Delta f_{act}$ | $-\Delta f_{act}$ | $-\Delta f_{act}$ |
| Zeitverschiebung | $+\Delta t_{act}$ | $-\Delta t_{act}$ | $+\Delta t_{act}$ | $-\Delta t_{act}$ | $+\Delta t_{act}$ | $-\Delta t_{act}$ | $+\Delta t_{act}$ | $\Delta t_{act}$ |
| Referenz-Symbolsequenzindex | 1 | 1 | 1 | 1 | 2 | 2 | 2 | 2 |

Tabelle 1 zeigt dabei die Zuordnung mehrerer Merkmale/Ausführungsbeispiele der Aktivierungsinformation zu den Indizes der Sprungmuster, welche im Datenübertragungsbereich angewandt werden. Obwohl im gewählten Beispiel jedes einzelne Merkmal nur eine binäre Information enthält, ist durch Kombination der Merkmale eine eindeutige Information über das Sprungmuster erhältlich, falls die Merkmale im Empfänger der Basisstation korrekt erkannt werden.

Es ist für den Fachmann leicht zu erkennen, dass die einzelnen Merkmale auch höherstufige (als binäre) Information enthalten können, z.B. indem mehrstufige Frequenzoffsets (beispielsweise $\{-2\Delta f_{act}, -\Delta f_{act}, 0, +\Delta f_{act}, +2\Delta f_{act}\}$) mehrstufige Zeitverschiebungen (beispielsweise $\{-2\Delta t_{act}, -\Delta t_{act}, 0, +\Delta t_{act}, +2\Delta t_{act}\}$), ein größerer Vorrat an Referenz-Symbolsequenzindizes etc. zugelassen werden.

Damit ist es möglich, auch einen großen Vorrat an Sprungmustern (z.B. 1024, 2048) mittels geeigneter Merkmale der Aktivierungsinformation zu indizieren.

### 3. Konfiguration der Aktivierungs-Information / Ressourcen

Je nach den Anforderungen unterschiedlicher Anwendungen und den Eigenschaften der eingesetzten Hardware ist es vorteilhaft, die Parameter der Aktivierungsinformation 123 dynamisch an den Bedarf anzupassen. Als Parameter kommen insbesondere in Betracht:

- die Anwendung der Aktivierungsinformation als solche (d.h. Aktivierung bzw. Deaktivierung der Aktivierungsinformation),
- der zeitliche Abstand zwischen zwei Aktivierungsbereichen, d.h. die Häufigkeit des Bereitstellens von Aktivierungsbereichen, und/oder
- die zeitliche Ausdehnung des Aktivierungsbereichs und die damit zusammenhängende Anzahl der Ressourcenelemente im Aktivierungsbereich.

Um den Einsatz der Aktivierungsinformation einem ggf. dynamisch veränderlichen Bedarf anzupassen, kann bei Ausführungsbeispielen die Konfiguration der Aktivierungsinformation 123, d.h. die o.g. Parameter oder eines Teils davon, durch ein regelmäßig von der Basisstation 104 ausgesendetes Signal 120 (Steuersignal, wie z.B. Baken-Signal, engl. beacon) signalisiert werden.

Die Konfiguration kann z.B. davon abhängen, ob eine Basisstation 104 batteriebetrieben ist. In diesem Fall ist eine sehr zuverlässig übertragene Aktivierungsinformation 123 von besonderem Vorteil, da die Basisstation 104 für den Fall, dass keine Datenübertragung angekündigt wird, den Empfänger 170 während des Datenübertragungsbereichs 164 deaktivieren kann. Auch für den Fall einer stattfindenden Datenübertragung kann die Aktivierungsinformation 123 (wie oben beschrieben) den Suchraum für die Detektion der Sprungmuster der Teil-Datenpakete 166 gemäß Abschnitt 2 deutlich eingrenzen, was gleichfalls eine signifikante Energieeinsparung mit sich bringen kann. In diesem Fall ist daher eine Konfiguration der Aktivierungsinformation 123 dergestalt vorteilhaft, dass möglichst viel Information über das (Datenpaket-)Sprungmuster 111 möglichst zuverlässig übertragen wird, z.B. indem der Aktivierungsbereich 162 ausgedehnt ist und vergleichsweise viele Ressourcenelemente beinhaltet.

Ressourcenelemente, die für die Aktivierungsinformation 123 reserviert sind, stehen für die eigentliche Datenübertragung nicht zur Verfügung. Eine stromnetzbetriebene Basisstation, bei welcher der Aspekt der Energieeinsparung eine eher geringere Rolle spielt, kann daher z.B. die Zuteilung der Funkressourcen für die Aktivierungsinformation verringern (z.B. Aktivierungsbereich verkürzen) und die Ressourcen - gerade bei hoher Last - zur Datenübertragung vorsehen. Bei sehr hoher Last kann ggf. die Aktivierungsinformation ganz entfallen, damit einerseits alle Ressourcen der eigentlichen Datenübertragung zur Verfügung stehen, sowie andererseits eine Deaktivierung des Empfängers aufgrund der hohen Last nur selten möglich sein wird.

Verschachtelung von Aktivierungsbereichen mit unterschiedlicher Konfiguration (z.B. Länge und Auftrittshäufigkeit)

Anwendungen in einem Netzwerk können unterschiedliche Anforderungen an die Latenzzeit einer Übertragung haben. Für Anwendungen, die eine kurze Latenzzeit bei gleichzeitig relativ geringer Datenmenge pro Datenaussendung benötigen (z.B. drahtloser Lichtschalter), können vergleichsweise häufige, aber kurze Aktivierungsbereiche vorteilhaft sein. Dadurch wird eine rasche Übertragung der Daten ermöglicht.

Gleichzeitig können für weniger latenzkritische Übertragungen (z.B. Übermittlung eines Zählerstands) eher seltene, aber dafür längere Aktivierungsbereiche vorteilhaft sein. Daher kann es vorteilhaft sein, Aktivierungsbereiche mit unterschiedlicher Häufigkeit und Länge anzuordnen.

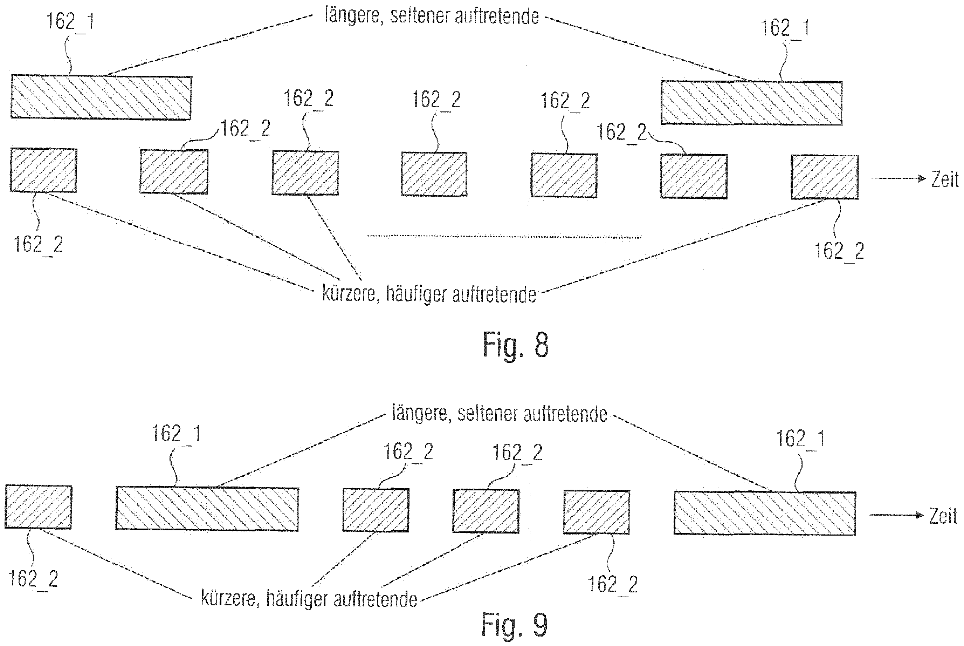

Fig. 8 zeigt in einem Diagramm eine Verschachtelung von Aktivierungsbereichen mit unterschiedlicher Konfiguration (z.B. Auftretenshäufigkeit und Länge), gemäß einem Ausführungsbeispiel. Dabei beschreibt in Fig. 8 die Abszisse die Zeit.

Dargestellt in Fig. 8 ist die Koexistenz längerer, seltener auftretender Aktivierungsbereiche 162_1 sowie kürzerer, häufiger auftretender Aktivierungsbereiche 162_2. Die Bereiche können sich dabei zeitlich überlappen, ggf. können sogar identische Ressourcenelemente von den unterschiedlich konfigurierten Aktivierungsbereichen 162_1, 162_2 genutzt werden.

Als weiteres Beispiel kommt eine Anordnung der unterschiedlich konfigurierten Aktivierungsbereiche auch ohne zeitliche Überlappung in Frage, wie dies in Fig. 9 gezeigt ist.

Fig. 9 zeigt in einem Diagramm eine zeitlich nicht überlappende Abfolge von Aktivierungsbereichen mit unterschiedlicher Konfiguration (z.B. Auftretenshäufigkeit und Länge), gemäß einem Ausführungsbeispiel. Dabei beschreibt in Fig. 9 die Abszisse die Zeit.

## 4. Auswahl des für die Übertragung der Aktivierungsinformation zuverlässigsten Frequenzkanals

Da die Übertragung der Aktivierungsinformation aus Gründen der Leistungseffizienz i.d.R. in einem oder wenigen einzelnen Ressourcenelementen erfolgt, ist hierfür eine besonders hohe Übertragungssicherheit anzustreben. Für den Fall, dass das Endgerät 106 zur Aussendung der Aktivierungsinformation 123 mehrere unterschiedliche Frequenzkanäle zur Auswahl hat, ist eine Übertragung auf dem/den Frequenzkanal/Frequenzkanälen vorteilhaft, bei welchen mit der besten Übertragungsqualität (d.h. der höchsten Übertragungssicherheit) zu rechnen ist.

Die Übertragungsqualität wird sowohl durch die Frequenzselektivität des Kanals mitbestimmt (frequenzkanalabhängige Kanaldämpfung) als auch durch - ggf. statistisch gehäufte - Störungen von bestimmten Kanälen durch andere Funkteilnehmer (frequenzkanalabhängige Interferenz). Hinsichtlich der Frequenzselektivität gilt das Reziprozitätsprinzip, d.h. die Funkkanaldämpfung zwischen zwei Teilnehmern ist in beiden Übertragungsrichtungen (Uplink und Downlink) identisch.

Um eine Schätzung der Übertragungsqualität im Uplink zur erhalten, kann das Endgerät 106 die Qualität der Übertragung im Downlink in Abhängigkeit vom Frequenzkanal evaluieren und auf dieser Basis den besten verfügbaren Frequenzkanal zur Übertragung der Aktivierungsinformation auswählen. Zur Schätzung der Übertragungsqualität stehen eine Reihe von Verfahren nach dem Stand der Technik zur Verfügung (z.B. Ermittlung des Signalzu-Interferenz-plus-Rausch-Verhältnisses (SINR)). Die Schätzung der frequenzkanalabhängigen Übertragungsqualität kann sowohl auf der Basis von dediziert von der Basisstation an das Endgerät gesendeten Signalen erfolgen als auch auf Grundlage von regelmäßig von der Basisstation ausgesendeten Signalen für eine Vielzahl von Teilnehmern, wie z.B. das Beacon-Signal.

Die Aussendung der Aktivierungsinformation durch das Endgerät 106 erfolgt vorteilhafterweise auf dem/den am wenigsten gestörten Frequenzkanal-/kanälen, welche(r) dafür zur Verfügung steht/stehen.

## 5. Kanalzugriffsmuster für untereinander unkoordinierte Netzwerke

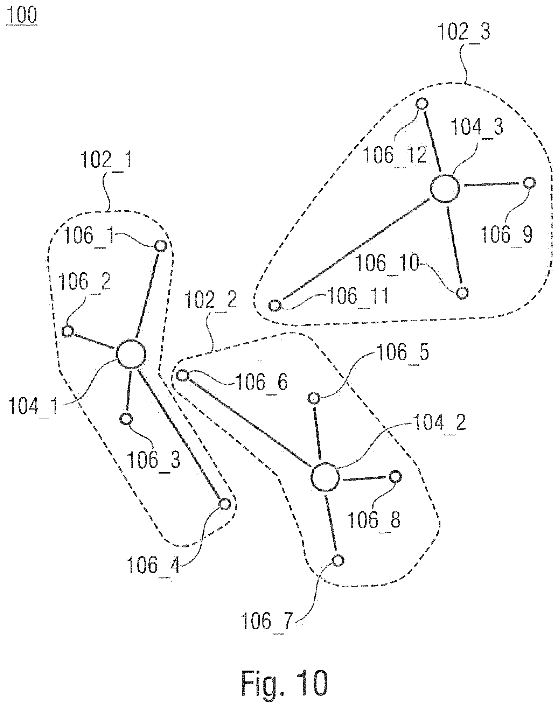

Fig. 10 zeigt ein schematisches Blockschaltbild einer Kommunikationsanordnung 100 mit einem ersten Kommunikationssystem 102_1, gemäß einem Ausführungsbeispiel der vorliegenden Erfindung.

Das erste Kommunikationssystem 102_1 kann eine Basisstation 104_1 und ein oder mehrere Endpunkte 106_1-106_n aufweisen, wobei n eine natürliche Zahl größer gleich eins ist. In dem in Fig. 10 gezeigten Ausführungsbeispiel weist das erste Kommunikationssystem 102_1 zur Veranschaulichung vier Endpunkte 106_1-106_4 auf, das erste Kommunikationssystem 104_1 kann jedoch genauso 1, 10, 100, 1.000, 10.000 oder sogar 100.000 Endpunkte aufweisen.

Das erste Kommunikationssystem 102_1 kann ausgebildet sein, um in einem Frequenzband (z.B. einem lizenzfreien und/oder genehmigungsfreien Frequenzband, z.B. ISM Band), welches von einer Mehrzahl von Kommunikationssystemen zur Kommunikation genutzt wird, drahtlos zu kommunizieren. Das Frequenzband kann dabei eine wesentlich größere (z.B. um zumindest den Faktor zwei größere) Bandbreite aufweisen als Empfangsfilter der Teilnehmer des ersten Kommunikationssystems 102_1.

In Reichweite des ersten Kommunikationssystems 102_1 können - wie dies in Fig. 10 angedeutet ist - beispielsweise ein zweites Kommunikationssystem 102_2 und ein drittes Kommunikationssystem 102_3 sein, wobei diese drei Kommunikationssysteme 102_1, 102_2 und 102_3 das gleiche Frequenzband zur drahtlosen Kommunikation nutzen können.

Bei Ausführungsbeispielen kann das erste Kommunikationssystem 102_1 ausgebildet sein, um basierend auf einem Kanalzugriffsmuster unterschiedliche Frequenzen oder Frequenzkanäle des Frequenzbands (z.B. in die das Frequenzband unterteilt ist) abschnittsweise (z.B. zeitschlitzweise) für die Kommunikation zu nutzen, unabhängig davon ob diese von einem anderen Kommunikationssystem (z.B. dem zweiten Kommunikationssystem 102_2 und/oder dem dritten Kommunikationssystem 102_3) verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen (z.B. dem zweiten Kommunikationssystem 102_2) auf das Frequenzband zugreift, unterscheidet.

In einer solchen Kommunikationsanordnung 100, wie sie in Fig. 10 gezeigt ist, können die Signale untereinander unkoordinierter Kommunikationssysteme (z.B. das erste Kommunikationssystem 102_1 und das zweite Kommunikationssystem 102_2) somit durch unterschiedliche Kanalzugriffsmuster voneinander getrennt werden, so dass eine wechselseitige Störung durch Interferenzen vermieden oder minimiert wird.

Beispielsweise können Teilnehmer des ersten Kommunikationssystems 102_1, wie z.B. eine Basisstation 104_1 und mehrere Endpunkte 106_1-106_4, basierend auf einem ersten Kanalzugriffsmuster (z.B. welches eine für die Kommunikation des ersten Kommunikationssystems 102_1 verwendbare frequenzsprungbasierte Belegung (z.B. von Ressourcen) des Frequenzbands angibt) drahtlos untereinander kommunizieren, während Teilnehmer des zweiten Kommunikationssystems 102_2, wie z.B. eine Basisstation 104_2 und mehrere Endpunkte 106_5-106_8, basierend auf einem zweiten Kanalzugriffsmuster (z.B. welches eine für die Kommunikation des zweiten Kommunikationssystems 102_2 verwendbare frequenzsprungbasierte Belegung (z.B. von Ressourcen) des Frequenzbands angibt) drahtlos untereinander kommunizieren, wobei das erste Kanalzugriffsmuster und das zweite Kanalzugriffsmuster unterschiedlich sind (z.B. eine Überlappung in den verwendeten Ressourcen von weniger als 20% aufweisen, im Idealfall keine Überlappung aufweisen).

Wie bereits erwähnt, sind die Kommunikationssysteme (z.B. das erste Kommunikationssystem 102_1 und das zweite Kommunikationssystem 102_2) untereinander unkoordiniert.

Dass die Kommunikationssysteme 102_1, 102_2, 102_3 untereinander unkoordiniert sind, bezieht sich hierin darauf, dass die Kommunikationssysteme untereinander (= zwischen den Kommunikationssystemen) keine Information über das jeweils verwendete Kanalzugriffsmuster austauschen, oder mit anderen Worten, dass ein Kommunikationssystem keine Kenntnis über das von einem anderen Kommunikationssystem verwendete Kanalzugriffsmuster hat. Dem ersten Kommunikationssystem 102_1 ist somit nicht bekannt, welches Kanalzugriffsmuster von einem anderen Kommunikationssystem (z.B. dem zweiten Kommunikationssystem 102_2) verwendet wird.

Ausführungsbeispiele beziehen sich somit auf eine Kommunikationsanordnung 100 von untereinander unkoordinierten und ggf. untereinander auch unsynchronisierten Funknetzwerken (oder Kommunikationssystemen) 102_1, 102_2 zur Datenübertragung, die auf ein gemeinsam genutztes Frequenzband zugreifen. Mit anderen Worten, es gibt zumindest zwei Funknetzwerke 102_1, 102_2, welche jeweils unabhängig voneinander arbeiten. Beide Netzwerke 102_1, 102_2 setzen dabei das gleiche Frequenzband ein.

Bei Ausführungsbeispielen wird davon ausgegangen, dass bei jeder einzelnen Datenübertragung jeweils nur ein (kleiner) Teil des Frequenzbandes genutzt wird, wie z.B. ein Frequenzkanal oder ein Teilfrequenzkanal. Beispielsweise kann das Frequenzband in (Teil-)Frequenzkanäle zerlegt werden, wobei ein Frequenzkanal eine echte Teilmenge des gesamten Frequenzbandes ist. Die Gesamtheit aller zur Verfügung stehenden Frequenzkanäle konstituiert dabei das genutzte Frequenzband. Die Übertragung einer Nachricht (Datenpaket) kann z.B. im Telegram-Splitting-Verfahren nacheinander über eine Folge unterschiedlicher Frequenzkanäle erfolgen. In diesem Falle sind Ausführungsbeispiele von besonderem Nutzen.

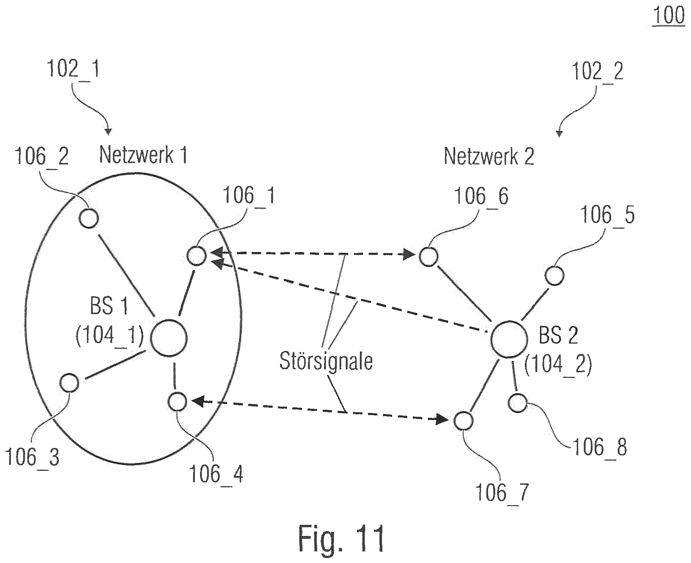

Oftmals sind Netzwerke (oder Kommunikationssysteme) 102_1, 102_2 örtlich so angeordnet, dass Sendesignale von Teilnehmern eines Netzwerks (z.B. des Kommunikationssystems 102_2) auch von Teilnehmern anderer, in der Nähe befindlicher Netzwerke (z.B. des Kommunikationssystems 102_1) empfangbar sind. Mithin treten sie dort als Störsignale (Interferenzen) auf, welche die Leistungsfähigkeit eines Funkübertragungssystems grundsätzlich erheblich beeinträchtigen können, wie dies in Fig. 11 gezeigt ist.

Im Detail zeigt Fig. 11 eine schematische Ansicht von zwei untereinander unkoordinierten Netzwerken 102_1, 102_2 mit je einer Basisstation (BS 1) 104_1, (BS 2) 104_2 und jeweils vier zugehörigen Endgeräten 106_1-106_4, 106_5-106_8. Mit anderen Worten, Fig. 11 zeigt eine beispielhafte Netzwerktopologie für zwei Netzwerke 102_1, 102_2 mit Basisstationen (BS 1) 104_1, (BS 2) 104_2 sowie jeweils vier Endgeräten 106_1-106_4, 106_5-106_8. Die rot gestrichelten Pfeile 108 symbolisieren exemplarisch potentielle Störsignale, d.h. die Funkteilnehmer können die Sendesignale der Teilnehmer aus dem jeweils anderen Netzwerk als Störsignale empfangen. Je nach Gegebenheit kann eine Vielzahl von Netzwerken untereinander in Empfangsreichweite sein, sodass die Teilenehmer (Basisstationen oder Endgeräte) ggf. einer erheblichen Zahl von Störern aus anderen Netzwerken ausgesetzt sein können.

Wird (wie oben erwähnt) das Frequenzband als gemeinsam genutzte Ressource in einzelne, nichtüberlappende Frequenzkanäle unterteilt, so kann die Auswirkung der Störsignale signifikant reduziert werden. In untereinander koordinierten Netzwerken kann jedem Netzwerk ein Teil des Frequenzbands (eine Menge an Frequenzkanälen) exklusiv zugeordnet werden, sodass die wechselseitige Störung (Interferenz) minimiert werden kann. In gänzlich unkoordinierten Netzwerken ist dies nicht möglich.

Bei Ausführungsbeispielen wird daher der Zugriff auf das physikalische Übertragungsmedium (d.h. den physikalischen Funkkanal) in jedem Netzwerk so ausgestaltet, dass zumindest eins aus

a) der Kanalzugriff, d.h. die Frequenz- und Zeitbelegung des Funkkanals, in einem Netzwerk, möglichst wenig Überlappung in Zeit und Frequenz mit dem Kanalzugriff in anderen Netzwerken desselben Standards hat (hoher Grad an "Orthogonalität"),

b) der Kanalzugriff innerhalb gewünschter Vorgaben (z.B. mittlere Zugriffshäufigkeit pro Zeit) einen (pseudo-)zufälligen Charakter hat ("Zufälligkeit"),

c) soweit nach den Vorgaben vermeidbar zwischen Netzwerken keine längeren Sequenzen von (in Zeit und Frequenz) identischem Kanalzugriff auftreten ("Vermeidung systematischer Überlappungen"),

d) alle Frequenzkanäle innerhalb des Frequenzbandes möglichst gleichmäßig genutzt werden, um eine möglichst hohe Frequenzdiversität sowie ggf. die Einhaltung behördlicher, regulatorischer Vorgaben zu erzielen ("Gleichverteilung der Frequenzkanalnutzung"),

e) die Information über Frequenz- und Zeitbelegung des Funkkanals z.B. für zu einem Netzwerk neu hinzukommende Teilnehmer mit möglichst geringem Signalisierungsaufwand übermittelt werden kann ("Reduzierung von Signalisierungsinformation"),

erfüllt ist.

Vereinfacht ausgedrückt wird bei Ausführungsbeispielen eine wechselseitige Störung zwischen mehreren Netzwerken (Inter-Netzwerk-Interferenz) dadurch reduziert, dass der Kanalzugriff auf das gemeinsam genutzte Frequenzband in Frequenz und Zeit unterschiedlich, bevorzugt möglichst "orthogonal" und mit (pseudo-)zufälligem Charakter, erfolgt.

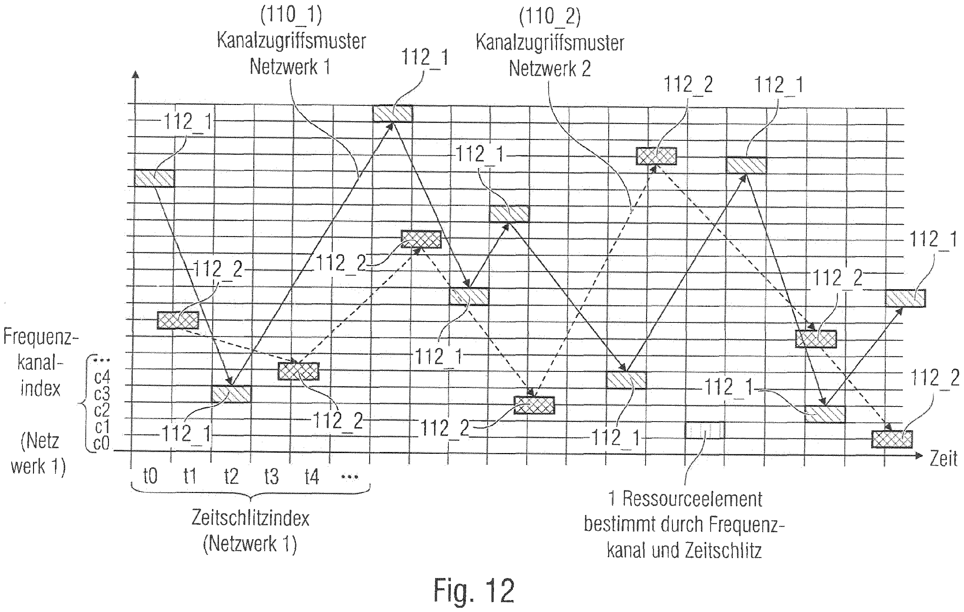

Im Folgenden wird zur Veranschaulichung davon ausgegangen, dass neben der Aufteilung des Frequenzbandes in diskrete Frequenzkanäle (Indizes c0, c1, c2,...) auch eine zeitliche Diskretisierung der Zugriffe innerhalb eines jeden Netzwerks erfolgt. Die zugehörigen zeitlichen Ressourcen werden als Zeitschlitze (engl. Timeslots) bezeichnet und sind in Fig. 12 mit den Indizes t0, t1, t2,... versehen. Beide Anforderungen (Diskretisierung in Frequenz und Zeit) sind jedoch nicht notwendige Voraussetzungen für die Anwendung von Ausführungsbeispielen.

Im Detail zeigt Fig. 12 in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands. Dabei beschreibt die Ordinate die Frequenzkanalindizes und die Abszisse die Zeitschlitzindizes.

Beispielsweise können Teilnehmer des ersten Kommunikationssystems 102_1 basierend auf dem ersten Kanalzugriffsmuster 110_1, welches eine für die Kommunikation des ersten Kommunikationssystems 102_1 verwendbare frequenzsprungbasierte Belegung von Ressourcen des Frequenzbands angibt, drahtlos untereinander kommunizieren, während Teilnehmer des zweiten Kommunikationssystems 102_2 basierend auf dem zweiten Kanalzugriffsmuster 110_2, welches eine für die Kommunikation des zweiten Kommunikationssystems 102_2 verwendbare frequenzsprungbasierte Belegung von Ressourcen des Frequenzbands angibt, drahtlos untereinander kommunizieren, wobei das erste Kanalzugriffsmuster und das zweite Kanalzugriffsmuster unterschiedlich sind (z.B. eine Überlappung von weniger als 20% aufweisen, im Idealfall keine Überlappung aufweisen).

Mit anderen Worten, Fig. 12 zeigt in Form eines Gitterrasters eine Übersicht aller grundsätzlich verfügbaren Ressourcen in Frequenz und Zeit (schematische Darstellung der Frequenzkanäle und Zeitschlitze sowie beispielhafte Kanalzugriffsmuster), wobei ein einzelnes Ressourcenelement im ersten Kommunikationsnetzwerk 102_1 durch Zuordnung eines Frequenzkanalindex und eines Zeitschlitzindex bestimmt ist. Beispielhaft sind die durch das erste Kommunikationsnetzwerk 102_1 belegbaren Ressourcen die mit Bezugszeichen 112_1 gekennzeichneten Ressourcenelemente. Die Menge aller innerhalb eines Kommunikationsnetzwerks belegbaren Ressourcen stellt ein Kanalzugriffsmuster 110_1 dar. Für das erste Kommunikationsnetzwerk 102_1 sind dies alle durch Bezugszeichen 112_1 gekennzeichnete Ressourcenelemente, die durch Pfeile verbunden sind. In äquivalenter Weise ist das Kanalzugriffsmuster eines weiteren Kommunikationsnetzwerks (z.B. des zweiten Kommunikationsnetzwerks 102_2) in Fig. 12 beispielhaft eingetragen (alle durch Bezugszeichen 112_2 gekennzeichneten Ressourcenelemente, die durch Pfeile verbunden sind), welches nicht im selben Frequenz- und Zeitraster wie das erste Kommunikationsnetzwerk 102_1 verankert ist (Ressourcenelemente sind in Frequenz und Zeit aus dem Grundraster vom ersten Kommunikationsnetzwerk 102_1 verschoben).

Wichtig ist die Unterscheidung zwischen

- allen grundsätzlich (maximal) verfügbaren Ressourcenelementen, d.h. die Gesamtmenge aller Ressourcenelemente, aus denen das Kanalzugriffsmuster eine geeignete Untermenge auswählt (in Fig. 12 z.B. alle Elemente des Gitternetzes),
- allen in das Kanalzugriffsmuster tatsächlich aufgenommenen Ressourcenelementen (in Fig. 12 alle mit Bezugszeichen 112_1 versehenen Ressourcenelemente) und
- der Menge an Ressourcenelementen (des Kanalzugriffsmusters), die im Netzwerk tatsächlich für eine Datenübertragung belegt werden (es könnte bei geringem Datenaufkommen z.B. nur jedes dritte im Kanalzugriffsmuster vorhandene Ressourcenelement tatsächlich genutzt werden).

Die Gestaltung des Kanalzugriffsmusters bedeutet somit auch eine Festlegung des aktiv nutzbaren Ressourcenvorrats für dieses Kommunikationsnetzwerk (oder Kommunikationssystems).

Im Folgenden werden Ausführungsbeispiele von Basisstationen, Endpunkten und/oder Kommunikationssystemen beschrieben, die zur Kommunikation Kanalzugriffsmuster nutzten, die zumindest eines der oben genannten Kriterien a) bis e) erfüllen. Ferner werden im Folgenden Ausführungsbeispiele der Erzeugung solcher Kanalzugriffsmuster beschrieben.

## 5.1 Basisstation, Endpunkt und Kommunikationssystem

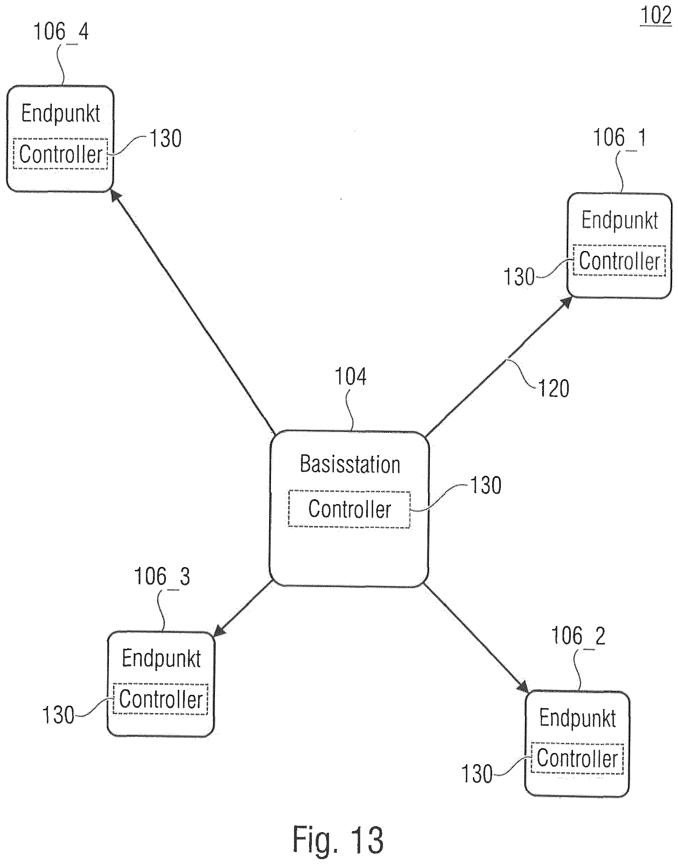

Fig. 13 zeigt ein schematisches Blockschaltbild eines Kommunikationssystems 102 mit einer Basisstation 104 und einer Mehrzahl von Endpunkten 106_1-106_4, gemäß einem Ausführungsbeispiel.

Wie in Fig. 13 gem. einem Ausführungsbeispiel gezeigt ist, kann das Kommunikationssystem 102 eine Basisstation und vier Endpunkte 106_1-106_4 aufweisen. Die vorliegende Erfindung ist jedoch nicht auf solche Ausführungsbeispiele beschränkt, vielmehr kann das Kommunikationssystem ein oder mehrere Endpunkte 106_1-106_n aufweisen, wobei n eine natürliche Zahl größer gleich eins ist. Beispielsweise kann das Kommunikationssystem 1, 10, 100, 1.000, 10.000 oder sogar 100.000 Endpunkte aufweisen.

Die Teilnehmer (= Basisstation 104 und Endpunkte 106_1-106_4) des in Fig. 13 gezeigten Kommunikationssystems nutzen zur gegenseitigen Kommunikation ein Frequenzband (z.B. ein lizenzfreies und/oder genehmigungsfreies Frequenzband, z.B. ISM Band), welches von einer Mehrzahl von Kommunikationssystemen zur Kommunikation genutzt wird, wie dies oben in Bezug auf die Fig. 1 bis 3 erläutert wird. Das Kommunikationssystem 102 arbeitet dabei unkoordiniert in Bezug auf die anderen Kommunikationssysteme, die das gleiche Frequenzband nutzen.

Bei Ausführungsbeispielen kann die Basisstation 104 ausgebildet sein, um ein Signal 120 zu senden, wobei das Signal 120 eine Information über ein Kanalzugriffsmuster 110 aufweist, wobei das Kanalzugriffsmuster eine für die Kommunikation des Kommunikationssystems 102 verwendbare frequenz- und/oder zeitsprungbasierte Belegung (z.B. von Ressourcen) des Frequenzbands angibt (z.B. eine zeitliche Abfolge von für die Kommunikation des Kommunikationssystems verwendbaren (z.B. über das Frequenzband verteilten) Frequenzressourcen), wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann der Zustand des Zahlenfolgengenerators ein innerer Zustand des Zahlenfolgengenerators sein, wobei von dem inneren Zustand des Zahlenfolgengenerators eine Zahl der Zahlenfolge abgeleitet werden kann. Basierend auf dem inneren Zustand des Zahlenfolgengenerators können auch auf den inneren Zustand des Zahlenfolgengenerators folgende innere Zustände des Zahlenfolgengenerators ermittelt werden, von denen auch folgende Zahlen der Zahlenfolge abgeleitet werden können. Beispielsweise kann die Zahl der Zahlenfolge direkt von dem inneren Zustand des Zahlenfolgengenerators abgeleitet werden (z.B. Zustand = Zahl), z.B. bei der Implementierung des Zahlenfolgengenerators als Zähler, oder aber über eine Abbildungsfunktion, z.B. bei der Implementierung des Zahlenfolgengenerators als Schieberegister, ggf. mit Rückkoppelung.

Bei Ausführungsbeispielen kann zumindest einer der Endpunkte 106_1-106_4 ausgebildet sein, um das Signal 120 mit der Information über das Kanalzugriffsmuster 110 zu empfangen, und um das Kanalzugriffsmuster 110 basierend auf der Information über das Kanalzugriffsmuster zu ermitteln, wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann die Basisstation 104 und/oder zumindest einer der Endpunkte 106_1-106_4 ausgebildet sein, um das Kanalzugriffsmuster in Abhängigkeit von dem Zustand des Zahlenfolgengenerators pseudozufällig zu ermitteln, wie z.B. unter Verwendung einer pseudozufälligen Abbildungsfunktion.

Ferner kann die Basisstation 104 und/oder zumindest einer der Endpunkte 106_1-106_4 ausgebildet sein, um das Kanalzugriffsmuster in Abhängigkeit von einer individuellen Information des Kommunikationssystems (z.B. einer immanenten Information des Kommunikationssystems, wie z.B. einem netzwerkspezifischen Identifikator) pseudozufällig zu ermitteln.

Im Folgenden werden Ausführungsbeispiele der Erzeugung von Kanalzugriffsmustern beschrieben. Die Kanalzugriffsmuster werden hierbei durch die Basisstation 104 erzeugt und können basierend auf dem Signal mit der Information 120 über das Kanalzugriffsmuster von zumindest einem (oder allen) der in Fig. 13 gezeigten Endpunkte 106_1-106_4 ermittelt werden, beispielsweise durch jeweils einen Controller (Steuergerät, Steuereinheit) 130, der in die Basisstation 104 und/oder in die Endpunkte 106_1-106_4 implementiert ist. Die Vorgabe der Kanalzugriffsmuster erfolgt hierbei (ausschließlich) durch die Basisstation 104, während die Endpunkte 106_1-106_4 das Kanalzugriffsmuster nur "kennen", also nach derselben Methode generieren wie die Basisstation 104.

Dabei wird in der folgenden Beschreibung von einem Funkübertragungssystem (oder einer Kommunikationsanordnung) mit mehreren unabhängigen, untereinander unkoordinierten Kommunikationsnetzwerken ausgegangen, deren Teilnehmer wechselseitig in Empfangsreichweite sind, sodass Sendesignale von Teilnehmern eines Netzwerks potentiell als Störsignale für Teilnehmer anderer Netzwerke in Betracht kommen. Für die Anwendung von Ausführungsbeispielen ist es nicht nötig, dass Information (Daten oder Signalisierungsinformation) zwischen unterschiedlichen Netzwerken ausgetauscht wird. Ebenso ist es unerheblich, ob die Netzwerke untereinander zeitlich und/oder in der Frequenz synchronisiert sind.

Ferner wird vorausgesetzt, dass es innerhalb jedes Netzwerks eine koordinierende Instanz gibt (im Folgenden "Basisstation" genannt), welche den nicht-koordinierenden Teilnehmern des Netzwerks (im Folgenden "Endgeräte" oder "Endpunkte" genannt) Information über das innerhalb des Netzwerks angewandte Kanalzugriffsmuster übermitteln kann. Diese Information kann z.B. über regelmäßig ausgesendete Baken-Signale (engl. Beacon) übertragen werden, jedoch auch in unregelmäßigen Abständen übertragen werden oder ggf. dediziert an einzelne Endgeräte oder Gruppen von Endgeräten.

Des Weiteren wird davon ausgegangen, dass das gesamte, zur Übertragung zur Verfügung stehende Frequenzband in eine Vielzahl von einzelnen Frequenzkanälen unterteilt ist, auf die jeweils einzeln oder in Teilmengen (Gruppen von Frequenzkanälen) zugegriffen werden kann.

Ohne Einschränkung der Allgemeinheit und zur besseren Veranschaulichung wird in den folgenden Ausführungen davon ausgegangen, dass innerhalb jedes Netzwerks ein festes, diskretes Zeitraster existiert, zu welchem Kanalzugriffe erfolgen können (siehe auch Fig. 12). Ein Kanalzugriff in Form von Aussendung eines Signals kann sowohl durch Endgeräte als auch durch die Basisstation erfolgen. Ein Kanalzugriff muss jedoch in einer im Kanalzugriffsmuster dafür vorgesehenen Ressource nicht notwendigerweise erfolgen, falls z.B. keine Daten oder sonstigen Informationen zur Übertragung anstehen.

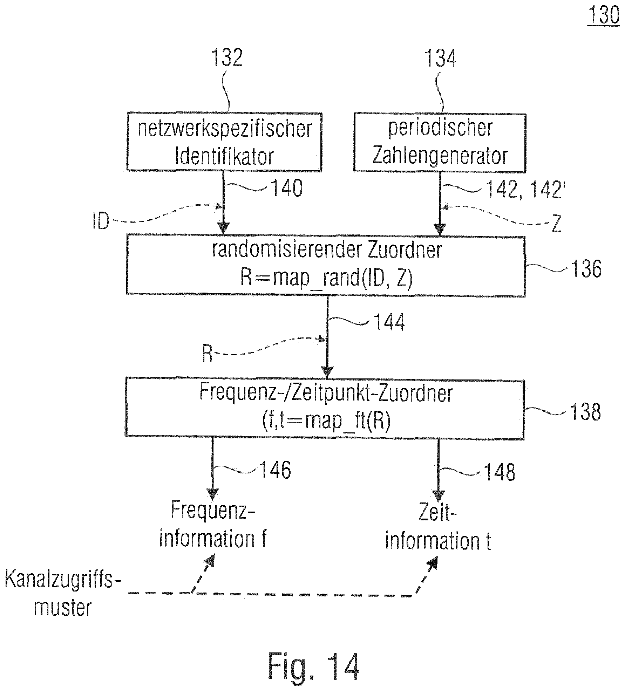

Fig. 14 zeigt ein schematisches Blockschaltbild eines Controllers 130 zur Erzeugung eines Kanalzugriffsmusters, gemäß einem Ausführungsbeispiel der vorliegenden Erfindung.

Wie in Fig. 14 zu erkennen ist, kann der Controller 130 einen Speicher 132, einen periodischen Zahlenfolgengenerator 134 zur Erzeugung einer periodischen Zahlenfolge Z, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der periodische Zahlenfolgengenerator 134 kann ausgebildet sein, um seinen Zustand 142 oder eine von seinem Zustand abgeleitete Zahl 142' der periodischen Zahlenfolge bereitzustellen. Der randomisierende Zuordner 136 kann ausgebildet sein, um in Abhängigkeit von dem Zustand 142 des Zahlenfolgengenerators 134 oder der davon abgleiten Zahl 142' der periodischen Zahlenfolge und des netzwerkspezifischen Identifikators ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Der Controller 130 kann beispielsweise - wie dies in Fig. 13 angedeutet ist - in der Basisstation 104 und/oder in dem einen oder den mehreren Endpunkt(en) 106_1-106-4 implementiert sein, um das von dem Kommunikationssystem 102 verwendete individuelle (oder Netzwerkindividuelle) Kanalzugriffsmuster zu berechnen.

Mit anderen Worten, Fig. 14 zeigt die Grundstruktur zur Erzeugung von Kanalzugriffsmustern, gemäß einem Ausführungsbeispiel der vorliegenden Erfindung.

Die Erzeugung der Kanalzugriffsmuster erfolgt iterativ, d.h. die in Fig. 14 dargestellten Blöcke werden einmal pro Erzeugung einer einzelnen Kanalzugriffsinformation aufgerufen. Durch N-maligen Aufruf wird somit ein Kanalzugriffsmuster mit N Kanalzugriffen generiert.

Die Funktion der Teilblöcke wird im Folgenden im Detail erläutert. Es wird der Begriff "Zahl" verwendet. Dabei handelt es sich allgemein um diskrete Information, welche in unterschiedlicher Darstellung (z.B. in dezimaler Form, als binäre Sequenz o.Ä.) vorliegen kann.

Netzwerkspezifischer Identifikator "ID"

Beim netzwerkspezifischen Identifikator handelt es sich um eine feste Zahl, die von einer äußeren Instanz (z.B. bei Konfiguration des Netzwerks bzw. der koordinierenden Basisstation) festgelegt wird. Idealerweise ist sie von Netzwerk zu Netzwerk unterschiedlich. Beispielsweise könnte es sich um eine eindeutige, hinreichend lange Basisstations-ID, eindeutige Netzwerk-ID oder jeweils einen hinreichend langen Hash darüber handeln. Diese Größe ist fest und variiert als einzige in der gezeigten Anordnung nicht von Aufruf zu Aufruf.

### Periodischer Zahlenaenerator "Z"

Der periodische Zahlengenerator 134 generiert eine sich periodisch mit der Periodizität P wiederholende Folge von Zahlen Z. Er besitzt einen inneren Zustand $S_n$, aus dem sich die nächste erzeugte Zahl und der nächste innere Zustand $S_{n+1}$ eindeutig bestimmen lassen. Das entscheidende Merkmal ist, dass sich bereits aus einem einzigen inneren Zustand (welcher zu einem beliebigen Zeitschritt vorliegt) die gesamte periodische Folge für jeden beliebigen Zeitschritt ableiten lässt. Ein einfaches Ausführungsbeispiel ist z.B. ein Modulo-P-Zähler, der periodisch die Zahlenfolge 0,1,2...(P-1) liefert. Ein weiteres Ausführungsbeispiel ist ein deterministischer Zufallszahlengenerator (engl. pseudo random number generator), z.B. implementiert in Form eine rückgekoppelten Schieberegisters (LFSR). Ein drittes Ausführungsbeispiel ist ein endlicher Körper (engl. Galois field) mit P Elementen.

### Randomisierender Zuordner

Der randomisierende Zuordner 136 generiert aus den beiden Eingangszahlen ID und Z eine Ausgangszahl R, d.h. R=*map_rand*(ID, Z), wobei *map_rand* die Zuordnungsfunktion darstellt. Die Zuordnung hat dabei möglichst zufälligen Charakter, d.h. eine mathematisch korrelierte Eingangssequenz (bestehend aus ID, Z) erzeugt eine möglichst in sich unkorrelierte Ausgangssequenz R.

Ausführungsbeispiele für eine randomisierende Zuordnung sind

- Verkettung der beiden Eingangszahlen
- die Anwendung einer zyklischen Redundanzprüfung (engl. cyclic redundancy check, kurz CRC) auf die Eingangsgrößen ID, Z, welche zur Zahl R führt und randomisierenden Charakter hat,
- die Anwendung einer Hash-Funktion
- die Anwendung einer Verschlüsselung, z.B. AES-Verschlüsselung, wobei der zugehörige Schlüssel dabei allen autorisierten Teilnehmern bekannt ist und was somit auch ein Verfahren zur Einbringung von "transport layer security" (kurz TLS) darstellt.

Die Folge der Elemente der Zahl R ist nach obigen Maßgaben pseudozufälliger Natur. Sie sollte von Netzwerk zu Netzwerk unterschiedlich sein, um Überlappungen der Kanalzugriffsmuster möglichst zu vermeiden.

### Frequenz-/Zeitpunkt-Zuordner

Der Frequenz-/Zeitpunkt-Zuordner 138 ordnet jeder Eingangszahl R mittels einer Abbildung ein 2-Tupel von Frequenzinformation (Funkfrequenz f) und Zeitinformation (Zugriffszeitpunkt t) zu, d.h. (f,t)=*map_ft*(R), wobei "*map_ft*" die Zuordnungsfunktion darstellt. Während die Abfolge der Frequenzen grundsätzlich beliebig innerhalb des vorgegebenen Frequenzbands sein kann, müssen die Zeitpunkte dabei von Aufruf zu Aufruf in monoton ansteigender Form vorliegen, da "Rücksprünge" in der Zeit nicht zulässig sind.

Von besonderer Bedeutung ist als Ausführungsbeispiel der Fall, dass der Kanalzugriff in Frequenz- und Zeitrichtung (wie weiter oben beschrieben) diskretisiert ist, d.h. in Form von diskreten Frequenzkanälen und diskreten Zeitschlitzen erfolgt. In diesem Fall ordnet der Frequenz-/Zeitpunkt-Zuordner jeder Eingangszahl R ein 2-Tupel von Frequenzkanalindex fi und Zeitschlitzindex ti zu, d.h. (fi,ti)=*map_ft*(R). Die Zeitschlitze werden dabei in zeitlich aufsteigender Reihenfolge indiziert, da "Rücksprünge" in der Zeit nicht zulässig sind. Weitere Ausführungen zur Belegung der Zeitschlitze finden sich in Abschnitt 5.3.

Die Abfolge der 2-Tupel (f,t) bzw. (fi, ti) basiert auf der Folge der Elemente von R und definiert das Kanalzugriffsmuster.

Die genaue Gestaltung des Frequenz-/Zeitpunkt-Zuordners bestimmt gemeinsam mit der Wahrscheinlichkeitsfunktion der Zahl R die Zugriffsstatistik auf den Kanal.

### Zustandssignalisierung und Prädizierbarkeit

Die in Fig. 14 gezeigte Anordnung generiert ein Kanalzugriffsmuster, welches sowohl von einem zeitlich unveränderlichen, netzwerkspezifischen Identifikator als auch von einem zustandsabhängigen (und damit zeitlich veränderlichen) periodischen Zahlengenerator (Periodizität P) abhängt. Über den netzwerkspezifischen Identifikator kann sichergestellt werden, dass Netzwerke mit unterschiedlichen netzwerkspezifischen Identifikatoren stets unterschiedliche Sequenzen von R generieren, selbst wenn ihr Zahlengenerator sich im gleichen Zustand befinden sollte. Damit kann sichergestellt werden, dass unterschiedliche Netzwerke keine identischen Kanalzugriffsmuster erzeugen und somit im ungünstigsten Fall in eine "Dauerkollision" der Kanalzugriffe geraten.

Ein Endgerät benötigt zur Ermittlung des im Netzwerk angewandten Kanalzugriffsmusters sowohl den netzwerkspezifischen Identifikator als auch den jeweiligen Zustand des periodischen Zahlengenerators.

Den *netzwerkspezifischen Identifikator* erhält das Endgerät bereits bei der Erstanmeldung beim Netzwerk. Dieser wird vorteilhafterweise mittels regelmäßig von der Basisstation ausgesandter Baken-Signale (beacon) übermittelt und allen autorisierten Endgeräten zugänglich gemacht. Alternativ kann der netzwerkspezifische Identifikator dem Endgerät auch im Zuge der Erstkonfiguration (mit Auslieferung) bekannt gemacht werden, somit also vor der ersten Inbetriebnahme im Netzwerk.

Der Zustand des *periodischen Zahlengenerators* kann entweder in einem regelmäßigen Baken-Signal und/oder in eigenen, dedizierten Zustands-Signalisierungs-Ressourcen übermittelt werden. Ein Zahlengenerator mit Periodizität P hat P interne Zustände, sodass zur Übermittlung des jeweiligen Zustands $\lceil \log_2(P) \rceil$ Bits übertragen werden müssen. Die pro Zustandssignalisierung übertragene Informationsmenge (Anzahl der Bits) kann somit durch die gewählte Periodizität des Zahlengenerators nach Anforderung gesteuert werden.

Die für die Zustandssignalisierung übertragene Information kann in Form mehrerer Teilinformationen übertragen werden, wobei die Übertragung in unterschiedlicher Häufigkeit erfolgen kann. So könnten als Ausführungsbeispiel für den Fall, dass es sich bei dem periodischen Zahlengenerator (Z) um einen Zähler handelt, die höherwertigen Bits (engl. most significant bits (MSBs)) des Zählers getrennt von den niederwertigen Bits (engl. least significant bits (LSBs)) übertragen werden und auch mit einer anderen Häufigkeit (z.B. seltener). Auch wenn es sich nicht um einen Zähler handelt, könnte die gesamte Zustandsinformation in Form mehrerer Teil-Zustandsinformationen mit unterschiedlicher Übertragungshäufigkeit übertragen werden.

Durch die Periodizität des Zahlengenerators kann ein Endgerät, welchem der Zustand des Zahlengenerators zu mindestens einem Zeitpunkt bekannt ist, das gesamte Kanalzugriffsmuster für beliebige Zeitpunkte/Zeitschlitze in der Zukunft bestimmen. Damit ist es dem Endgerät möglich, in einem energiesparenden Ruhezustand z.B. die Sende-/Empfangseinheit zu deaktivieren und bei der nachfolgenden Aktivierung der Sende-/Empfangseinheit den dann gültigen Abschnitt des Kanalzugriffsmusters aus dem letzten zuvor bekannten Zustand zu prädizieren. Eine Aussendung der Zustandsinformation durch die Basisstation kann somit in vergleichsweise großen zeitlichen Abständen erfolgen.

Zusammenfassend hat das hierin beschriebene Verfahren den Vorteil, dass durch die Kombination eines netzwerkspezifischen Identifikators und eines periodischen Zahlengenerators ein vergleichsweise großer Zustandsraum für die (Pseudozufalls-)Zahl R aufgespannt wird. Damit wird verhindert, dass die Kanalzugriffsmuster von Netzwerken mit unterschiedlichen netzwerkspezifischen Identifikatoren identisch sind, womit eine systematische Kollision der Kanalzugriffe verschiedener, untereinander unkoordinierter Netzwerk minimiert werden kann. Dies erweist sich beim Telegram-Splitting-Multiple-Access (TSMA) Verfahren als besonders vorteilhaft.

Vorteilhafte Merkmale des Frequenz-Zeit-Zuordners werden in den folgenden Abschnitten detaillierter ausgeführt.

## Weiteres Ausführungsbeispiel des Controllers

Gemäß Fig. 14 und obiger Beschreibung wird ein periodischer Zahlengenerator 134 benötigt. Dieser wird im folgenden Ausführungsbeispiel wie folgt ersetzt.

Reale Funknetzwerke werden oftmals mit einem Baken-Signal betrieben, welches regelmäßig ausgesendet wird. Jede Baken-Aussendung kann dabei mit einem Zähler versehen werden, welcher einem Baken-Sequenzindex entspricht. Dieser Baken-Sequenzindex wird hier als "Bakenindex" bezeichnet.

Ebenso ist es gebräuchlich, dass in einem zeitschlitzbasierten System die Zeitschlitze mit einem (in Zeitrichtung aufsteigenden) Zeitschlitzindex-Zähler versehen werden (siehe auch Fig. 12). Dieser wird hier als "Zeitschlitzindex" bezeichnet. Der Bakenindex wird in gewissen, im System vorgegebenen Abständen wieder auf null zurückgesetzt, sodass er eine Periodizität aufweist. Entsprechendes gilt für den Zeitschlitzindex (der z.B. nach einer Baken-Aussendung wieder bei null beginnt).

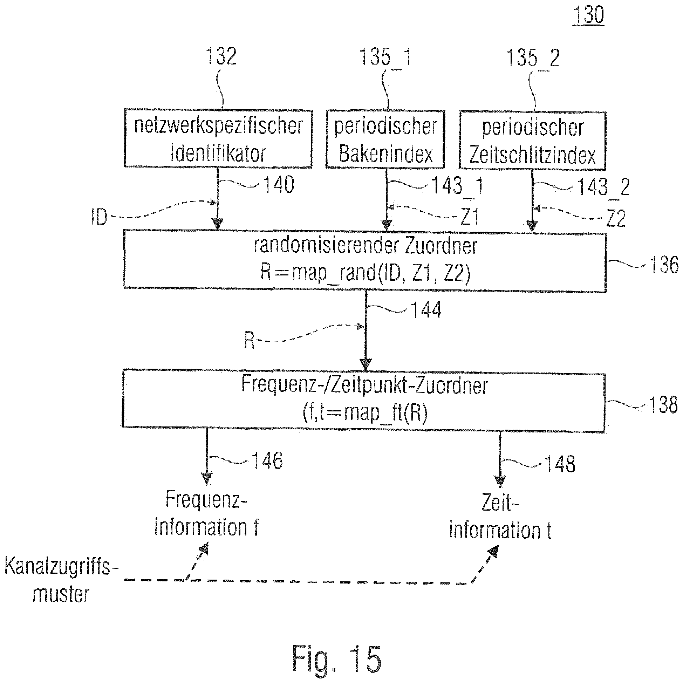

Fig. 15 zeigt ein schematisches Blockschaltbild eines Controllers 130 zur Erzeugung eines Kanalzugriffsmusters, gemäß einem Ausführungsbeispiel der vorliegenden Erfindung.

Der Controller 130 kann einen Speicher 132, einen ersten Zwischenspeicher 135_1, einen zweiten Zwischenspeicher 135_2, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der erste Zwischenspeicher (z.B. ein Register) 135_1 kann ausgebildet sein, um einen periodischen Bakenindex Z1 143_1 vorzuhalten. Der zweite Zwischenspeicher (z.B. ein Register) 135_2 kann ausgebildet sein, um einen periodischen Zeitschlitzindex Z2 143_2 vorzuhalten. Der randomisierende Zuordner 136 kann ausgebildet sein, um in Abhängigkeit von dem periodischen Bakenindex Z1 143_1, dem periodischen Zeitschlitzindex Z2 143_2 und dem netzwerkspezifischen Identifikator ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Mit anderen Worten, Fig. 15 zeigt eine modifizierte Grundstruktur zur Erzeugung von Kanalzugriffsmustern mit Bakenindex und Zeitschlitzindex. In Fig. 15 ist ein Ausführungsbeispiel dargestellt, in welchem gegenüber dem in Fig. 14 gezeigtem Ausführungsbeispiel der periodische Zahlengenerator (Ausgang Z) 134 durch die beiden Blöcke "periodischer Bakenindex" (Ausgang Z1) 135_1 und "periodischer Zeitschlitzindex" (Ausgang Z2) 135_2 ersetzt wurde. Alle weiteren Blöcke sind funktional unverändert (der Randomisierende Zuordner hat nun drei Eingänge).

Die in Fig. 14 und 6 gezeigten Controller 130 ermöglichen die Erzeugung von Netzwerkindividuellen Kanalzugriffsmustern, wobei diese zumindest eine aus folgenden Eigenschaften aufweisen:

- Die Kanalzugriffsmuster enthalten untereinander möglichst wenige überlappende Teilsequenzen,
- es gibt (z.B. in Bereichen mit hoher Netzwerkdichte) einen großen Vorrat von Kanalzugriffsmustern,
- die Kanalzugriffsmuster sind so gestaltet, dass sie eine sehr hohe Periodizität aufweisen,
- die Kanalzugriffsmuster führen (bei Vorliegen entsprechender Anforderungen) zu einer im Mittel gleichmäßigen Nutzung der zur Verfügung stehenden Frequenzkanäle,
- die Signalisierung des angewandten Musters erfolgt durch die koordinierende Instanz mit möglichst wenig Signalisierungsinformation, und
- Endgeräte können, bereits bei einmaligem, vollständigem Erhalt der Signalisierung des Kanalzugriffsmusters den Inhalt des Kanalzugriffsmusters zu beliebigen, zukünftigen Zeitpunkten bestimmen (dies ermöglicht Endgeräten, z.B. aus Energiespargründen längere Empfangspausen einzulegen und bei Wiedereinschalten dennoch das dann jeweils gültige Kanalzugriffsmuster auf der Basis von vor der Empfangspause erhaltener Information zu ermitteln).

### 5.2 Steuerung der Kanalzugriffe im Frequenzbereich

Zur Vereinfachung der folgenden Darstellung wird angenommen, dass der Frequenzbereich (oder das Frequenzband) in diskrete Frequenzkanäle unterteilt ist und dass eine Übertragung nach dem TSMA-Verfahren erfolgt.

Mobilfunkkanäle weisen i.d.R. eine über der Frequenz variierende Signaldämpfung auf. Wird gemäß dem TSMA-Verfahren ein Datenpaket in Form mehrerer Teil-Datenpakete übertragen und ist der zugrundeliegende Mobilfunkkanal im Sender nicht bekannt, so kann die Fehlerrate der Übertragung im Mittel reduziert oder sogar minimiert werden, indem die einzelnen Teil-Datenpakete möglichst über den gesamten Frequenzbereich verteilt übertragen werden (Ausnutzung der Frequenzdiversität).

Aus diesem Grund kann es (insbesondere wenn ein Datenpaket aus nur wenigen Teil-Datenpaketen besteht) vorteilhaft sein, wenn gewährleistet ist, dass die Frequenzkanäle auf denen die Teil-Datenpakete übertragen werden, relativ zueinander einen gewissen (Mindest-)Abstand im Frequenzbereich haben.

Da das Kanalzugriffsmuster innerhalb eines Netzwerks in maßgeblicher Weise das Frequenzsprungverhalten bei TSMA bestimmt, kann mit einem geeigneten Verfahren sichergestellt werden, dass zwischen zwei aufeinanderfolgenden Frequenzkanälen des Kanalzugriffsmusters ein Mindestabstand besteht.

Bei Ausführungsbeispielen kann der Frequenz-/Zeitpunkt-Zuordner 138 (siehe Fig. 14 oder 15) daher ausgebildet sein, um basierend auf der Pseudozufallszahl R eine Frequenzinformation f und eine Zeitinformation t zu ermitteln, wobei die Frequenzinformation f einen Abstand zwischen zwei aufeinanderfolgenden Frequenzkanälen angibt.

Der Frequenz-/Zeitpunkt-Zuordner 138 in Fig. 14 oder 15, der auf Basis der pseudozufälligen Zahl R absolute Frequenzkanäle von Zugriff zu Zugriff unabhängig festlegt, kann also alternativ auch Abstände zwischen zwei aufeinanderfolgenden Frequenzkanälen bestimmen.

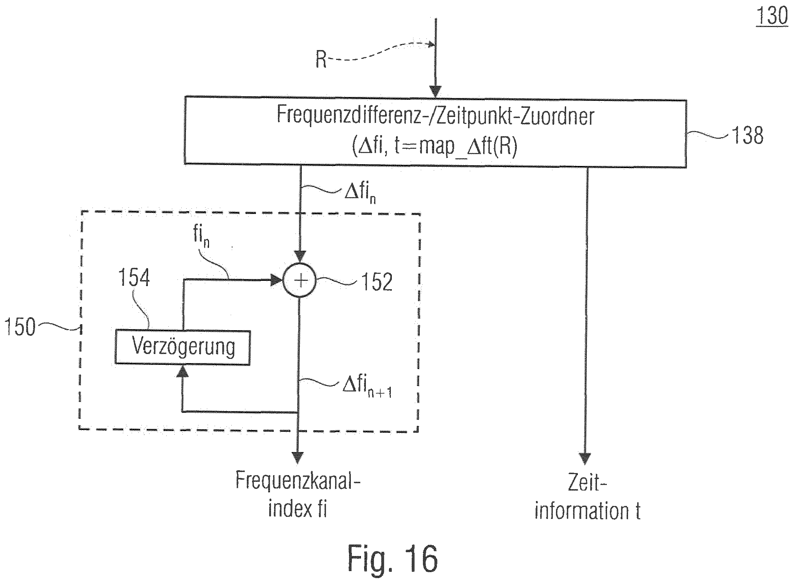

Fig. 16 zeigt ein schematisches Blockschaltbild eines Ausschnitts des Controllers 130, gemäß einem Ausführungsbeispiel. Wie in Fig. 16 zu erkennen ist, kann der Frequenz-/Zeitpunkt-Zuordner 138 (siehe Fig. 14 oder 15) ausgebildet sein, um basierend auf der Pseudozufallszahl R eine Frequenzinformation und eine Zeitinformation zu ermitteln, wobei die Frequenzinformation einen Abstand $\Delta f_{i_n}$ zwischen zwei aufeinanderfolgenden Frequenzkanälen angibt.

Wie in Fig. 16 ferner zu erkennen ist, kann der Controller 130 einen Abbilder 150 aufweisen, der ausgebildet sein kann, um den Abstand $\Delta f_{i_n}$ zwischen zwei aufeinanderfolgenden Frequenzkanälen auf einen Frequenzkanalindex fi abzubilden, beispielsweise durch einen Kombinierer (z.B. Addierer) 152 und ein Verzögerungsglied 154.

Mit anderen Worten, Fig. 16 zeigt die Erzeugung von Frequenzsprüngen mit Mindest- und oder Höchstsprungweite. In Fig. 16 ist dabei veranschaulicht, dass der Frequenz-/Zeitpunkt-Zuordner 138 von Fig. 14 oder 15 nunmehr durch einen Frequenzdifferenz-/Zeitpunkt-Zuordner 138 ersetzt ist, welcher an seinem unmittelbaren Ausgang keine absoluten Frequenzkanalindizes mehr liefert, sondern Frequenzkanalindex-Differenzen.

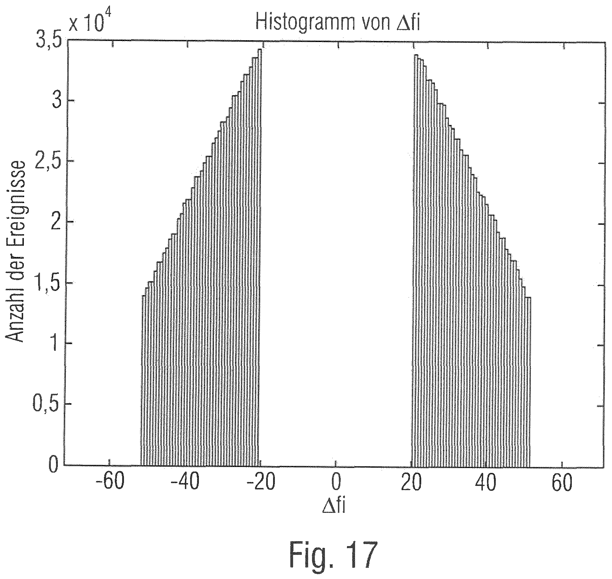

Durch eine geeignete Zuordnungsfunktion $(\Delta fi,t)=map\_\Delta ft(R)$ im Frequenzdifferenz-/Zeitpunkt-Zuordner kann sichergestellt werden, dass nur Frequenzkanalindexsprünge $\Delta fi_n = fi_{n+1} - fi_n$ (von Kanalzugriff n zu Kanalzugriff n+1) erfolgen, welche z.B. innerhalb eines gewünschten Bereichs liegen, z.B. $\Delta fi_{max} \geq \Delta fi \geq \Delta fi_{min}$ für $\Delta fi > 0$ und $\Delta fi_{max} \geq (-\Delta fi) \geq \Delta fi_{min}$ für $\Delta fi < 0$. Für die Implementierung einer solchen Beschränkung gibt es zahlreiche Verfahren, welche selbst nicht Gegenstand der Erfindung sind. Eine beispielhafte Implementierung in Form eines entsprechenden Programmcodes für MATLAB (mit welchem Fig. 17 erzeugt wurde) findet sich im Anhang.

Fig. 17 zeigt in einem Diagramm ein auf einer Monte-Carlo-Simulation beruhendes Histogramm über die Variable $\Delta fi$ (Differenz des Frequenzkanalindex $\Delta fi$ zwischen zeitl. benachbarten Kanalzugriffen).

Im dargestellten Beispiel stehen 72 Frequenzkanäle zur Verfügung. Die den Simulationsergebnissen zugehörigen Parameter sind $\Delta fi_{min} = 21$, $\Delta fi_{max} = 51$, d.h. der Betrag des Abstands zwischen zwei im Kanalzugriffsmuster aufeinanderfolgenden Zugriffen beträgt zwischen 21 und 51 Frequenzkanälen.

Durch geeignete, sich dem Fachmann leicht erschließende Modifikationen des beispielhaften Programmcodes lassen sich andere Verteilungsformen für $\Delta fi$ erzeugen (z.B. Gleichverteilung im Bereich von $-\Delta fi_{min}$ bis $-\Delta fi_{max}$ bzw. $+\Delta fi_{min}$ bis $+\Delta fi_{max}$) als in Fig. 17 gezeigt.

### 5.3 Vorgabe der zeitlichen Kanalzugriffsaktivität

In einem hoch ausgelasteten System können alle verfügbaren Zeitschlitze in das Kanalzugriffsmuster mit aufgenommen werden. In weniger stark ausgelasteten Systemen muss nicht jeder Zeitschlitz für den Kanalzugriff zur Verfügung stehen. Dies ist in der folgenden Abbildung dargestellt.

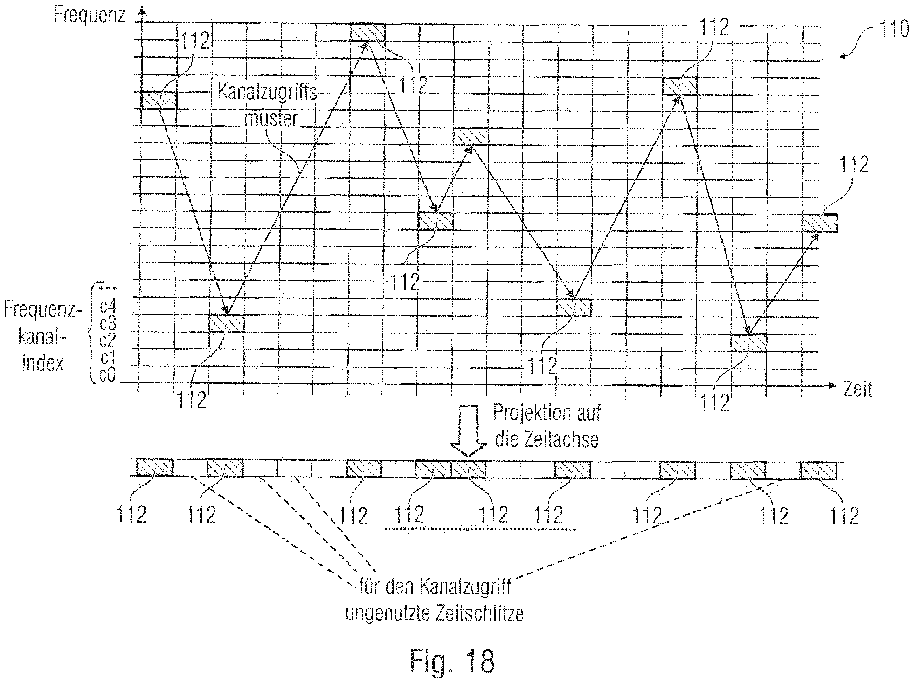

Fig. 18 zeigt in einem Diagramm eine durch ein Kanalzugriffsmuster 110 definierte frequenz- und zeitsprungbasierte Belegung der Ressourcen 112 des Frequenzbands sowie eine Projektion des Kanalzugriffsmusters 110 auf eine Zeitachse, gemäß einem Ausführungsbeispiel der vorliegenden Erfindung. Dabei beschreibt die Ordinate die Frequenzkanalindizes und die Abszisse die Zeitschlitzindizes.

Mit anderen Worten, Fig. 18 zeigt im oberen Teil beispielhaft ein Kanalzugriffsmuster 110 in den Dimensionen Frequenz und Zeit (Ressourcenelemente 112) sowie im unteren Teil dessen Projektion auf die Zeitdimension. Es ist zu erkennen, dass nicht jeder Zeitschlitz Teil des Kanalzugriffsmusters 110 ist.

Damit steht für die Erzeugung eines pseudozufälligen Kanalzugriffsmusters 110 neben der Dimension Frequenz (in Form des Frequenzkanalindex) zusätzlich die Dimension Zeit (in Form des Zeitschlitzindex) zur Verfügung. Bei der Erzeugung eines Kanalzugriffsmusters kann somit eine mittlere Aktivitätsrate A vorgegeben werden. Diese sei hier definiert als mittleres Verhältnis von für den Kanalzugriff genutzten Zeitschlitzen zu insgesamt maximal verfügbaren Zeitschlitzen. Bei Nutzung jedes Zeitschlitzes beträgt die Aktivitätsrate A somit 1 (100%). Wird hingegen im Mittel nur jeder dritte Zeitschlitz ins Kanalzugriffsmuster aufgenommen, so beträgt die mittlere Aktivitätsrate A=1/3.

Die Aktivitätsrate bestimmt also die (zeitliche) Dichte der im Kanalzugriffsmuster 110 angebotenen Ressourcen 112.

Bei Ausführungsbeispielen können die zu einer vorgegebenen Aktivitätsrate für den Kanalzugriff ausgewählten Zeitschlitze pseudozufällig aus einem geeigneten Teil der Pseudozufallszahl R (siehe Fig. 14 oder 15) bestimmt werden.

Ausführungsbeispiel 1

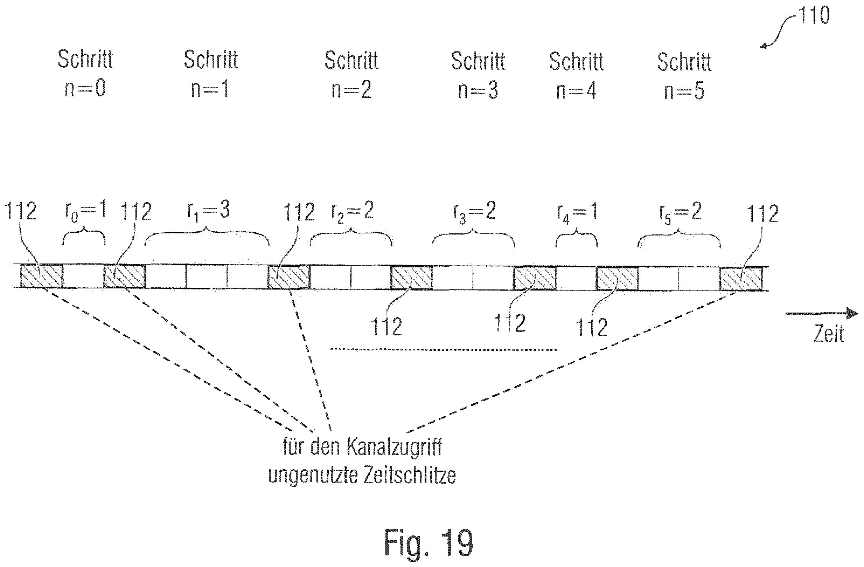

In jedem Schritt n kann aus der zugehörigen Pseudozufallszahl $R_n$ eine ganze Zahl $r_n$ abgeleitet werden, die Werte zwischen $r_{min}$ und $r_{max}$ annehmen kann, d.h. $r_{min} \leq r_n \leq r_{max}$. Nach jedem im Kanalzugriffsmuster 110 aktiven Zeitschlitz kann eine Anzahl von $r_n$ Zeitschlitzen übersprungen werden, diese werden somit nicht für den Kanalzugriff verwendet. Dieser Vorgang ist exemplarisch in Fig. 19 dargestellt.

Im Detail zeigt Fig. 19 in einem Diagramm auf eine Zeitachse projizierte Ressourcenelemente 112 eines Kanalzugriffsmusters 110, die in ungenutzten Zeitschlitzen resultiert, gemäß einem Ausführungsbeispiel.

Mit anderen Worten, Fig. 19 zeigt eine beispielhafte Abfolge von genutzten und ungenutzten Zeitschlitzen, gemäß einem Ausführungsbeispiel.

Wird die Zahl r aus der Zahl R dergestalt abgeleitet, dass die Elemente von r zwischen $r_{min}$ und $r_{max}$ mit gleicher Häufigkeit auftreten (Gleichverteilung), so ergibt sich folgende Aktivitätsrate:

$$A=2/(2+r_{min}+r_{max}).$$

Das im obigen Ausführungsbeispiel vorgestellte Verfahren hat den Vorteil, dass Mindest- und Höchstabstände zwischen den im Kanalzugriffsmuster 110 aktiven Zeitschlitzen vorgegeben werden können. Die Vorgabe von Mindestabständen kann insbesondere bei batteriebetriebenen Geräten vorteilhaft sein, bei denen Sendepausen einer gewissen Mindestlänge zwischen zwei aufeinanderfolgenden Aussendungen (Erholungsphase) die Batterielebensdauer erhöhen.

In vergleichbarer Vorgehensweise lässt sich vorgeben, dass eine Mindestzahl von aktiven Zeitschlitzen direkt aufeinander folgt.

Ausführungsbeispiel 2

Bei einer Implementierung gemäß Ausführungsbeispiel 1 können theoretisch längere Bereiche mit lokal deutlich höherer oder niedrigerer Aktivitätsrate als gewünscht vorkommen. Dieser Effekt wird in dem folgenden Ausführungsbeispiel vermieden.

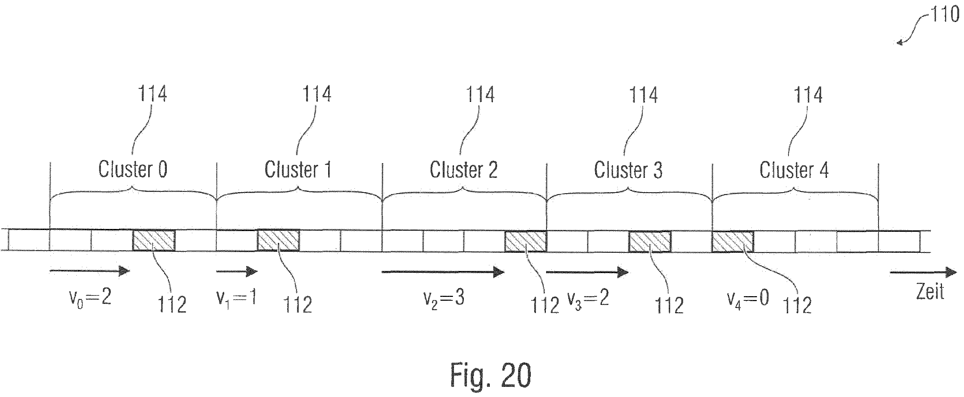

Hierbei werden periodisch Gruppen von aufeinanderfolgenden Zeitschlitzen vorgegeben, innerhalb welcher jeweils ein aktiver Zeitschlitz des Kanalzugriffsmusters platziert wird. Dies ist für eine Aktivitätsrate von 1/4 (25%) in Fig. 20 exemplarisch dargestellt.

Im Detail zeigt Fig. 20 in einem Diagramm auf eine Zeitachse projizierte Ressourcenelemente 112 eines Kanalzugriffsmusters 110 mit einer Aktivitätsrate $A=1/4$, gemäß einem Ausführungsbeispiel.

Mit anderen Worten, Fig. 20 zeigt eine beispielhafte Abfolge von genutzten und ungenutzten Zeitschlitzen, gemäß einem Ausführungsbeispiel.

Wie in Fig. 20 zu erkennen ist, können die Zeitschlitze zu Clustern 114 (im Beispiel von Fig. 20 der Länge 4) gruppiert werden. In jedem Cluster 114 wird genau ein Zeitschlitz des Kanalzugriffsmusters 110 platziert. Die Position der ins Kanalzugriffsmuster 110 aufgenommenen Zeitschlitze innerhalb des Clusters 114 kann durch eine Verschiebung $v_n$ bestimmt werden, welche von der Pseudozufallszahl $R_n$ abgeleitet und die ganzzahlige Werte zwischen 0 und (Clusterlänge-1) annehmen kann.

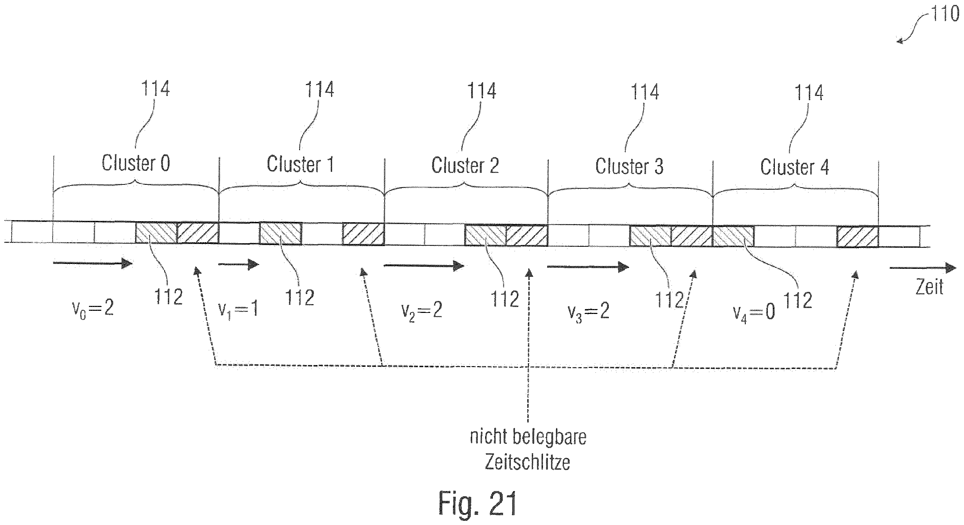

Für den Fall, dass ein Mindestabstand zwischen zwei aufeinanderfolgenden Zeitschlitzen des Kanalzugriffsmusters 110 gewährleistet werden soll, können zwischen den Clustern 114 nicht belegbare Bereiche eingebracht werden. Diese können aus einem oder mehreren Zeitschlitzen bestehen, wie dies in Fig. 21 veranschaulicht ist.

Im Detail zeigt Fig. 21 in einem Diagramm auf eine Zeitachse projizierte Ressourcenelemente 112 eines Kanalzugriffsmusters 110 mit einer Aktivitätsrate $A=1/4$ und einem vorgegebenen Mindestabstand zwischen aufeinanderfolgenden Zeitschlitzen des Kanalzugriffsmusters 110, gemäß einem Ausführungsbeispiel.

Mit anderen Worten, Fig. 21 zeigt eine beispielhafte Abfolge von genutzten und ungenutzten Zeitschlitzen mit nicht belegbaren Zeitschlitzen, gemäß einem Ausführungsbeispiel.

Wie in Fig. 21 zu erkennen ist, verringert sich aufgrund der nicht belegbaren Zeitschlitze der zulässige Bereich der Verschiebungsvariablen $v_n$ auf den Wertebereich von 0 bis (Clusterlänge-1-Länge des nicht belegbaren Bereichs).

Je nach gewählter Aktivitätsrate kann es sein, dass die Cluster 114 unterschiedliche Längen aufweisen müssen, um die gewünschte Aktivitätsrate zu erzielen. In diesem Fall variiert der Wertebereich von $v_n$ entsprechend der jeweiligen Clusterlänge. Um z.B. eine Aktivitätsrate von 40% einzustellen, können sich Cluster der Länge zwei und der Länge drei abwechseln.

**5.4 Kanalzugriffsmuster mit Bereichen unterschiedlicher Aktivitätsrate**

Datenpakete, die den Empfänger möglichst schnell erreichen sollen (kurze Latenzzeit), benötigen bei der Übertragung möglichst dicht aufeinanderfolgende Kanalzugriffe, d.h. eine vergleichsweise hohe Aktivitätsrate im Kanalzugriffsmuster.

Bei Datenpaketen, bei denen hingegen die Übertragungssicherheit (z.B. hohe Robustheit gegen externe Störer) im Vordergrund steht, kann eine Verteilung der Aussendung über einen längeren Zeitraum vorteilhaft sein, mithin also eine vergleichsweise niedrige Aktivitätsrate im Kanalzugriffsmuster günstig sein. Dasselbe gilt für Geräte, bei denen eine zeitlich entzerrte Energieentnahme aus der Batterie (zeitlich gestreckte Sendeaktivität) gewünscht wird.

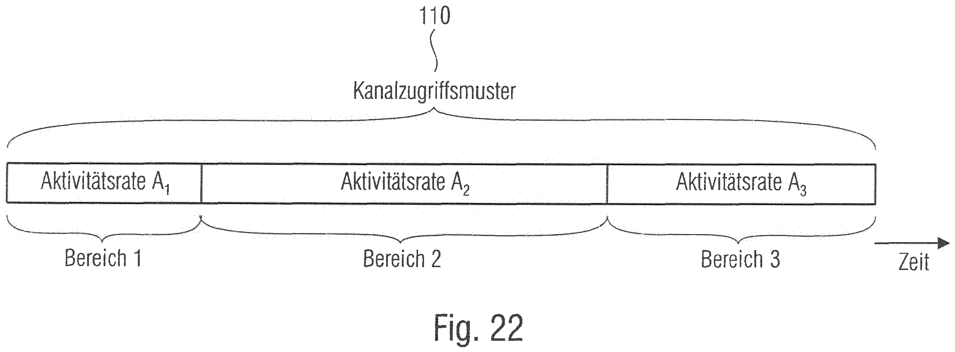

Wie oben dargestellt, kann durch geeignete Maßnahmen die Aktivitätsrate, d.h. die Frequenz des Kanalzugriffs, vorgegeben werden. Um in einem Netzwerk den ggf. unterschiedlichen Anforderungen gerecht zu werden, wird kann ein Kanalzugriffsmuster so gestaltet werden, dass es Bereiche mit unterschiedlichen Aktivitätsraten aufweist. Dies ist in Fig. 22 exemplarisch dargestellt. Je nach individueller Anforderung können Endgeräte dann z.B. in dem für sie geeigneten Bereich senden.

Im Detail zeigt Fig. 22 eine zeitliche Aufteilung eines Kanalzugriffsmusters 110 in Bereiche unterschiedlicher Aktivitätsrate $A_1$, $A_2$ und $A_3$, gemäß einem Ausführungsbeispiel.

Mit anderen Worten, Fig. 22 zeigt ein Beispiel für ein Kanalzugriffsmuster mit drei Bereichen unterschiedlicher Aktivitätsrate innerhalb des Kanalzugriffsmusters 110.

**5.5 Bedarfsabhängige (dynamische) Anpassung der Aktivitätsrate des Kanalzugriffsmusters**

In Netzwerken (oder Kommunikationssystemen) 102 können zu unterschiedlichen Zeitpunkten unterschiedliche Lastsituationen vorliegen. Wie weiter oben ausgeführt, kann über die Gestaltung das Kanalzugriffsmusters 110 (d.h. dessen Aktivitätsrate bzw. mittlerer zeitlicher Dichte) eine Festlegung des aktiv nutzbaren Ressourcenvorrats für dieses Netzwerk erfolgen.

Das Bereitstellen eines hohen Ressourcenvorrats (hohe Aktivitätsrate) bei niedriger tatsächlicher Last kann insbesondere bei batteriebetriebenen Geräten nachteilig sein. Als Beispiel sei hier eine batteriebetriebene Basisstation (z.B. eines PAN-Netzwerks, ggf. im sog. Repeaterbetrieb), genannt, welche während aller aktiven Ressourcen des Kanalzugriffsmusters den Empfänger betreibt und damit Energie einsetzt.

Daher kann es sinnvoll sein, die mittlere Aktivitätsrate, also die zeitliche Dichte der durch das Kanalzugriffsmuster 110 angebotenen Ressourcen, den vorliegenden Lastverhältnissen dynamisch anzupassen. Wenn die Aktivitätsrate des Kanalzugriffsmusters 110 geändert ist, wird dies den Teilnehmern im Netzwerk entsprechend signalisiert, wofür z.B. das Baken-Signal (oder auch dedizierte Signalisierungsressourcen) in Frage kommt.

Befindet sich ein Endgerät 106 in einem längeren Ruhezustand (Energiesparmodus), so kann es vorkommen, dass es die während des Ruhezustands ausgesendete Signalisierungsinformation der Basisstation 104 über ein ggf. geändertes Kanalzugriffsmuster nicht erhält. In einem solchen Szenario kann es sinnvoll sein, dass ein Kanalzugriffsmuster 110 einen Mindestvorraten (Grund-)Ressourcen bereitstellt, der jederzeit und ohne besondere Signalisierung zur Verfügung steht, sowie einen zusätzlichen Vorrat an Ressourcen, der lastabhängig hinzugefügt werden kann und einer entsprechenden Signalisierung unterliegt.

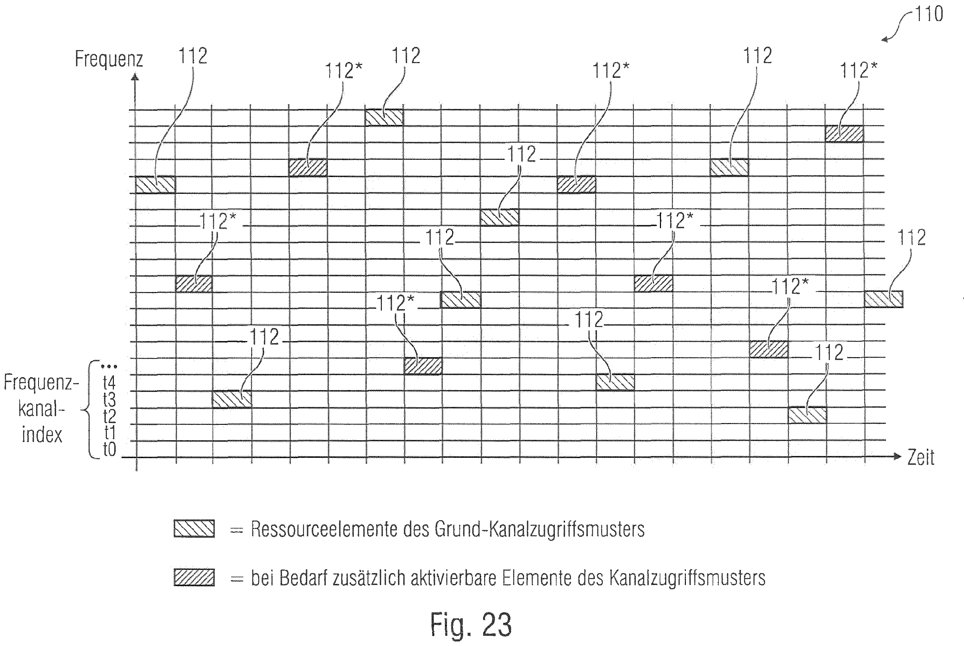

Im obigen Sinne dem Kanalzugriffsmuster zusätzlich hinzugefügte Ressourcen können z.B. zeitlich nach den Grundressourcen angeordnet sein oder auch mit diesen verschränkt im Zeit-/Frequenzraster angeordnet sein, wie dies in Fig. 23 gezeigt ist.

Im Detail zeigt Fig. 23 in einem Diagramm eine durch ein Kanalzugriffsmuster 110 definierte frequenz- und zeitsprungbasierte Belegungen der Ressourcen 112 des Frequenzbands, wobei das Kanalzugriffsmuster 110 zusätzlich bei Bedarf aktivierbare Ressourcen 112* aufweist, gemäß einem Ausführungsbeispiel der vorliegenden Erfindung. Dabei beschreibt die Ordinate die Frequenzkanalindizes und die Abszisse die Zeitschlitzindizes.

Mit anderen Worten, Fig. 23 zeigt ein Beispiel für verschränkte Grund- und Zusatzressourcen.

**5.6 Adaptive Frequenzbereichsbelegung**

In bestimmten unlizenzierten Frequenzbändern können Nutzer ohne regulatorische Einschränkungen ggf. selbst entscheiden, welche Frequenzbereiche sie innerhalb des Frequenzbands nutzen. Dies kann dazu führen, dass bestimmte Bereiche des zur Verfügung stehenden Frequenzbands stärker durch externe Nutzer belegt werden als andere und somit stärkeren Störungen ausgesetzt sind.

Wenn eine Basisstation 104 eine solche mittel- oder langfristige asymmetrische Auslastung des Frequenzbands feststellt (z.B. durch frequenzkanalweise Signal-zu-Störleistungs-Schätzungen auf Basis empfangener Signale), kann der überdurchschnittlich stark belegte Bereich des Frequenzbands für die Nutzung durch das eigene Netzwerk gemieden werden, indem die zugehörigen Frequenzkanäle nicht in das Kanalzugriffsmuster mit aufgenommen werden. Dies ist im Frequenz-/Zeitpunkt-Zuordner (siehe Fig. 14 oder 15) zu berücksichtigen und wird allen Netzwerkteilnehmern in geeigneter Weise signalisiert.

Die Gruppe der ausgeklammerten Frequenzkanäle kann z.B. durch einen entsprechenden Start- und Endfrequenzkanalindex oder durch einen Startfrequenzkanalindex und eine folgende Kanalanzahl beschrieben werden.

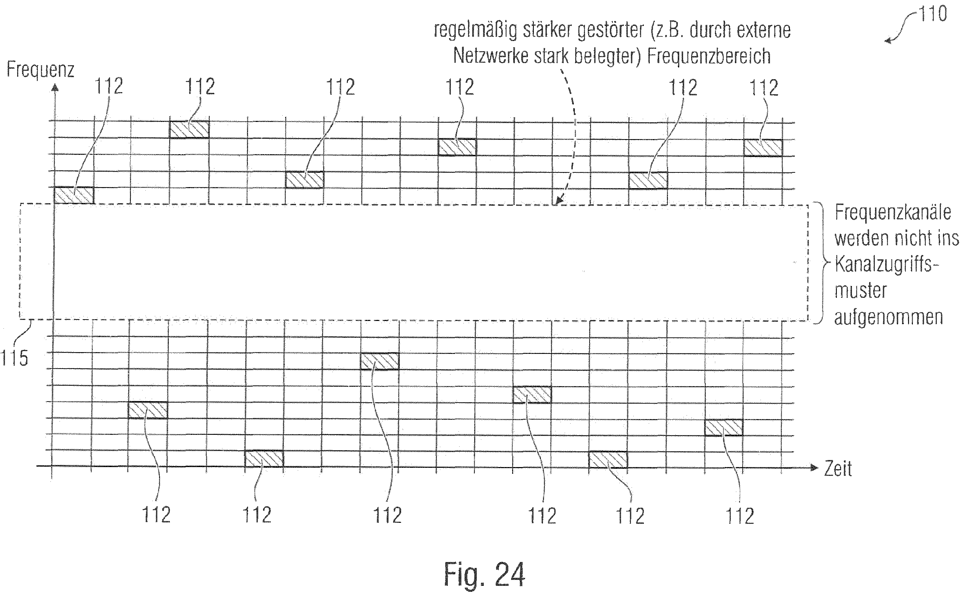

Fig. 24 zeigt in einem Diagramm eine durch ein Kanalzugriffsmuster 110 definierte frequenz- und zeitsprungbasierte Belegungen der Ressourcen 112 des Frequenzbands, wobei ein regelmäßig stärker gestörter Frequenzbereich 115 des Frequenzbands nicht durch das Kanalzugriffsmuster 110 belegt wird, gemäß einem Ausführungsbeispiel der vorliegenden Erfindung. Dabei beschreibt die Ordinate die Frequenzkanalindizes und die Abszisse die Zeitschlitzindizes.

Wie in Fig. 24 zu erkennen ist, wird bei der Erzeugung des Kanalzugriffsmusters 110 ein regelmäßig stärker gestörter (z.B. durch externe Netzwerke stark belegter) Frequenzbereich 115 berücksichtigt. Frequenzkanäle dieses Frequenzbereichs 115 werden somit nicht ins Kanalzugriffsmuster 110 aufgenommen.

Mit anderen Worten, Fig. 24 zeigt ein Beispiel für Ausklammerung stark gestörter Frequenzkanäle aus dem Kanalzugriffsmuster.

Mit der Meidung von störanfälligen Frequenzbereichen für die Datenübertragung im eigenen Netzwerk erfolgt gleichzeitig ein gewisser Lastausgleich über das Frequenzband, indem andere Netzwerke in den bereits stark ausgelasteten Frequenzbereichen keine zusätzlichen Störungen erfahren.

## 5.7 Bündelung von Ressourcenelementen im Frequenzbereich (Frequenzkanalbündelung)

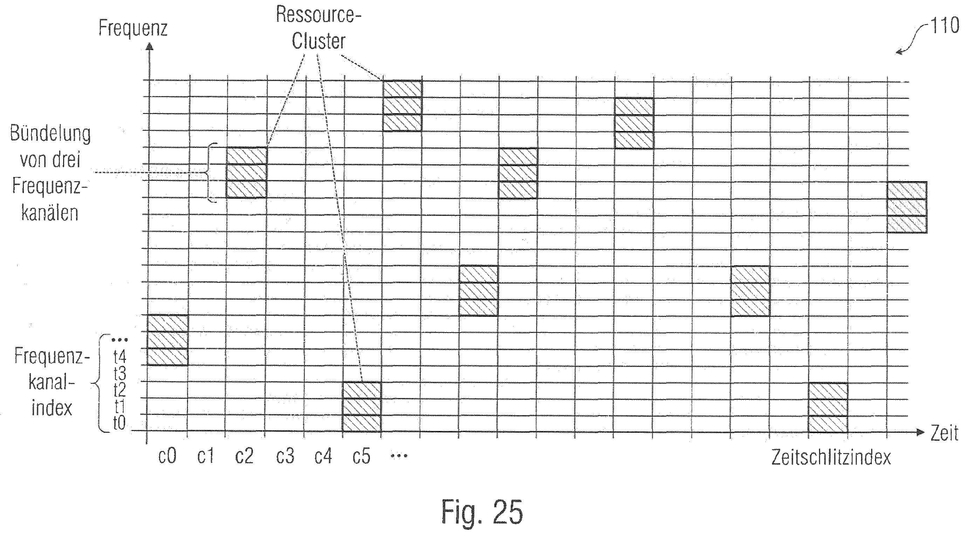

Je nach eingesetzter Hard- und Software ist es möglich, dass eine Basisstation 104 auf mehreren Frequenzkanälen gleichzeitig empfangen kann (Frequenzkanalbündelung). In diesem Fall ist es gerade bei höher ausgelasteten Systemen vorteilhaft, die Anzahl der innerhalb des Netzwerks angebotenen Ressourceelemente in der Frequenzdimension entsprechend zu erhöhen und mehrere Frequenzkanäle innerhalb eines Zeitschlitzes in das Kanalzugriffsmuster aufzunehmen, wie dies in Fig. 25 gezeigt ist.

Im Detail zeigt Fig. 25 in einem Diagramm eine durch ein Kanalzugriffsmuster 110 definierte frequenz- und zeitsprungbasierte Belegungen der Ressourcen 112 des Frequenzbands, wobei Ressourcen 112 im Frequenzbereich gebündelt werden, gemäß einem Ausführungsbeispiel. Dabei beschreibt die Ordinate die Frequenzkanalindizes und die Abszisse die Zeitschlitzindizes.

Mit anderen Worten, Fig. 25 zeigt eine beispielhafte Darstellung des Kanalzugriffsmusters 110 bei Bündelung von je drei benachbarten Frequenzkanälen zu Ressourcen-Clustern. Dabei wird in Fig. 25 beispielhaft die Bündelung von jeweils drei Frequenzkanälen dargestellt. Jede Gruppe von Ressource-Elementen eines Zeitschlitzes kann dabei als "Ressource-Cluster" bezeichnet werden. Das Kanalzugriffsmuster 110 kann hierbei ergänzt werden um die Information über die Anzahl der Frequenzkanäle, die ein Ressource-Cluster konstituieren.

Als weiteres Ausführungsbeispiel sei erwähnt, dass die zu Ressource-Clustern gruppierten Frequenzkanäle nicht notwendigerweise unmittelbar benachbart sein müssen.

## 5.8 Kanalzugriffsmuster (Sprungmuster) der Aktivierungsinformation als Teil des netzwerkspezifischen Kanalzugriffsmusters

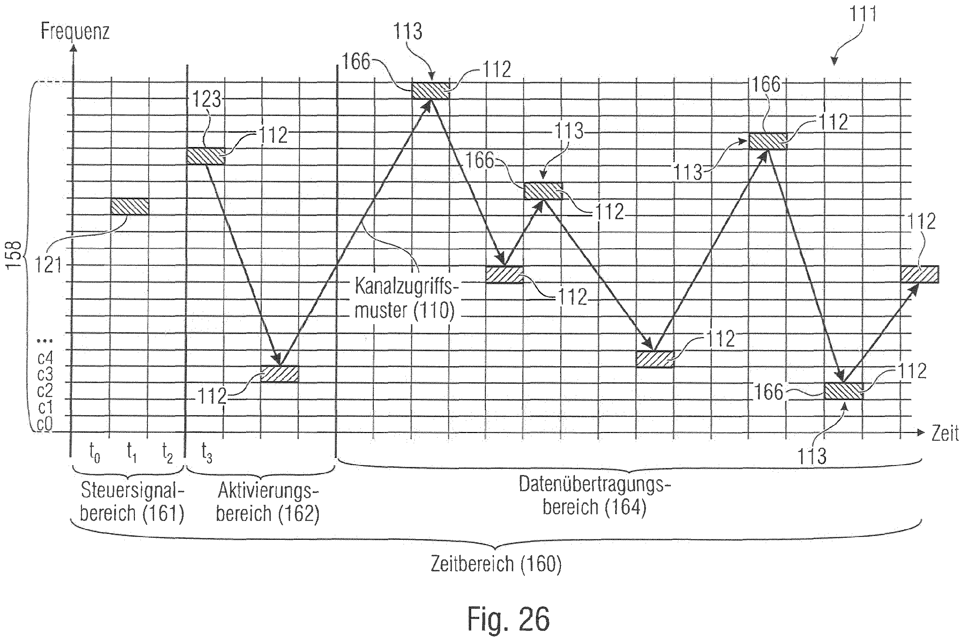

Fig. 26 zeigt in einem Diagramm einen Zeitbereich 160 des Frequenzbands 158 sowie eine durch ein Kanalzugriffsmuster 110 definierte zeit- und frequenzsprungbasierte Belegung von verwendbaren Ressourcen 112 des Zeitbereichs zur Übertragung von Daten, gemäß einem Ausführungsbeispiel. Dabei beschreibt die Ordinate die Frequenz (oder Frequenzkanäle des Frequenzbands 158) und die Abszisse die Zeit (oder Zeitschlitze des Zeitbereichs 160).

Wie in Fig. 26 zu erkennen ist, kann der Zeitbereich 160 einen Steuersignalbereich 161, einen Aktivierungsbereich 162, der auf den Steuersignalbereich 161 folgt, und einen Datenübertragungsbereich 164, der auf den Aktivierungsbereich 162 folgt, aufweisen.

Bei Ausführungsbeispielen kann der Endpunkt 106_1 ausgebildet sein, um in dem Steuersignalbereich 161 ein Steuersignal 120 (z.B. von einer Basisstation des Kommunikationssystems 102) (z.B. ein Baken-Signal) zu empfangen (siehe Fig. 1), wobei das Steuersignal 120 eine Information 121 über ein Kanalzugriffsmuster 110 aufweist, wobei das Kanalzugriffsmuster 110 eine für die Kommunikation des Kommunikationssystems 102 verwendbare frequenz- und/oder zeitsprungbasierte Belegung 112 des Frequenzbands 158 angibt.

Ferner kann der Endpunkt 106_1 ausgebildet sein, um das Kanalzugriffsmuster 110 basierend auf der Information 121 über das Kanalzugriffsmuster 110 zu ermitteln. Ferner kann der Endpunkt 106_1 ausgebildet ist, um in dem Aktivierungsbereich 162, ein Aktivierungssignal 122 zu senden, wobei das Aktivierungssignal 122 eine Aktivierungsinformation 123 aufweist, die eine nachfolgende Datenübertragung in einem auf den Aktivierungsbereich folgenden Datenübertragungsbereich 164 des Zeitbereichs 160 ankündigt.

Beispielsweise kann, wie in Fig. 26 angedeutet ist, ein erster Teil der durch das Kanalzugriffsmuster 110 angegebenen verwendbaren frequenz- und/oder zeitsprungbasierten Belegung 112 des Frequenzbands 158 in dem Aktivierungsbereich liegen, wobei der Endpunkt 106_1 ausgebildet sein kann, um das Aktivierungssignal 122 in dem ersten Teil der durch das Kanalzugriffsmuster 110 angegebenen verwendbaren frequenz- und/oder zeitsprungbasierten Belegung 112 des Frequenzbands zu senden, wie z.B. in einer oder mehreren der verwendbaren Ressourcen 112 des Kanalzugriffsmusters 110.

Ferner kann der Endpunkt 106_1 ausgebildet sein, um ein zu übertragenes Datenpaket (z.B. der Bitübertragungsschicht im OSI-Modell) in eine Mehrzahl von Sub-Datenpaketen 166 aufzuteilen, die jeweils kürzer sind als das Datenpaket, und um mittels eines Datensignals 124 die Mehrzahl von Sub-Datenpaketen 166 in dem Datenübertragungsbereich 164 in zumindest einer Teilmenge der durch das Kanalzugriffsmuster 110 angegebenen verwendbaren frequenz- und/oder zeitsprungbasierten Belegung 112 des Frequenzbands zu senden.

Beispielsweise kann der Endpunkt 106_1 ausgebildet sein, um mittels des Datensignals 124 die Mehrzahl von Sub-Datenpaketen 166 in dem Datenübertragungsbereich 164 in zumindest einer durch ein relatives Kanalzugriffsmuster 111 angegebenen Teilmenge der durch das Kanalzugriffsmuster angegebenen verwendbaren frequenz- und/oder zeitsprungbasierten Belegung 112 des Frequenzbands 158 zu senden, wobei das relative Kanalzugriffsmuster 111 die zu verwendende Belegung 113 der durch das Kanalzugriffsmuster angegebenen verwendbaren frequenz- und/oder zeitsprungbasierten Belegung 112 angibt.

Bei Ausführungsbeispielen kann die Basisstation 104 ausgebildet sein, um in dem Steuersignalbereich 161 das Steuersignal 120 (z.B. Baken-Signal) zu senden, wobei das Steuersignal 120 die Information 121 über ein Kanalzugriffsmuster 110 aufweist, wobei das Kanalzugriffsmuster 110 die für die Kommunikation des Kommunikationssystems verwendbare frequenz- und/oder zeitsprungbasierte Belegung 112 des Frequenzbands 158 angibt.

Die Basisstation 104 kann ferner ausgebildet sein, um den Empfänger 170 (siehe Fig. 1) für den auf den Steuersignalbereich 161 folgenden Aktivierungsbereich 162 des Zeitbereichs zu aktivieren (z.B. in einen normalen Betriebsmodus zu versetzten, z.B. einzuschalten), um das Aktivierungssignal 122 (z.B. von dem Endpunkt 106_1 des Kommunikationssystems 102) zu empfangen, wobei das Aktivierungssignal 122 die Aktivierungsinformation 123 aufweist, die die nachfolgende Datenübertragung in dem auf den Aktivierungsbereich 162 folgenden Datenübertragungsbereich 164 des Zeitbereichs 160 ankündigt.

Die Basisstation 104 kann ferner ausgebildet sein, um, sofern in dem Aktivierungsbereich 162 das Aktivierungssignal 122 mit der Aktivierungsinformation 123 empfangen wurde, den Empfänger 170 für den Datenübertragungsbereich 164 zu aktivieren oder aktiviert zu lassen, um in dem Datenübertragungsbereich 164 das Datensignal 124 zu empfangen, wobei das Datensignal 124 die Mehrzahl von Sub-Datenpaketen 166 aufweist, die in zumindest einer Teilmenge der durch das Kanalzugriffsmuster angegebenen verwendbaren frequenz- und/oder zeitsprungbasierten Belegung 112 des Frequenzbands 158 übertragen werden, wobei auf die Mehrzahl von Sub-Datenpaketen 166 ein Datenpaket (z.B. der Bitübertragungsschicht im OSI-Modell) aufgeteilt ist, wobei die Mehrzahl von Sub-Datenpaketen 166 jeweils kürzer sind als das Datenpaket.

Bei Ausführungsbeispielen kann somit ein Teil der Ressourcen (Ressourcenelemente) 112 eines Kanalzugriffsmusters 110 zur exklusiven Übertragung von Aktivierungsinformation vorgesehen sein, d.h. die Aktivierungsinformation 123 mittels des durch das Kanalzugriffsmuster 110 definierten Angebots an verfügbaren Ressourcen zu übertragen. Dadurch sind die Vorteile der in Abschnitt 5 beschriebenen Ausführungsbeispiele (z.B. Reduktion von Störungen zwischen untereinander unkoordinierten Netzwerken) zur Übertragung von Aktivierungsinformation 123 nutzbar.

Bei Ausführungsbeispielen können die innerhalb des Kanalzugriffsmusters 110 der Übertragung von Aktivierungsinformation 123 gewidmeten Ressourcen definiert werden. Dies kann entweder in fester Weise vorab erfolgen oder durch geeignete (dynamische) Signalisierung während des Betriebs eines Funknetzwerks/Kommunikationssystems.

## 6. Weitere Ausführungsbeispiele

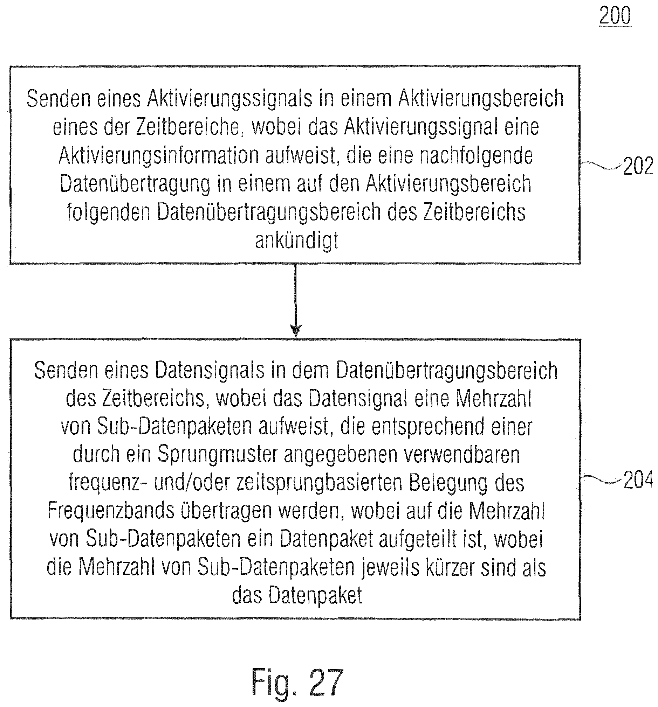

Fig. 27 zeigt ein Flussdiagramm eines Verfahrens 200 zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf (z.B. periodisch) aufeinander folgenden Zeitbereichen erfolgt. Das Verfahren 200 umfasst einen Schritt 202 des Sendens eines Aktivierungssignals in einem Aktivierungsbereich eines der Zeitbereiche, wobei das Aktivierungssignal eine Aktivierungsinformation aufweist, die eine nachfolgende Datenübertragung in einem auf den Aktivierungsbereich folgenden Datenübertragungsbereich des Zeitbereichs ankündigt. Ferner umfasst das Verfahren 200 einen Schritt 204 des Sendens eines Datensignals in dem Datenübertragungsbereich des Zeitbereichs, wobei das Datensignal eine Mehrzahl von Sub-Datenpaketen aufweist, die entsprechend einer durch ein Sprungmuster angegebenen verwendbaren frequenz- und/oder zeitsprungbasierten Belegung des Frequenzbands übertragen werden, wobei auf die Mehrzahl von Sub-Datenpaketen ein Datenpaket (z.B. der Bitübertragungsschicht im OSI-Modell) aufgeteilt ist, wobei die Mehrzahl von Sub-Datenpaketen jeweils kürzer sind als das Datenpaket.

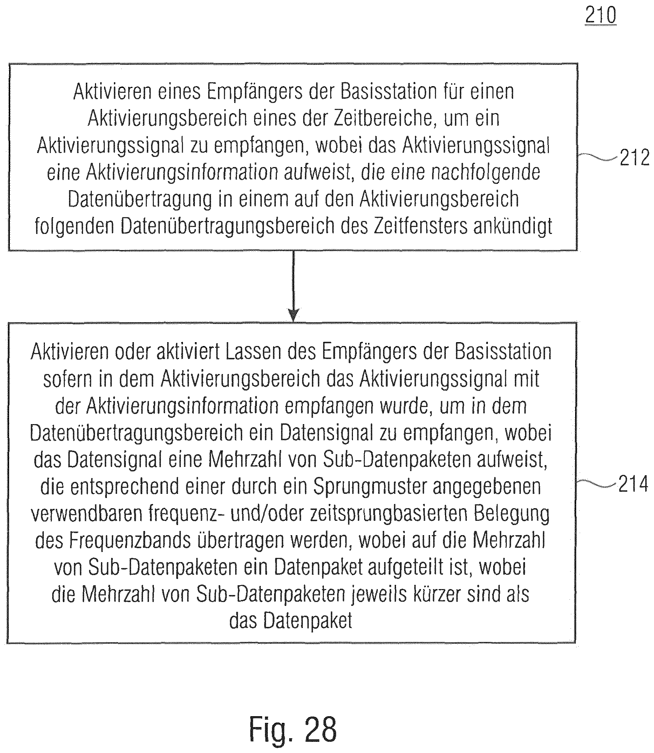

Fig. 28 zeigt ein Flussdiagramm eines Verfahrens 210 zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf (z.B. periodisch) aufeinander folgenden Zeitbereichen erfolgt. Das Verfahren 210 umfasst einen Schritt 212 des Aktivierens eines Empfängers der Basisstation für einen Aktivierungsbereich eines der Zeitbereiche, um ein Aktivierungssignal zu empfangen, wobei das Aktivierungssignal eine Aktivierungsinformation aufweist, die eine nachfolgende Datenübertragung in einem auf den Aktivierungsbereich folgenden Datenübertragungsbereich des Zeitfensters ankündigt. Ferner umfasst das Verfahren 210 einen Schritt 212 des Aktivierens oder aktiviert Lassens des Empfängers der Basisstation sofern in dem Aktivierungsbereich das Aktivierungssignal mit der Aktivierungsinformation empfangen wurde, um in dem Datenübertragungsbereich ein Datensignal zu empfangen, wobei das Datensignal eine Mehrzahl von Sub-Datenpaketen aufweist, die entsprechend einer durch ein Sprungmuster angegebenen verwendbaren frequenz- und/oder zeitsprungbasierten Belegung des Frequenzbands übertragen werden, wobei auf die Mehrzahl von Sub-Datenpaketen ein Datenpaket (z.B. der Bitübertragungsschicht im OSI-Modell) aufgeteilt ist, wobei die Mehrzahl von Sub-Datenpaketen jeweils kürzer sind als das Datenpaket.

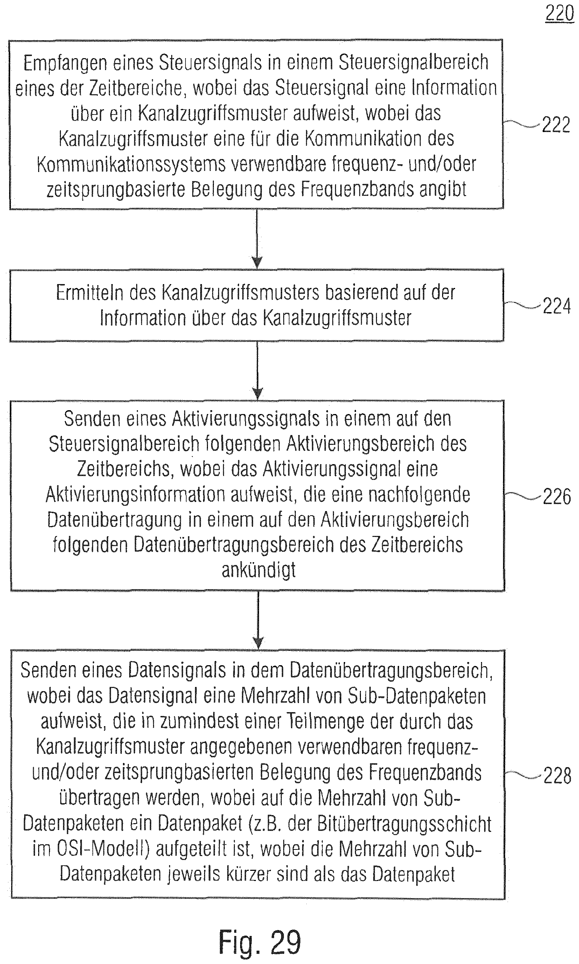

Fig. 29 zeigt ein Flussdiagramm eines Verfahrens 220 zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf (z.B. periodisch) aufeinander folgenden Zeitbereichen erfolgt. Das Verfahren 220 umfasst einen Schritt 222 des Empfangens eines Steuersignals in einem Steuersignalbereich eines der Zeitbereiche, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt. Ferner umfasst das Verfahren 220 einen Schritt 224 des Ermittelns des Kanalzugriffsmusters basierend auf der Information über das Kanalzugriffsmuster. Ferner umfasst das Verfahren 220 einen Schritt 226 des Sendens eines Aktivierungssignals in einem auf den Steuersignalbereich folgenden Aktivierungsbereich des Zeitbereichs, wobei das Aktivierungssignal eine Aktivierungsinformation aufweist, die eine nachfolgende Datenübertragung in einem auf den Aktivierungsbereich folgenden Datenübertragungsbereich des Zeitbereichs ankündigt. Ferner umfasst das Verfahren 220 einen Schritt 228 des Sendens eines Datensignals in dem Datenübertragungsbereich, wobei das Datensignal eine Mehrzahl von Sub-Datenpaketen aufweist, die in zumindest einer Teilmenge der durch das Kanalzugriffsmuster angegebenen verwendbaren frequenz- und/oder zeitsprungbasierten Belegung des Frequenzbands übertragen werden, wobei auf die Mehrzahl von Sub-Datenpaketen ein Datenpaket (z.B. der Bitübertragungsschicht im OSI-Modell) aufgeteilt ist, wobei die Mehrzahl von Sub-Datenpaketen jeweils kürzer sind als das Datenpaket.

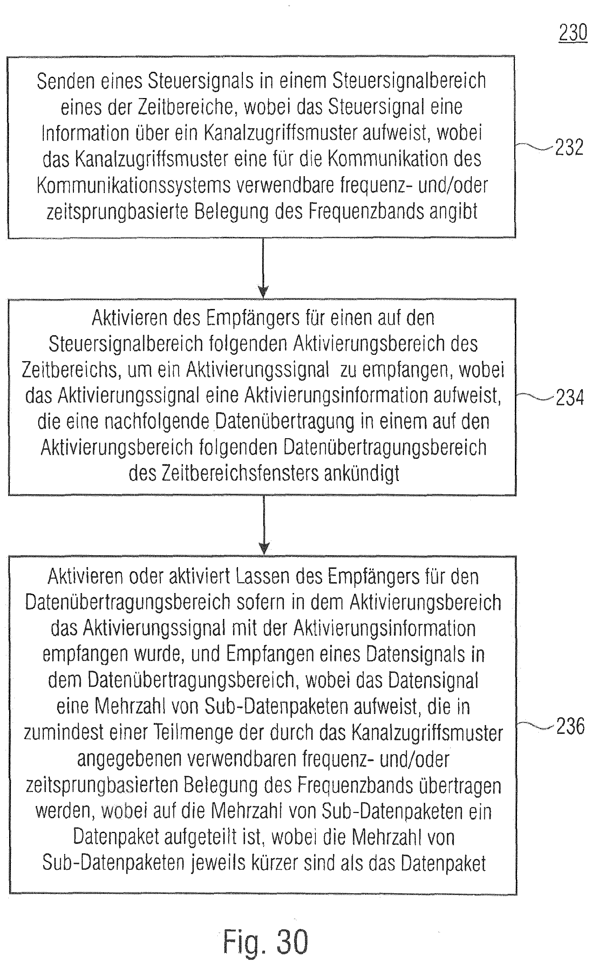

Fig. 30 zeigt ein Flussdiagramm eines Verfahrens 230 zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf (z.B. periodisch) aufeinander folgenden Zeitbereichen erfolgt. Das Verfahren 230 umfasst einen Schritt 232 des Sendens eines Steuersignals in einem Steuersignalbereich eines der Zeitbereiche, wobei das Steuersignal eine Information über ein Kanalzugriffsmuster (110) aufweist, wobei das Kanalzugriffsmuster eine für die Kommunikation des Kommunikationssystems verwendbare frequenz- und/oder zeitsprungbasierte Belegung des Frequenzbands angibt. Ferner umfasst das Verfahren 230 einen Schritt 234 des Aktivierens des Empfängers für einen auf den Steuersignalbereich folgenden Aktivierungsbereich des Zeitbereichs (z.B. in einen normalen Betriebsmodus zu versetzten, z.B. einzuschalten), um ein Aktivierungssignal (z.B. von einem Endpunkt des Kommunikationssystems) zu empfangen, wobei das Aktivierungssignal eine Aktivierungsinformation aufweist, die eine nachfolgende Datenübertragung in einem auf den Aktivierungsbereich folgenden Datenübertragungsbereich des Zeitbereichsfensters ankündigt. Ferner umfasst das Verfahren 230 einen Schritt 236 des Aktivierens oder aktiviert Lassens des Empfängers für den Datenübertragungsbereich sofern in dem Aktivierungsbereich das Aktivierungssignal mit der Aktivierungsinformation empfangen wurde, und Empfangen eines Datensignals in dem Datenübertragungsbereich, wobei das Datensignal eine Mehrzahl von Sub-Datenpaketen aufweist, die in zumindest einer Teilmenge der durch das Kanalzugriffsmuster angegebenen verwendbaren frequenz- und/oder zeitsprungbasierten Belegung des Frequenzbands übertragen werden, wobei auf die Mehrzahl von Sub-Datenpaketen ein Datenpaket (z.B. der Bitübertragungsschicht im OSI-Modell) aufgeteilt ist, wobei die Mehrzahl von Sub-Datenpaketen jeweils kürzer sind als das Datenpaket.

Weitere Ausführungsbeispiele schaffen eine Basisstation eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei die Basisstation ausgebildet ist, um ein Signal [z.B. ein Baken-Signal] zu senden, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung [z.B. von Ressourcen] des Frequenzbands angibt [z.B. eine zeitliche Abfolge von für die Kommunikation des Kommunikationssystems verwendbaren (z.B. über das Frequenzband verteilten) Frequenzressourcen], wobei die Information einen Zustand eines Zahlenfolgengenerators [z.B. eines periodischen Zahlenfolgengenerators oder eines deterministischen Zufallszahlengenerators] zur Erzeugung einer Zahlenfolge beschreibt oder wobei die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreibt, wobei die Zahlenfolge das Kanalzugriffsmuster bestimmt.

Bei Ausführungsbeispielen kann sich das Kanalzugriffsmuster von einem anderen Kanalzugriffsmuster unterscheiden, basierend auf dem zumindest ein anderes Kommunikationssystem der Mehrzahl von anderen Kommunikationssystemen auf das Frequenzband zugreift.

Bei Ausführungsbeispielen kann die Basisstation ausgebildet sein, um unkoordiniert zu den anderen Kommunikationssystemen zu arbeiten.

Bei Ausführungsbeispielen kann die Basisstation ausgebildet sein, um mit einem Teilnehmer des Kommunikationssystems unter Verwendung der durch das Kanalzugriffsmuster bestimmten Ressourcen oder einer Teilmenge davon zu kommunizieren.

Bei Ausführungsbeispielen kann die Basisstation ausgebildet sein, um das Signal mit der Information über das Kanalzugriffsmuster mehrfach [z.B. periodisch] auszusenden, wobei die mit aufeinander folgenden Aussendungen des Signals übertragenen Informationen über das Kanalzugriffsmuster unterschiedliche [z.B. aufeinander folgende oder unmittelbar aufeinander folgende] Zustände des Zahlenfolgengenerators oder unterschiedliche Zahlen der Zahlenfolge beschreiben.

Bei Ausführungsbeispielen kann die mit den Aussendungen des Signals übertragenen Informationen nur eine Teilemenge der Zustände des Zahlenfolgengenerators oder der Zahlen der Zahlenfolge beschreiben [z.B. werden nur jeder n-te Zustand oder jede n-te Index Zahl übertragen, wobei n eine natürliche Zahl größer gleich zwei ist].

Bei Ausführungsbeispielen kann die Information über das Kanalzugriffsmuster der Zustand des Zahlenfolgengenerators oder eine davon abgeleitete Information [z.B. ein Teil des Zustands des Zahlenfolgengenerators (z.B. LSBs des Zustands des Zahlenfolgengenerators)] sein.

Bei Ausführungsbeispielen kann die Information über das Kanalzugriffsmuster die Zahl der Zahlenfolge oder eine davon abgeleitete Information [z.B. ein Teil der Zahl der Zahlenfolge (z.B. LSBs der Zahl der Zahlenfolge)] sein.

Bei Ausführungsbeispielen kann die Basisstation ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln. Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei die Basisstation ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann die Basisstation ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann die individuelle Information des Kommunikationssystems eine immanente Information des Kommunikationssystems sein.

Bei Ausführungsbeispielen kann die immanente Information des Kommunikationssystems ein netzwerkspezifischer Identifikator sein.

Bei Ausführungsbeispielen kann der netzwerkspezifische Identifikator eine Identifikation des Kommunikationssystems sein.

Bei Ausführungsbeispielen kann die Basisstation ausgebildet ist, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems unter Verwendung einer Abbildungsfunktion auf eine Zeitinformation und eine Frequenzinformation abzubilden,

wobei die Zeitinformation und die Frequenzinformation eine Ressource des Kanalzugriffsmusters beschreiben.

Bei Ausführungsbeispielen kann die Zeitinformation einen Zeitschlitz oder einen Zeitschlitzindex beschreiben.

Bei Ausführungsbeispielen kann die Abbildungsfunktion bei der Abbildung auf die Zeitinformation eine Aktivitätsrate des Kommunikationssystems berücksichtigen, wobei die Aktivitätsrate vor Ausführung festgelegt wird oder wobei das Signal oder ein weiteres von der Basisstation gesendetes Signal eine Information über die Aktivitätsrate aufweist.

Bei Ausführungsbeispielen kann die Abbildungsfunktion bei der Abbildung auf die Zeitinformation unterschiedliche Aktivitätsraten des Kommunikationssystems berücksichtigen, so dass das Kanalzugriffsmuster Bereiche unterschiedlicher Aktivitätsraten aufweist, wobei das Signal oder das weitere Signal eine Information über die Aktivitätsraten aufweist.

Bei Ausführungsbeispielen kann die Basisstation ausgebildet sein, um die Aktivitätsrate dynamisch in Abhängigkeit von einer aktuellen oder prädizierten Lastsituation des Kommunikationssystems anzupassen.

Bei Ausführungsbeispielen kann die Abbildungsfunktion bei der Abbildung auf die Zeitinformation einen vorgegebenen Mindestabstand [z.B. von einem oder mehreren Zeitschlitzen oder Zeitschlitzindexen] zwischen [z.B. unmittelbar] aufeinanderfolgenden Zeitschlitzen oder Zeitschlitzindexen des Kanalzugriffsmusters einhalten.

Bei Ausführungsbeispielen kann die Frequenzinformation einen Frequenzkanal oder einen Frequenzkanalindex beschreiben.

Bei Ausführungsbeispielen kann die Frequenzinformation einen Abstand zwischen [z.B. unmittelbar] aufeinanderfolgenden Frequenzkanälen oder Frequenzkanalindexen des Kanalzugriffsmusters beschreiben.

Bei Ausführungsbeispielen kann die Abbildungsfunktion bei der Abbildung auf die Frequenzinformation einen vorgegebenen Mindestabstand zwischen [z.B. unmittelbar] aufeinanderfolgenden Frequenzkanälen oder Frequenzkanalindexen des Kanalzugriffsmusters einhalten.

Bei Ausführungsbeispielen kann die Abbildungsfunktion bei der Abbildung auf die Frequenzinformation einen störanfälligen Frequenzkanal oder einen Bereich von störanfälligen Frequenzkanälen des Frequenzbands berücksichtigen, sodass der störanfällige Frequenzkanal oder der Bereich von störanfälligen Frequenzkanälen nicht oder weniger von dem Kanalzugriffsmuster belegt wird.

Bei Ausführungsbeispielen kann die Frequenzinformation eine Bündelung von Frequenzressourcen des Frequenzbands beschreiben, die zumindest zwei unmittelbar benachbarte oder voneinander beabstandete Frequenzkanäle oder Frequenzkanalindizes umfasst.

Bei Ausführungsbeispielen kann die Basisstation ausgebildet sein, um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann die Basisstation ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Bei Ausführungsbeispielen kann das Signal ein Baken-Signal sein.

Bei Ausführungsbeispielen kann der Zahlenfolgengenerator ein periodischer Zahlenfolgengenerator zur Erzeugung einer periodischen Zahlenfolge sein.

Bei Ausführungsbeispielen kann der Zahlenfolgengenerator ein deterministischer Zufallszahlengenerator zur Erzeugung einer pseudozufälligen Zahlenfolge sein.

Bei Ausführungsbeispielen kann der Zustand des Zahlenfolgengenerators ein periodischer Bakenindex und/oder ein periodischer Zeitschlitzindex sein.

Bei Ausführungsbeispielen kann eine von dem Zustand des Zahlenfolgengenerators abgeleitete Zahl ein periodischer Bakenindex und/oder ein periodischer Zeitschlitzindex sein.

Bei Ausführungsbeispielen kann die Zahl der Zahlenfolge ein periodischer Bakenindex und/oder ein periodischer Zeitschlitzindex sein.

Bei Ausführungsbeispielen kann eine durch das Kanalzugriffsmuster definierte Belegung des Frequenzbands eine Belegung des Frequenzbands durch ein anderes Kommunikationssystem zumindest teilweise überlappen.

Weitere Ausführungsbeispiele schaffen einen Endpunkt eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei der Endpunkt ausgebildet ist, um ein Signal [z.B. ein Baken-Signal] zu empfangen, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung [z.B. von Ressourcen] des Frequenzbands angibt [z.B. eine zeitliche Abfolge von für die Kommunikation des Kommunikationssystems verwendbaren (z.B. über das Frequenzband verteilten) Frequenzressourcen], wobei der Endpunkt ausgebildet ist, um das Kanalzugriffsmuster basierend auf der Information über das Kanalzugriffsmuster zu ermitteln, wobei die Information einen Zustand eines Zahlenfolgengenerators [z.B. eines periodischen Zahlenfolgengenerators oder eines deterministischen Zufallszahlengenerators] zur Erzeugung einer Zahlenfolge beschreibt oder wobei die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreibt, wobei die Zahlenfolge das Kanalzugriffsmuster bestimmt.

Bei Ausführungsbeispielen kann sich das Kanalzugriffsmuster von einem anderen Kanalzugriffsmuster, basierend auf dem zumindest ein anderes Kommunikationssystem der Mehrzahl von anderen Kommunikationssystemen auf das Frequenzband zugreift, unterscheiden.

Bei Ausführungsbeispielen kann der Endpunkt ausgebildet sein, um unkoordiniert zu den anderen Kommunikationssystemen zu arbeiten.

Bei Ausführungsbeispielen kann der Endpunkt ausgebildet sein, um mit einem Teilnehmer des Kommunikationssystems unter Verwendung der durch das Kanalzugriffsmuster bestimmten Ressourcen oder einer Teilmenge davon zu kommunizieren.

Bei Ausführungsbeispielen kann der Endpunkt ausgebildet sein, um das Signal mit der Information über das Kanalzugriffsmuster mehrfach [z.B. periodisch oder sporadisch] zu empfangen, wobei die mit aufeinander folgenden Aussendungen des Signals übertragenen Informationen über das Kanalzugriffsmuster unterschiedliche [z.B. aufeinander folgende oder unmittelbar aufeinander folgende] Zustände des Zahlenfolgengenerators oder unterschiedliche Zahlen der Zahlenfolge beschreiben, wobei der Endpunkt ausgebildet sein kann, um das Kanalzugriffsmuster basierend auf den Informationen über das Kanalzugriffsmuster [z.B. basierend auf den unterschiedlichen Zuständen des Zahlenfolgengenerators oder den unterschiedlichen Zahlen der Zahlenfolge] zu ermitteln. Bei Ausführungsbeispielen können die mit den Aussendungen des Signals übertragenen Informationen nur eine Teilmenge der Zustände des Zahlenfolgengenerators oder der Zahlen der Zahlenfolge beschreiben [z.B. wird nur jeder n-te Zustand oder jede n-te Index Zahl übertragen, wobei n eine natürliche Zahl größer gleich zwei ist].

Bei Ausführungsbeispielen kann die Information über das Kanalzugriffsmuster der Zustand des Zahlenfolgengenerators oder eine davon abgeleitete Information [z.B. ein Teil des Zustands des Zahlenfolgengenerators (z.B. LSBs des Zustands des Zahlenfolgengenerators)] sein.

Bei Ausführungsbeispielen kann die Information über das Kanalzugriffsmuster die Zahl der Zahlenfolge oder eine davon abgeleitete Information [z.B. ein Teil der Zahl der Zahlenfolge (z.B. LSBs der Zahl der Zahlenfolge)] sein.

Bei Ausführungsbeispielen kann der Endpunkt ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei der Endpunkt ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann der Endpunkt ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann die individuelle Information des Kommunikationssystems eine immanente Information des Kommunikationssystems sein.

Bei Ausführungsbeispielen kann die immanente Information des Kommunikationssystems ein netzwerkspezifischer Identifikator sein.

Bei Ausführungsbeispielen kann der netzwerkspezifische Identifikator eine Identifikation des Kommunikationssystems sein.

Bei Ausführungsbeispielen kann der Endpunkt ausgebildet sein, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems unter Verwendung einer Abbildungsfunktion auf eine Zeitinformation und eine Frequenzinformation abzubilden,

wobei die Zeitinformation und die Frequenzinformation eine Ressource des Kanalzugriffsmusters beschreiben.

Bei Ausführungsbeispielen kann die Zeitinformation einen Zeitschlitz oder einen Zeitschlitzindex beschreiben.

Bei Ausführungsbeispielen kann die Abbildungsfunktion bei der Abbildung auf die Zeitinformation eine Aktivitätsrate des Kommunikationssystems berücksichtigen, wobei die Aktivitätsrate vor Ausführung festgelegt wird oder wobei das Signal oder ein weiteres empfangenes Signal eine Information über die Aktivitätsrate aufweist.

Bei Ausführungsbeispielen kann die Abbildungsfunktion bei der Abbildung auf die Zeitinformation unterschiedliche Aktivitätsraten des Kommunikationssystems berücksichtigen, so dass das Kanalzugriffsmuster Bereiche unterschiedlicher Aktivitätsraten aufweist, wobei das Signal oder das weitere Signal eine Information über die Aktivitätsraten aufweist.

Bei Ausführungsbeispielen kann das Signal eine Information über die Aktivitätsraten des Kommunikationssystems aufweisen.

Bei Ausführungsbeispiele kann der Endpunkt ausgebildet sein, um ein weiteres Signal zu empfangen, wobei das weitere Signal eine Information über die Aktivitätsraten des Kommunikationssystems aufweist.

Bei Ausführungsbeispielen kann die Abbildungsfunktion bei der Abbildung auf die Zeitinformation einen vorgegebenen Mindestabstand [z.B. von einem oder mehreren Zeitschlitzen oder Zeitschlitzindexen] zwischen [z.B. unmittelbar] aufeinanderfolgenden Zeitschlitzen oder Zeitschlitzindexen des Kanalzugriffsmusters einhalten.

Bei Ausführungsbeispielen kann die Frequenzinformation einen Frequenzkanal oder einen Frequenzkanalindex beschreiben.

Bei Ausführungsbeispielen kann die Frequenzinformation einen Abstand zwischen [z.B. unmittelbar] aufeinanderfolgenden Frequenzkanälen oder Frequenzkanalindexen des Kanalzugriffsmusters beschreiben.

Bei Ausführungsbeispielen kann die Abbildungsfunktion bei der Abbildung auf die Frequenzinformation einen vorgegebenen Mindestabstand zwischen [z.B. unmittelbar] aufeinanderfolgenden Frequenzkanälen oder Frequenzkanalindexen des Kanalzugriffsmusters einhalten.

Bei Ausführungsbeispielen kann die Abbildungsfunktion bei der Abbildung auf die Frequenzinformation einen störanfälligen Frequenzkanal oder einen Bereich von störanfälligen Frequenzkanälen des Frequenzbands berücksichtigen, sodass der störanfällige Frequenzkanal oder der Bereich von störanfälligen Frequenzkanälen nicht oder weniger von dem Kanalzugriffsmuster belegt wird.

Bei Ausführungsbeispielen kann die Frequenzinformation zumindest zwei unmittelbar benachbarte oder voneinander beabstandete Frequenzkanäle oder Frequenzkanalindizes beschreiben.

Bei Ausführungsbeispielen kann der Endpunkt ausgebildet seib, um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems eine Pseudozufallszahl R zu ermitteln, wobei die Pseudozufallszahl R das Kanalzugriffsmuster bestimmt.

Bei Ausführungsbeispielen kann der Endpunkt ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Bei Ausführungsbeispielen kann das Signal ein Baken-Signal sein.

Bei Ausführungsbeispielen kann der Zahlenfolgengenerator ein periodischer Zahlenfolgengenerator zur Erzeugung einer periodischen Zahlenfolge sein.

Bei Ausführungsbeispielen kann der Zahlenfolgengenerator ein deterministischer Zufallszahlengenerator zur Erzeugung einer pseudozufälligen Zahlenfolge sein.

Bei Ausführungsbeispielen kann der Zustand des Zahlenfolgengenerators ein periodischer Bakenindex und/oder ein periodischer Zeitschlitzindex sein.

Bei Ausführungsbeispielen kann eine von dem Zustand des Zahlenfolgengenerators abgeleitete Zahl ein periodischer Bakenindex und/oder ein periodischer Zeitschlitzindex sein.

Bei Ausführungsbeispielen kann die Zahl der Zahlenfolge ein periodischer Bakenindex und/oder ein periodischer Zeitschlitzindex sein.

Bei Ausführungsbeispielen kann eine durch das Kanalzugriffsmuster definierte Belegung des Frequenzbands eine Belegung des Frequenzbands durch ein anderes Kommunikationssystem zumindest teilweise überlappen.

Weitere Ausführungsbeispiele schaffen ein Kommunikationssystem mit einer der oben beschriebenen Basisstationen und zumindest einem der oben beschriebenen Endpunkte.

Weiter Ausführungsbeispiele schaffen ein Verfahren zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Sendens eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt.

Weiter Ausführungsbeispiele schaffen ein Verfahren zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Empfangens eines Signals, wobei das Signal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt. Ferner umfasst das Verfahren einen Schritt des Ermittelns des Kanalzugriffsmusters basierend auf der Information über das Kanalzugriffsmuster, wobei die Information einen Zustand eines Zahlenfolgengenerators zur Erzeugung einer Zahlenfolge beschreibt oder wobei die Information eine Zahl einer Zahlenfolge beschreibt, wobei die Zahlenfolge das Kanalzugriffsmuster bestimmt.

Weitere Ausführungsbeispiele schaffen einen Controller für einen Teilnehmer eines Kommunikationssystems, wobei das Kommunikationssystem in einem Frequenzband drahtlos kommuniziert, welches von einer Mehrzahl von Kommunikationssystemen zur Kommunikation genutzt wird, wobei der Controller ausgebildet ist, um ein Kanalzugriffsmuster zu ermitteln, wobei das Kanalzugriffsmuster eine für die Kommunikation des Kommunikationssystems verwendbare frequenz- und/oder zeitsprungbasierte Belegung des Frequenzbands angibt, wobei der Controller ausgebildet ist, um das Kanalzugriffsmuster in Abhängigkeit von einem Zustand eines Zahlenfolgengenerators zur Erzeugung einer Zahlenfolge oder einer Zahl einer Zahlenfolge zu ermitteln.

Bei Ausführungsbeispielen kann der Controller ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei Controller ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann der Controller ausgebildet sein, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann der Controller ausgebildet sein, um

- den Zustand des Zahlenfolgengenerators, oder eine von dem Zustand des Zahlenfolgengenerators abgeleitete Zahl der Zahlenfolge, oder die Zahl der Zahlenfolge, und

- die individuelle Information des Kommunikationssystems

unter Verwendung einer Abbildungsfunktion auf eine Zeitinformation und eine Frequenzinformation abzubilden, wobei die Zeitinformation und die Frequenzinformation eine Ressource des Kanalzugriffsmusters beschreiben.

Bei Ausführungsbeispielen kann der Controller ausgebildet sein um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann der Controller ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Weitere Ausführungsbeispiele schaffen ein Verfahren zum Erzeugen eines Kanalzugriffsmusters. Das Verfahren umfasst einen Schritt des Erzeugens des Kanalzugriffsmusters, wobei das Kanalzugriffsmuster eine für eine Kommunikation eines Kommunikationssystems verwendbare frequenz- und/oder zeitsprungbasierte Belegung des Frequenzbands angibt, wobei das Kommunikationssystem in einem Frequenzband drahtlos kommuniziert, welches von einer Mehrzahl von Kommunikationssystemen zur Kommunikation genutzt wird, wobei das Kanalzugriffsmuster in Abhängigkeit von einem Zustand eines Zahlenfolgengenerators zur Erzeugung einer Zahlenfolge oder einer Zahl einer Zahlenfolge erzeugt wird.

Weitere Ausführungsbeispiele schaffen ein Kommunikationssystem, wobei das Kommunikationssystem ausgebildet ist, um in einem Frequenzband [z.B. einem lizenzfreien und/oder genehmigungsfreien Frequenzband; z.B. ISM Band], welches von einer Mehrzahl von Kommunikationssystemen zur Kommunikation genutzt wird, drahtlos zu kommunizieren, wobei das Kommunikationssystem ausgebildet ist, um basierend auf einem Kanalzugriffsmuster unterschiedliche Frequenzen oder Frequenzkanäle des Frequenzbands [z.B. in die das Frequenzband unterteilt ist] abschnittsweise [z.B. zeitschlitzweise] für die Kommunikation zu nutzen, unabhängig davon ob diese von einem anderen Kommunikationssystem verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen auf das Frequenzband zugreift, unterscheidet.

Bei Ausführungsbeispielen kann das Kanalzugriffsmuster eine für die Kommunikation des Kommunikationssystems verwendbare frequenz- und/oder zeitsprungbasierte Belegung [z.B. von Ressourcen] des Frequenzbands angeben [z.B. eine zeitliche Abfolge von für die Kommunikation des Kommunikationssystems verwendbare (z.B. über das Frequenzband verteilte) Frequenzressourcen].

Bei Ausführungsbeispielen kann das Kommunikationssystem ausgebildet sein, um unkoordiniert zu den anderen Kommunikationssystemen in dem Frequenzband zu kommunizieren.

Bei Ausführungsbeispielen kann das Kommunikationssystem ausgebildet sein, um das Kanalzugriffsmuster zu ermitteln.

Bei Ausführungsbeispielen kann das Kanalzugriffsmuster von einer individuellen [z.B. immanenten] Information des Kommunikationssystems abhängig sein.

Bei Ausführungsbeispielen können sich das Kanalzugriffsmuster und das andere Kanalzugriffsmuster in weniger als 20 % der darin festgelegten Ressourcen überlappen.

Bei Ausführungsbeispielen können Teilnehmer des Kommunikationssystems Daten untereinander basierend auf dem Kanalzugriffsmuster abschnittsweise in den unterschiedlichen Kanälen des Frequenzbands übertragen.

Bei Ausführungsbeispielen kann eine Empfangsbandbreite von Teilnehmern des Kommunikationssystems schmaler sein als eine Bandbreite des Frequenzbands.

Weitere Ausführungsbeispiele schaffen ein Verfahren zum Betreiben eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird. Das Verfahren umfasst einen Schritt des Übertragens von Daten zwischen Teilnehmern des Kommunikationssystems basierend auf einem Kanalzugriffsmuster abschnittsweise in unterschiedlichen Kanälen des Frequenzbands, unabhängig davon ob diese oder eine Untermenge davon von anderen Kommunikationssystemen verwendet werden, wobei sich das Kanalzugriffsmuster von einem anderen Kanalzugriffsmuster basierend auf dem zumindest ein anderes Kommunikationssystem der Mehrzahl von anderen Kommunikationssystemen auf das Frequenzband zugreift, unterscheidet.

Weitere Ausführungsbeispiele schaffen eine Kommunikationsanordnung mit einem ersten Kommunikationssystem und einem zweiten Kommunikationssystem, wobei das erste Kommunikationssystem und das zweite Kommunikationssystem ausgebildet sind, um in dem gleichen Frequenzband [z.B. einem lizenzfreien und/oder genehmigungsfreien Frequenzband; z.B. ISM Band] [z.B. welches von einer Mehrzahl von Kommunikationssystemen zur Kommunikation genutzt wird] drahtlos zu kommunizieren, wobei das erste Kommunikationssystem ausgebildet ist, um unter Verwendung eines ersten Kanalzugriffsmusters unterschiedliche Kanäle des Frequenzbands [z.B. in die das Frequenzband unterteilt ist] abschnittsweise [z.B. zeitschlitzweise] für die Kommunikation zu nutzen, unabhängig davon ob diese oder eine Untermenge davon von einem anderen Kommunikationssystem verwendet werden, wobei das zweite Kommunikationssystem ausgebildet ist, um unter Verwendung eines zweiten Kanalzugriffsmusters unterschiedliche Kanäle des Frequenzbands [z.B. in die das Frequenzband unterteilt ist] abschnittsweise [z.B. zeitschlitzweise] für die Kommunikation zu nutzen, unabhängig davon ob diese oder eine Untermenge davon von einem anderen Kommunikationssystem verwendet werden, wobei das erste Kanalzugriffsmuster und das zweite Kanalzugriffsmuster unterschiedlich sind.

Bei Ausführungsbeispielen können das erste Kommunikationssystem und das zweite Kommunikationssystem untereinander nicht koordiniert sein.

Bei Ausführungsbeispielen können Teilnehmer des ersten Kommunikationssystems Daten untereinander basierend auf dem ersten Kanalzugriffsmuster abschnittsweise in den unterschiedlichen Kanälen des Frequenzbands übertragen.

Bei Ausführungsbeispielen können Teilnehmer des zweiten Kommunikationssystems Daten untereinander basierend auf dem zweiten Kanalzugriffsmuster abschnittsweise in den unterschiedlichen Kanälen des Frequenzbands übertragen.

Bei Ausführungsbeispielen können das erste Kommunikationssystem und das zweite Kommunikationssystem untereinander nicht kommunizieren.

Weitere Ausführungsbeispiele schaffen ein Verfahren zum Betreiben von zwei Kommunikationssystemen in einem Frequenzband, welches von einer Mehrzahl von Kommunikationssystemen zur drahtlosen Kommunikation genutzt wird. Das Verfahren umfasst einen Schritt des Übertragens von Daten zwischen Teilnehmern des ersten Kommunikationssystems basierend auf einem ersten Kanalzugriffsmuster abschnittsweise in unterschiedlichen Kanälen des Frequenzbands, unabhängig davon ob diese oder eine Untermenge davon von anderen Kommunikationssystemen verwendet werden. Ferner umfasst das Verfahren einen Schritt des Übertragens von Daten zwischen Teilnehmern des zweiten Kommunikationssystems basierend auf einem zweiten Kanalzugriffsmuster abschnittsweise in unterschiedlichen Kanälen des Frequenzbands, unabhängig davon ob diese oder eine Untermenge davon von anderen Kommunikationssystemen verwendet werden, wobei das erste Kanalzugriffsmuster und das zweite Kanalzugriffsmuster unterschiedlich sind.

Ausführungsbeispiele erhöhen die Leistungsfähigkeit eines digitalen Funkübertragungssystems, indem die wechselseitige Störung zwischen Teilnehmern unterschiedlicher und untereinander nicht koordinierter Funknetzwerke reduziert werden. Dieser Effekt wird gemäß Ausführungsbeispielen durch die Generierung und Nutzung von Netzwerk-individuellen Kanalzugriffsmustern erzielt, welche bestimmte (unten beschriebene Eigenschaften) aufweisen. Ein besonders großer Nutzen ergibt sich bei Datenübertragung unter Einsatz des Telegram-Splitting-Multiple-Access Verfahrens.

Die erhöhte Leistungsfähigkeit wirkt sich wahlweise (bei gegebener Last) in Form einer verringerten Paketfehlerrate aus oder (bei gegebener Paketfehlerrate) in Form einer höheren Auslastung der Netzwerke.

Ausführungsbeispiele beziehen sich auf die Erzeugung und Anwendung von Netzwerk-individuellen Kanalzugriffsmustern, wobei diese zumindest eine aus folgenden Eigenschaften aufweisen:

- Die Kanalzugriffsmuster enthalten untereinander möglichst wenige überlappende Teilsequenzen,
- es gibt (z.B. in Bereichen mit hoher Netzwerkdichte) einen großen Vorrat von Kanalzugriffsmustern,
- die Kanalzugriffsmuster sind so gestaltet, dass sie eine sehr hohe Periodizität aufweisen,
- die Kanalzugriffsmuster führen (bei Vorliegen entsprechender Anforderungen) zu einer im Mittel gleichmäßigen Nutzung der zur Verfügung stehenden Frequenzkanäle,
- die Signalisierung des angewandten Musters erfolgt durch die koordinierende Instanz mit möglichst wenig Signalisierungsinformation, und
- Endgeräte können, bereits bei einmaligem, vollständigem Erhalt der Signalisierung des Kanalzugriffsmusters den Inhalt des Kanalzugriffsmusters zu beliebigen, zukünftigen Zeitpunkten bestimmen (dies ermöglicht Endgeräten, z.B. aus Energiespargründen längere Empfangspausen einzulegen und bei Wiedereinschalten dennoch das dann jeweils gültige Kanalzugriffsmuster auf der Basis von vor der Empfangspause erhaltener Information zu ermitteln).

Ausführungsbeispiele finden Anwendung in Systemen zur Funkübertragung von Daten von Endgeräten zu einer Basisstation oder von einer/mehrerer Basisstationen zu Endgeräten. Beispielsweise kann es sich bei einem System dabei um ein persönliches Netzwerk (engl. Personal Area Network, PAN) oder ein Niedrigenergie-Weitverkehrsnetzwerk (engl. Low Power Wide Area Network, LPWAN) handeln, wobei die Endgeräte z.B. batteriebetriebene Sensoren (Sensorknoten) sein können.

Ausführungsbeispiele zielen auf Anwendungsfälle, in welchen eine Vielzahl von untereinander nicht koordinierten funkbasierten Netzwerken in einem gemeinsamen Frequenzband betrieben werden, wobei die Teilnehmer unterschiedlicher Netzwerke wechselseitig in Empfangsreichweite sind und deren Signale untereinander somit eine potentielle Störquelle darstellen (siehe Fig. 11).

Wie bereits erwähnt können die hierin beschriebenen Ausführungsbeispiele eingesetzt werden, um Daten basierend auf dem Telegram-Splitting-Verfahren zwischen den Teilnehmern des Kommunikationssystems zu übertragen. Beim Telegram-Splitting-Verfahren werden Daten, wie z.B. ein Telegramm oder Datenpaket, in eine Mehrzahl von Sub-Datenpakete (oder Teildatenpakte, oder Teilpakete) aufgeteilt und die Sub-Datenpakete unter Verwendung eines Zeit- und/oder Frequenzsprungmusters in der Zeit und/oder in der Frequenz verteilt von einem Teilnehmer zu einem anderen Teilnehmer (z.B. von der Basisstation zum Endpunkt, oder vom Endpunkt zur Basisstation) des Kommunikationssystems übertragen, wobei der Teilnehmer, der die Sub-Datenpakete empfängt, diese wieder zusammenfügt (oder kombiniert), um das Datenpaket zu erhalten. Jedes der Sub-Datenpakete enthält dabei nur einen Teil des Datenpakets. Das Datenpaket kann ferner kanalcodiert sein, so dass zum fehlerfreien Decodieren des Datenpakets nicht alle Sub-Datenpakete, sondern nur ein Teil der Sub-Datenpakete erforderlich ist.

Bei der Übertragung von Daten basierend auf dem Telegram-Splitting-Verfahren, können die Sub-Datenpakete in einer Teilmenge (z.B. einer Auswahl) der verfügbaren Ressourcen des Kanalzugriffsmusters verteilt übertragen werden. Beispielsweise kann pro Ressource ein Sub-Datenpaket übertragen werden.

Mit anderen Worten, Ausführungsbeispiele können vorteilhaft in Systemen eingesetzt werden, in welchen eine Nachricht (Datenpaket) in mehreren Teil-Datenpaketen übertragen wird (sogenanntes Telegram Splitting, siehe z.B. DE 10 2011 082 098).

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literaturverzeichnis

[1] DE 10 2011 082 098 B4

[2] DE 10 2017 206 236

[3] G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013

[4] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015

Abkürzungsverzeichnis

| | |
|---|---|
| CRC: | Cyclic Redundancy Check |
| LPWAN: | Low Power Wide Area Network |
| LSB: | Least Significant Bit(s) |
| MSB: | Most Significant Bit(s) |
| PAN: | Personal Area Network |
| TLS: | Transport Layer Security |
| TSMA: | Telegram-Splitting-Multiple-Access |

**Patentansprüche**

1. Endpunkt (106) eines Kommunikationssystems (102),

   wobei der Endpunkt (106) konfiguriert ist, um in einem lizenzfreien und/oder genehmigungsfreien Frequenzband (158) drahtlos zu kommunizieren, welches von einer Mehrzahl von Kommunikationssystemen zur Kommunikation genutzt wird, wobei ein Zugriff des Kommunikationssystems (102) auf das Frequenzband (158) basierend auf aufeinander folgenden Zeitbereichen erfolgt,
   wobei der Endpunkt (106) ausgebildet ist, um in einem Aktivierungsbereich (162) eines der Zeitbereiche (160), ein Aktivierungssignal (122) zu senden, wobei das Aktivierungssignal (122) eine Aktivierungsinformation (123) aufweist, die eine nachfolgende Datenübertragung in einem auf den Aktivierungsbereich (162) folgenden Datenübertragungsbereich (164) des Zeitbereichs (160) ankündigt,
   wobei der Endpunkt (106) ausgebildet ist, um ein zu übertragenes Datenpaket in eine Mehrzahl von Sub-Datenpaketen (166) aufzuteilen, die jeweils kürzer sind als das Datenpaket, und um mittels eines Datensignals (122) die Mehrzahl von Sub-Datenpaketen (160) in dem Datenübertragungsbereich (164) entsprechend einer durch ein Sprungmuster (111) angegebenen frequenz- und/oder zeitsprungbasierten Belegung (113) des Frequenzbands (158) zu senden,
   wobei der Endpunkt (106) ausgebildet ist, um das Aktivierungssignal in dem Aktivierungsbereich (162) des Zeitbereichs (160) nur dann auszusenden, wenn für den nachfolgenden Datenübertragungsbereich (164) desselben Zeitbereichs (160) ein Datenpaket zur Übertragung ansteht,
   **dadurch gekennzeichnet, dass**
   ein Auftreten des Zeitbereichs (160) sowie das Auftreten des Aktivierungsbereichs (162) und des Datenübertragungsbereichs (164) innerhalb des Zeitbereichs (160) dem Endpunkt (106) bekannt ist oder durch eine Basisstation (104) des Kommunikationssystems (102) mittels eines Steuersignals (120) signalisiert wird.

2. Endpunkt (106) nach einem der vorangehenden Ansprüche,
   wobei die Aktivierungsinformation (123) eine Information über das im Datenübertragungsbereich (164) verwendete Sprungmuster (111) aufweist.

3. Endpunkt (106) nach Anspruch 2,
   wobei die Aktivierungsinformation (123) aus einem Satz von Sprungmustern, die zur Kommunikation zwischen Teilnehmern des Kommunikationssystems (102) verwendbar sind, das im Datenübertragungsbereich (164) verwendete Sprungmuster (111) anzeigt.

4. Endpunkt (106) nach einem der vorangehenden Ansprüche,
   wobei das Aktivierungssignal (122) zumindest einen Teil der Aktivierungsinformation (123) in einer Belegung (119) des Aktivierungsbereichs (162) durch das Aktivierungssignal abbildet oder codiert.

5. Endpunkt (106) nach einem der vorangehenden Ansprüche,
   wobei der Endpunkt (106) ausgebildet ist, um das Aktivierungssignal (122) entsprechend eines Sprungmusters (117) in der Zeit und/oder Frequenz verteilt in dem Aktivierungsbereich (162) des Zeitbereichs (160) zu übertragen.

6. Endpunkt (106) nach dem vorangehenden Anspruch,
   wobei das Aktivierungssignal (122) zumindest einen Teil der Aktivierungsinformation in dem Sprungmuster, mit dem das Aktivierungssignal übertragen wird, abbildet oder codiert.

7. Endpunkt (106) nach einem der vorangehenden Ansprüche,
   wobei das Aktivierungssignal (122) zumindest einen Teil der Aktivierungsinformation in einem dedizierten oder definierten Frequenzoffset, mit dem das Aktivierungssignal (122) beaufschlagt ist, abbildet oder codiert.

8. Endpunkt (106) nach einem der vorangehenden Ansprüche,
   wobei das Aktivierungssignal (122) zumindest einen Teil der Aktivierungsinformation (123) in einer dedizierten oder definierten Zeitverschiebung, mit der das Aktivierungssignal beaufschlagt ist, abbildet oder codiert.

9. Endpunkt (106) nach einem der vorangehenden Ansprüche,
   wobei das Aktivierungssignal (122) eine dedizierte Referenzsymbolsequenz aufweist, die zumindest einen Teil der Aktivierungsinformation abbildet oder codiert.

**10.** Endpunkt (106) nach einem der vorangehenden Ansprüche,
wobei der Endpunkt (106) ausgebildet ist, um das Aktivierungssignal (122) in Abhängigkeit von Anforderungen des zu übertragenen Datenpakets an eine Latenzzeit in einem Aktivierungsbereich aus einem Satz von Aktivierungsbereichen (162_1,162_2) mit unterschiedlichen Längen und/oder Auftretungshäufigkeiten zu senden.

**11.** Endpunkt (106) nach einem der vorangehenden Ansprüche,

wobei die Aktivierungsbereiche des Satzes von Aktivierungsbereichen (162_1,162_2) zeitlich ineinander verschachtelt sind, und/oder
wobei sich die Aktivierungsbereiche des Satzes von Aktivierungsbereichen (162_1,162_2) zumindest teilweise zeitlich überlappen.

**12.** Endpunkt (106) nach einem der vorangehenden Ansprüche,
wobei der Endpunkt (106) ausgebildet ist, um einen für die Übertragung des Aktivierungssignals (122) zu verwendenden Frequenzkanal der Frequenzkanäle des Frequenzbands (158) in Abhängigkeit von einer Übertragungsqualität des Frequenzkanals auszuwählen.

**13.** Endpunkt (106) nach dem vorangehenden Anspruch,
wobei der Endpunkt (106) ausgebildet ist, um die Übertragungsqualität des Frequenzkanals zu schätzen.

**14.** Verfahren (200) zum Betreiben eines Endpunkts eines Kommunikationssystems, wobei der Endpunkt in einem lizenzfreien und/oder genehmigungsfreien Frequenzband drahtlos kommuniziert, welches von einer Mehrzahl von Kommunikationssystemen zur Kommunikation genutzt wird, wobei ein Zugriff des Kommunikationssystems auf das Frequenzband basierend auf aufeinander folgenden Zeitbereichen erfolgt, wobei das Verfahren aufweist:

Senden (202) eines Aktivierungssignals in einem Aktivierungsbereich eines der Zeitbereiche, wobei das Aktivierungssignal eine Aktivierungsinformation aufweist, die eine nachfolgende Datenübertragung in einem auf den Aktivierungsbereich folgenden Datenübertragungsbereich des Zeitbereichs ankündigt,
Senden (204) eines Datensignals in dem Datenübertragungsbereich des Zeitbereichs, wobei das Datensignal eine Mehrzahl von Sub-Datenpaketen aufweist, die entsprechend einer durch ein Sprungmuster angegebenen verwendbaren frequenz- und/oder zeitsprungbasierten Belegung des Frequenzbands übertragen werden, wobei auf die Mehrzahl von Sub-Datenpaketen ein Datenpaket aufgeteilt ist, wobei die Mehrzahl von Sub-Datenpaketen jeweils kürzer sind als das Datenpaket,
**dadurch gekennzeichnet, dass**
ein Auftreten des Zeitbereichs sowie das Auftreten des Aktivierungsbereichs und des Datenübertragungsbereichs innerhalb des Zeitbereichs dem Endpunkt bekannt ist oder durch eine Basisstation des Kommunikationssystems mittels eines Steuersignals signalisiert wird.

**15.** Computerprogramm, umfassend Befehle, die bewirken, dass der Endpunkt des Anspruchs 1 die Verfahrensschritte nach Anspruch 14 ausführt.

## Claims

**1.** A terminal point (106) of a communication system (102),

wherein the terminal point (106) is configured to communicate wirelessly in a license-free and/or approval-free frequency band (158) which is used for communication by a plurality of communication systems,
wherein access by the communication system (102) to the frequency band (158) takes place based on successive time ranges,
wherein the terminal point (106) is configured to send an activation signal (122) in an activation range (162) of one of the time ranges (160), wherein the activation signal (122) has activation information (123) which announce a subsequent data transmission in a data transmission range (164) of the time range (160) which follows the activation range (162),
wherein the terminal point (106) is configured to divide a data packet to be transmitted into a plurality of sub-data packets (166) which are each shorter than the data packet, and to send the plurality of sub-data packets (160) in the data transmission range (164) in accordance with a frequency- and/or time-hop-based occupancy (113) of the frequency band (158) indicated by a hopping pattern (111) by means of a data signal (122),

wherein the terminal point (106) is configured to emit the activation signal in the activation range (162) of the time range (160) only if a data packet is pending for transmission for the subsequent data transmission range (164) of the same time range (160),

**characterized in that** an occurrence of the time range (160) and the occurrence of the activation range (162) and of the data transmission range (164) within the time range (160) are known to the terminal point (106) or are signaled by a base station (104) of the communication system (102) by means of a control signal (120).

2. The terminal point (106) according to any of the preceding claims,
wherein the activation information (123) have information on the hopping pattern (111) used in the data transmission range (164).

3. The terminal point (106) according to claim 2,
wherein the activation information (123) indicate the hopping pattern (111) used in the data transmission range (164) from a set of hopping patterns which can be used for communication between subscribers of the communication system (102).

4. The terminal point (106) according to any of the preceding claims,
wherein the activation signal (122) maps or encodes at least a part of the activation information (123) in an occupancy (119) of the activation range (162) by the activation signal.

5. The terminal point (106) according to any of the preceding claims,
wherein the terminal point (106) is configured to transmit the activation signal (122) in accordance with a hopping pattern (117) distributed in time and/or frequency in the activation range (162) of the time range (160).

6. The terminal point (106) according to the preceding claim,
wherein the activation signal (122) maps or encodes at least a part of the activation information in the hopping pattern with which the activation signal is transmitted.

7. The terminal point (106) according to any of the preceding claims,
wherein the activation signal (122) maps or encodes at least a part of the activation information in a dedicated or defined frequency offset which the activation signal (122) is provided with.

8. The terminal point (106) according to any of the preceding claims,
wherein the activation signal (122) maps or encodes at least a part of the activation information (123) in a dedicated or defined time shift which the activation signal is provided with.

9. The terminal point (106) according to any of the preceding claims,
wherein the activation signal (122) has a dedicated reference symbol sequence which maps or encodes at least a part of the activation information.

10. The terminal point (106) according to any of the preceding claims,
wherein the terminal point (106) is configured to send the activation signal (122) in dependence on requirements of the data packet to be transmitted for a latency time in an activation range from a set of activation ranges (162_1, 162_2) with different lengths and/or frequencies of occurrence.

11. The terminal point (106) according to any of the preceding claims,

wherein the activation ranges of the set of activation ranges (162_1, 162_2) are temporally interleaved with one another, and/or
wherein the activation ranges of the set of activation ranges (162_1, 162_2) at least partially temporally overlap.

12. The terminal point (106) according to any of the preceding claims,
wherein the terminal point (106) is configured to select a frequency channel of the frequency channels of the frequency band (158) to be used for the transmission of the activation signal (122) in dependence on a transmission quality of the frequency channel.

13. The terminal point (106) according to the preceding claim,
wherein the terminal point (106) is configured to estimate the transmission quality of the frequency channel.

**14.** A method (200) for operating a terminal point of a communication system, wherein the terminal point communicates wirelessly in a license-free and/or approval-free frequency band which is used for communication by a plurality of communication systems, wherein access by the communication system to the frequency band takes place based on successive time ranges, the method comprising:

sending (202) an activation signal in an activation range of one of the time ranges, wherein the activation signal has activation information which announce a subsequent data transmission in a data transmission range of the time range which follows the activation range,

sending (204) a data signal in the data transmission range of the time range, wherein the data signal has a plurality of sub-data packets which are transmitted in accordance with a usable frequency- and/or time-hop-based occupancy of the frequency band indicated by a hopping pattern, wherein a data packet is divided into the plurality of sub-data packets, wherein the plurality of sub-data packets are each shorter than the data packet, **characterized in that** an occurrence of the time range and the occurrence of the activation range and of the data transmission range within the time range are known to the terminal point or are signaled by a base station of the communication system by means of a control signal.

**15.** A computer program comprising commands which cause the terminal point of claim 1 to perform the method steps according to claim 14.

**Revendications**

**1.** Point d'extrémité (106) d'un système de communication (102),

dans lequel le point d'extrémité (106) est configuré pour communiquer sans fil dans une bande de fréquences exempte de licence et/ou exempte d'autorisation (158) qui est utilisée par une pluralité de systèmes de communication pour la communication,

dans lequel un accès du système de communication (102) à la bande de fréquences (158) a lieu sur base de périodes de temps successives,

dans lequel le point d'extrémité (106) est conçu pour envoyer un signal d'activation (122) dans une période d'activation (162) de l'une des périodes de temps (160), dans lequel le signal d'activation (122) présente une information d'activation (123) qui annonce une transmission de données (164) successive dans une période de transmission de données (162) de la période de temps (160) suivant la période d'activation,

dans lequel le point d'extrémité (106) est conçu pour diviser un paquet de données à transmettre en une pluralité de sous-paquets de données (166) qui sont, chacun, plus courts que le paquet de données, et pour envoyer, au moyen d'un signal de données (122), la pluralité de sous-paquets de données (160) dans la période de transmission de données (164) conformément à une occupation (113) de la bande de fréquences (158) sur base de la fréquence et/ou du saut dans le temps indiquée par un modèle de saut (111),

dans lequel le point d'extrémité (106) est conçu pour n'émettre le signal d'activation dans la période d'activation (162) de la période de temps (160) que si un paquet de données est en attente de transmission pour la période de transmission de données suivante (164) de la même période de temps (160),

**caractérisé par le fait qu'**une apparition de la période de temps (160) ainsi que l'apparition de la période d'activation (162) et de la période de transmission de données (164) dans la période de temps (160) sont connues du point d'extrémité (106) ou sont signalées par une station de base (104) du système de communication (102) au moyen d'un signal de commande (120).

**2.** Point d'extrémité (106) selon l'une des revendications précédentes,
dans lequel l'information d'activation (123) présente une information sur le modèle de saut (111) utilisé dans la période de transmission de données (164).

**3.** Point d'extrémité (106) selon la revendication 2,
dans lequel l'information d'activation (123) indique, parmi un ensemble de modèles de saut qui peuvent être utilisés pour la communication entre les abonnés du système de communication (102), le modèle de saut (111) utilisé dans la période de transmission de données (164).

**4.** Point d'extrémité (106) selon l'une des revendications précédentes,
dans lequel le signal d'activation (122) reproduit ou code au moins une partie de l'information d'activation (123) dans une occupation (119) de la période d'activation (162) par le signal d'activation.

**5.** Point d'extrémité (106) selon l'une des revendications précédentes,
dans lequel le point d'extrémité (106) est conçu pour transmettre le signal d'activation (122) réparti dans le temps et/ou en fréquence selon un modèle de saut (117) dans la période d'activation (162) de la période de temps (160).

**6.** Point d'extrémité (106) selon la revendication précédente,
dans lequel le signal d'activation (122) reproduit ou code au moins une partie de l'information d'activation dans le modèle de saut avec lequel est transmis le signal d'activation.

**7.** Point d'extrémité (106) selon l'une des revendications précédentes,
dans lequel le signal d'activation (122) reproduit ou code au moins une partie de l'information d'activation dans un décalage de fréquence dédié ou défini auquel est soumis le signal d'activation (122).

**8.** Point d'extrémité (106) selon l'une des revendications précédentes,
dans lequel le signal d'activation (122) reproduit ou code au moins une partie de l'information d'activation (123) dans un décalage de temps dédié ou défini auquel est soumis le signal d'activation

**9.** Point d'extrémité (106) selon l'une des revendications précédentes,
dans lequel le signal d'activation (122) présente une séquence de symboles de référence dédiée qui reproduit ou code au moins une partie de l'information d'activation.

**10.** Point d'extrémité (106) selon l'une des revendications précédentes,
dans lequel le point d'extrémité (106) est conçu pour envoyer le signal d'activation (122) en fonction des conditions requises du paquet de données à transmettre à une période de latence dans une période d'activation parmi un ensemble de périodes d'activation (162_1, 162_2) de différentes longueurs et/ou fréquences d'apparition.

**11.** Point d'extrémité (106) selon l'une des revendications précédentes,

dans lequel les périodes d'activation de l'ensemble de périodes d'activation (162_ 1, 162_2) sont imbriquées l'une dans l'autre dans le temps, et/ou
dans lequel les périodes d'activation de l'ensemble de périodes d'activation (162_1, 162_2) viennent au moins partiellement en chevauchement dans le temps.

**12.** Point d'extrémité (106) selon l'une des revendications précédentes,
dans lequel le point d'extrémité (106) est conçu pour sélectionner un canal de fréquence parmi les canaux de fréquence de la bande de fréquences (158) à utiliser pour la transmission du signal d'activation (122) en fonction d'une qualité de transmission du canal de fréquence.

**13.** Point d'extrémité (106) selon la revendication précédente,
dans lequel le point d'extrémité (106) est conçu pour estimer la qualité de transmission du canal de fréquence.

**14.** Procédé (200) permettant de faire fonctionner un point d'extrémité d'un système de communication, dans lequel le point d'extrémité communique sans fil dans une bande de fréquences exempte de licence et/ou exempte d'autorisation qui est utilisée par une pluralité de systèmes de communication pour la communication, dans lequel un accès du système de communication à la bande de fréquences a lieu sur base de périodes de temps qui se suivent, dans lequel le procédé présente le fait de:

envoyer (202) un signal d'activation dans une période d'activation de l'une parmi les périodes de temps, où le signal d'activation présente une information d'activation qui annonce une transmission de données successive dans une période de transmission de données de la période de temps suivant la période d'activation,
envoyer (204) un signal de données dans la période de transmission de données de la période de temps, dans lequel le signal de données présente une pluralité de sous-paquets de données qui sont transmis conformément à une occupation de la bande de fréquence spécifiée sur base de la fréquence et/ou d'un saut dans le temps pouvant être utilisé par un modèle de saut, dans lequel un paquet de données est divisé en la pluralité de sous-paquets de données, dans lequel la pluralité de sous-paquets de données sont, chacun, plus courts que le paquet de données,
**caractérisé par le fait qu'**une apparition de la période de temps ainsi que l'apparition de la période d'activation et de la période de transmission de données dans la période de temps sont connues du point d'extrémité ou sont signalées par une station de base du système de communication au moyen d'un signal de commande.

**15.** Programme d'ordinateur comportant des instructions qui amènent le point d'extrémité de la revendication 1 à exécuter les étapes du procédé selon la revendication 14.

Fig. 1

EP 3 845 006 B1

Fig. 2

Fig. 3

Fig. 4

EP 3 845 006 B1

Fig. 5

EP 3 845 006 B1

Fig. 6

Fig. 7

Fig. 8

Fig. 9

100

102_3

102_1

106_12

104_3

106_1

106_2

102_2

106_9

106_10

106_11

106_5

106_6

104_1

106_3

104_2

106_8

106_4

106_7

Fig. 10

Fig. 11

Frequenz-kanal-index (Netzwerk 1): c4, c3, c2, c1, c0

Zeitschlitzindex (Netzwerk 1): t0, t1, t2, t3, t4 …

(110_1) Kanalzugriffsmuster Netzwerk 1

(110_2) Kanalzugriffsmuster Netzwerk 2

112_1, 112_2

Zeit

1 Ressourceelement bestimmt durch Frequenz-kanal und Zeitschlitz

Fig. 12

Fig. 13

Fig. 14

<u>130</u>

132          135_1          135_2

| netzwerkspezifischer Identifikator | periodischer Bakenindex | periodischer Zeitschlitzindex |

～140          ～143_1          ～143_2

ID- - - - →          - - - Z1          ← - - - Z2

| randomisierender Zuordner R=map_rand(ID, Z1, Z2) | ～136 |

～144

R- - - - →

| Frequenz-/Zeitpunkt-Zuordner (f,t=map_ft(R) | ～138 |

～146          ～148

Frequenz-information f          Zeit-information t

Kanalzugriffs-muster

## Fig. 15

Fig. 16

EP 3 845 006 B1

Fig. 17

Fig. 18

Fig. 19

Fig. 20

Fig. 21

EP 3 845 006 B1

EP 3 845 006 B1

110

Kanalzugriffsmuster

| Aktivitätsrate $A_1$ | Aktivitätsrate $A_2$ | Aktivitätsrate $A_3$ |
|---|---|---|

Bereich 1          Bereich 2          Bereich 3          Zeit

Fig. 22

= Ressourceelemente des Grund-Kanalzugriffsmusters

= bei Bedarf zusätzlich aktivierbare Elemente des Kanalzugriffsmusters

Fig. 23

EP 3 845 006 B1

Fig. 24

Fig. 25

Fig. 26

EP 3 845 006 B1

200

Senden eines Aktivierungssignals in einem Aktivierungsbereich eines der Zeitbereiche, wobei das Aktivierungssignal eine Aktivierungsinformation aufweist, die eine nachfolgende Datenübertragung in einem auf den Aktivierungsbereich folgenden Datenübertragungsbereich des Zeitbereichs ankündigt ~202

Senden eines Datensignals in dem Datenübertragungsbereich des Zeitbereichs, wobei das Datensignal eine Mehrzahl von Sub-Datenpaketen aufweist, die entsprechend einer durch ein Sprungmuster angegebenen verwendbaren frequenz- und/oder zeitsprungbasierten Belegung des Frequenzbands übertragen werden, wobei auf die Mehrzahl von Sub-Datenpaketen ein Datenpaket aufgeteilt ist, wobei die Mehrzahl von Sub-Datenpaketen jeweils kürzer sind als das Datenpaket ~204

Fig. 27

210

Aktivieren eines Empfängers der Basisstation für einen Aktivierungsbereich eines der Zeitbereiche, um ein Aktivierungssignal zu empfangen, wobei das Aktivierungssignal eine Aktivierungsinformation aufweist, die eine nachfolgende Datenübertragung in einem auf den Aktivierungsbereich folgenden Datenübertragungsbereich des Zeitfensters ankündigt

~212

Aktivieren oder aktiviert Lassen des Empfängers der Basisstation sofern in dem Aktivierungsbereich das Aktivierungssignal mit der Aktivierungsinformation empfangen wurde, um in dem Datenübertragungsbereich ein Datensignal zu empfangen, wobei das Datensignal eine Mehrzahl von Sub-Datenpaketen aufweist, die entsprechend einer durch ein Sprungmuster angegebenen verwendbaren frequenz- und/oder zeitsprungbasierten Belegung des Frequenzbands übertragen werden, wobei auf die Mehrzahl von Sub-Datenpaketen ein Datenpaket aufgeteilt ist, wobei die Mehrzahl von Sub-Datenpaketen jeweils kürzer sind als das Datenpaket

~214

Fig. 28

220

Empfangen eines Steuersignals in einem Steuersignalbereich eines der Zeitbereiche, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt ~222

Ermitteln des Kanalzugriffsmusters basierend auf der Information über das Kanalzugriffsmuster ~224

Senden eines Aktivierungssignals in einem auf den Steuersignalbereich folgenden Aktivierungsbereich des Zeitbereichs, wobei das Aktivierungssignal eine Aktivierungsinformation aufweist, die eine nachfolgende Datenübertragung in einem auf den Aktivierungsbereich folgenden Datenübertragungsbereich des Zeitbereichs ankündigt ~226

Senden eines Datensignals in dem Datenübertragungsbereich, wobei das Datensignal eine Mehrzahl von Sub-Datenpaketen aufweist, die in zumindest einer Teilmenge der durch das Kanalzugriffsmuster angegebenen verwendbaren frequenz- und/oder zeitsprungbasierten Belegung des Frequenzbands übertragen werden, wobei auf die Mehrzahl von Sub-Datenpaketen ein Datenpaket (z.B. der Bitübertragungsschicht im OSI-Modell) aufgeteilt ist, wobei die Mehrzahl von Sub-Datenpaketen jeweils kürzer sind als das Datenpaket ~228

Fig. 29

230

| Senden eines Steuersignals in einem Steuersignalbereich eines der Zeitbereiche, wobei das Steuersignal eine Information über ein Kanalzugriffsmuster aufweist, wobei das Kanalzugriffsmuster eine für die Kommunikation des Kommunikationssystems verwendbare frequenz- und/oder zeitsprungbasierte Belegung des Frequenzbands angibt | ～232 |

↓

| Aktivieren des Empfängers für einen auf den Steuersignalbereich folgenden Aktivierungsbereich des Zeitbereichs, um ein Aktivierungssignal zu empfangen, wobei das Aktivierungssignal eine Aktivierungsinformation aufweist, die eine nachfolgende Datenübertragung in einem auf den Aktivierungsbereich folgenden Datenübertragungsbereich des Zeitbereichsfensters ankündigt | ～234 |

↓

| Aktivieren oder aktiviert Lassen des Empfängers für den Datenübertragungsbereich sofern in dem Aktivierungsbereich das Aktivierungssignal mit der Aktivierungsinformation empfangen wurde, und Empfangen eines Datensignals in dem Datenübertragungsbereich, wobei das Datensignal eine Mehrzahl von Sub-Datenpaketen aufweist, die in zumindest einer Teilmenge der durch das Kanalzugriffsmuster angegebenen verwendbaren frequenz- und/oder zeitsprungbasierten Belegung des Frequenzbands übertragen werden, wobei auf die Mehrzahl von Sub-Datenpaketen ein Datenpaket aufgeteilt ist, wobei die Mehrzahl von Sub-Datenpaketen jeweils kürzer sind als das Datenpaket | ～236 |

## Fig. 30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018041957 A1
- DE 102011082098
- DE 102011082098 B4
- DE 102017206236

**In der Beschreibung aufgeführte Nicht-Patentliteratur**

- Short Range Devices; Low Throughput Networks (LTN); Protocols for radio interface A. *ETSI TS 103 357 V1.1.1,* Juni 2018
- **G. KILIAN ; H. PETKOV ; R. PSIUK ; H. LIESKE ; F. BEER ; J. ROBERT ; A. HEUBERGER.** Improved coverage for low-power telemetry systems using telegram splitting. *Proceedings of 2013 European Conference on Smart Objects, Systems and Technologies (SmartSysTech),* 2013
- **G. KILIAN ; M. BREILING ; H. H. PETKOV ; H. LIESKE ; F. BEER ; J. ROBERT ; A. HEUBERGER.** Increasing Transmission Reliability for Telemetry Systems Using Telegram Splitting. *IEEE Transactions on Communications,* Marz 2015, vol. 63 (3), 949-961